# EUROPEAN PATENT APPLICATION

(11) **EP 4 444 027 A1**
(43) Date of publication of application: **09.10.2024**
(21) Application number: 23737367.5
(22) Date of filing: 04.01.2023
(51) Int. Cl.: H04W 76/27, H04W 76/15, H04W 72/23, H04L 5/00

(54) **METHOD AND APPARATUS FOR CONFIGURING OR TRANSMITTING RRC MESSAGE SUPPORTING ACTIVATION OR INACTIVATION OF CELL GROUP IN NEXT-GENERATION MOBILE COMMUNICATION SYSTEM**

(30) Priority: 04.01.2022 KR 20220000800
(71) Applicant: Samsung Electronics Co., Ltd., Suwon-si, Gyeonggi-do 16677 (KR)
(72) Inventor: KIM, Donggun, Suwon-si, Gyeonggi-do 16677 (KR); JIN, Seungri, Suwon-si, Gyeonggi-do 16677 (KR)
(74) Representative: Gulde & Partner
(86) International application number: PCT/KR2023/000141
(87) International publication number: WO 2023/132619

(57) **Abstract**

The present disclosure provides a method performed by user equipment in a wireless communication system. The method may comprise the steps of: receiving information for measurement configuration; identifying that user equipment has been configured with (NG) EN-DC or NR-DC; identifying that an SRB3 has been configured; identifying whether or not an SCG has been inactivated; and if the SRB3 has been configured and the SCG has not been inactivated, transmitting a measurement report message via the SRB3.

## Description

### [Technical Field]

The disclosure relates to a method and apparatus capable of quickly activating a cell in a next-generation mobile communication system.

### [Background Art]

5^{th} generation (5G) mobile communication technologies define broad frequency bands such that high transmission rates and new services are possible, and can be implemented not only in "Sub 6 GHz" bands such as 3.5 GHz, but also in "Above 6 GHz" bands referred to as mmWave including 28 GHz and 39 GHz. In addition, it has been considered to implement 6^{th} generation (6G) mobile communication technologies (referred to as Beyond 5G systems) in terahertz bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multi-input multi-output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures. i.e., 2-step random access channel (RACH) for NR. There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultrahigh-performance communication and computing resources.

### [Disclosure]

### [Technical Problem]

In a next-generation mobile communication system, carrier aggregation (CA) technology or dual connectivity (DC) technology may be used to provide a service having a high data transmission rate and low transmission latency to a UE. However, a method is needed to prevent processing latency that may occur when the carrier aggregation or dual connectivity technology is configured in a UE having a connection with a network and is activated or when the carrier aggregation or dual connectivity technology is deactivated after being used. Particularly, if the UE maintains a plurality of cells in an activated state in order to use the carrier aggregation or dual connectivity technology, the UE is required to monitor a physical downlink control channel (PDCCH) for each cell, so that battery consumption of the UE may increase. On the other hand, if the plurality of cells remain in an deactivated state in order to reduce battery consumption of the UE, data transmission/reception latency may occur due to latency generated when the plurality of cells are activated through the use of the carrier aggregation or dual connectivity technology.

The disclosure provides a method for configuring a new dormant mode or suspension mode or a deactivation mode in a wireless communication system.

In addition, the disclosure provides a method for operating a new hibernation or dormancy or suspension mode in units of a bandwidth part (bandwidth part-level), a cell, or a cell group (e.g., for a secondary cell group).

In addition, the disclosure provides a method for configuring transmission resources for channel measurement in a UE and allowing the UE to report the channel measurement results to a base station.

In addition, the disclosure provides a method for a UE configured with carrier aggregation technology or dual access technology to report a measurement report message and/or UE assistance information to the base station.

### [Technical Solution]

According to an embodiment of the disclosure, a method performed by a terminal in a wireless communication system may include receiving information for measurement configuration; identifying that the terminal is configured with evolved universal terrestrial radio access (E-UTRA) new radio (NR) dual connectivity ((NG)EN-DC) or NR-NR dual connectivity (NR-DC); identifying that a signaling radio bearer 3 (SRB3) is configured; identifying whether a secondary cell group (SCG) is deactivated; and in case that the SRB3 is configured and the SCG is not deactivated, transmitting a measurement report message through the SRB3.

According to an embodiment of the disclosure, a method performed by a base station in a wireless communication system may include transmitting, to a terminal, information for configuring the terminal with evolved universal terrestrial radio access (E-UTRA) new radio (NR) dual connectivity ((NG)EN-DC) or NR-NR dual connectivity (NR-DC); transmitting information for measurement configuration to the terminal; and receiving a measurement report message from the terminal based on the information for the measurement configuration, wherein in case that signaling radio bearer 3 (SRB3) is configured and a secondary cell group (SCG) is not deactivated, the measurement report message may be received through the SRB3.

According to an embodiment of the disclosure, a terminal in a wireless communication system may include a transceiver and a controller functionally connected with the transceiver, and the controller may be configured to receive information for measurement configuration through the transceiver, to identify that the terminal is configured with evolved universal terrestrial radio access (E-UTRA) new radio (NR) dual connectivity ((NG)EN-DC) or NR-NR dual connectivity (NR-DC), to identify that a signaling radio bearer 3 (SRB3) is configured, to identify whether a secondary cell group (SCG) is deactivated, and to, in case that the SRB3 is configured and the SCG is not deactivated, transmit a measurement report message through the SRB3.

According to an embodiment of the disclosure, a base station in a wireless communication system may include a transceiver and a controller functionally connected with the transceiver, and the controller may be configured to transmit, to a terminal, information for configuring the terminal with evolved universal terrestrial radio access (E-UTRA) new radio (NR) dual connectivity ((NG)EN-DC) or NR-NR dual connectivity (NR-DC), to transmit information for measurement configuration to the terminal, and to receive a measurement report message from the terminal based on the information for the measurement configuration, wherein in case that signaling radio bearer 3 (SRB3) is configured and a secondary cell group (SCG) is not deactivated, the measurement report message may be received through the SRB3.

### [Advantageous Effects]

According to an embodiment of the disclosure, it is possible to configure a new dormant mode or suspension mode to allow a UE in a radio resource control (RRC)-connected mode having a connection with a network to rapidly activate and deactivate the carrier aggregation technology or dual access technology in a next-generation mobile communication system.

In addition, according to an embodiment of the disclosure, it is possible to rapidly activate the carrier aggregation technology or dual access technology and reduce battery consumption of a UE by operating a new hibernation or dormancy or suspension mode in units of a bandwidth part (bandwidth part-level), a cell, or a cell group (e.g., for a secondary cell group).

In addition, according to an embodiment of the disclosure, when instructing the UE to activate a cell (PCell, PSCell, or SCell), the base station can temporarily configure, allocate, or transmit a large number of transmission resources through which the UE can perform channel measurement. Also, the UE can quickly activate a cell or cell group based on the channel measurement or by quickly reporting the channel measurement result to the base station.

Additionally, according to an embodiment of the disclosure, the UE configured with the carrier aggregation technology or dual access technology can report a measurement report message and/or UE assistance information to the base station.

Effects obtainable in the disclosure are not limited to the above-mentioned effects, and other effects not mentioned will be clearly understood by those of ordinary skill in the art to which the disclosure belongs from the description below.

### [Description of Drawings]

The accompanying drawings, which are included as part of the detailed description to help understanding of the disclosure, provide embodiments of the disclosure and explain technical features of the disclosure together with the detailed description.
FIG. 1 is a diagram illustrating the structure of an LTE system according to an embodiment of the disclosure.
FIG. 2 is a diagram illustrating a radio protocol structure in an LTE system according to an embodiment of the disclosure.
FIG. 3 is a diagram illustrating the structure of a next-generation mobile communication system according to an embodiment of the disclosure.
FIG. 4 is a diagram illustrating a radio protocol structure of a next-generation mobile communication system according to an embodiment of the disclosure.
FIG. 5 is a diagram illustrating a procedure for providing a service to a UE by efficiently using a very wide frequency bandwidth in a next-generation wireless communication system according to an embodiment of the disclosure.
FIG. 6 is a diagram illustrating a procedure in which a UE transitions from an RRC idle mode to an RRC connected mode in a next-generation wireless communication system, and a procedure in which bearer configuration information or cell group or cell configuration information or channel estimation configuration information for connection is configured for the UE, according to an embodiment of the disclosure.
FIG. 7 is a diagram illustrating a state transition for each bandwidth part or a bandwidth part switching procedure according to an embodiment of the disclosure.
FIG. 8 is a diagram illustrating a method of configuring or operating DRX for reduction of battery power consumption of a UE according to an embodiment of the disclosure.
FIG. 9 is a diagram illustrating a concept of a method of operating a dormant bandwidth part on an activated SCell or PSCell according to an embodiment of the disclosure.
FIG. 10 is a diagram illustrating an expanded application of the embodiments proposed in the disclosure to an RRC inactive mode UE.
FIG. 11A is a diagram illustrating a signaling procedure for configuring or releasing dual connectivity, or activating or resuming or suspending or deactivating a secondary cell group configured with dual connectivity, in a next-generation wireless communication system according to an embodiment of the disclosure.
FIG. 11B is a diagram illustrating a problem that may occur in a UE in the case where a first or second RRC message contains configuration information to deactivate a cell group (or secondary cell group) of the UE, contains configuration information of an SDAP layer device for configuring QoS flow remapping, and is transmitted to the UE.
FIG. 12 is a diagram illustrating a second signaling procedure for configuring or releasing dual connectivity, or configuring or releasing or activating or resuming or suspending or deactivating an SCG configured with dual connectivity, according to an embodiment of the disclosure.
FIG. 13 is a diagram illustrating a third signaling procedure for configuring or releasing dual connectivity, or activating or resuming or suspending or deactivating an SCG configured with dual connectivity according to an embodiment of the disclosure.
FIG. 14 is a diagram illustrating an operation of a UE according to an embodiment of the disclosure.
FIG. 15 illustrates a structure of a UE according to an embodiment of the disclosure.
FIG. 16 is a block diagram of a bae station in a wireless communication system according to an embodiment of the disclosure.

### [Mode for Disclosure]

Hereinafter, the operation principle of the disclosure will be described in detail in conjunction with the accompanying drawings. In the following description of the disclosure, a detailed description of known functions or configurations incorporated herein will be omitted when it may make the subject matter of the disclosure unnecessarily unclear. The terms which will be described below are terms defined in consideration of the functions in the disclosure, and may be different according to users, intentions of the users, or customs. Therefore, the definitions of the terms should be made based on the content throughout the specification.

Hereinafter, embodiments of the disclosure will be described with reference to the attached drawings.

In the following description, terms for identifying access nodes, terms With reference to network entities, terms With reference to messages, terms With reference to interfaces between network entities, terms With reference to various identification information, and the like are illustratively used for the sake of convenience. Therefore, the disclosure is not limited by the terms as used below, and other terms With reference to subjects having equivalent technical meanings may be used.

In the following description, the disclosure will be described using terms and names defined in the 3rd generation partnership project long term evolution (3GPP LTE) standards for the convenience of description. However, the disclosure is not limited by these terms and names, and may be applied in the same way to systems that conform other standards. In the disclosure, the term 'evolved node B (eNB)' may be interchangeably used with the term 'next generation node B (gNB)'. That is, a base station described as `eNB' may indicate 'gNB'.

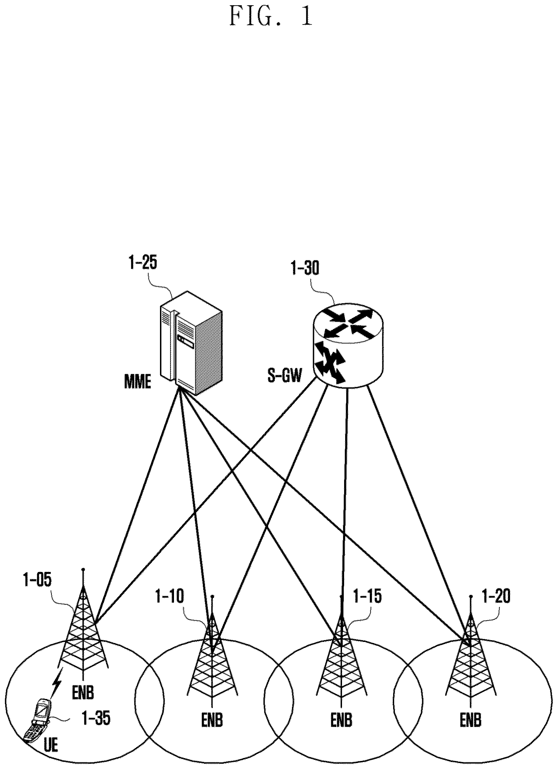

FIG. 1 is a diagram illustrating the structure of an LTE system according to an embodiment of the disclosure.

With reference to FIG. 1, a radio access network of the LTE system may include next-generation evolved node Bs (hereinafter, referred to as eNBs, Node Bs, or base stations) 1-05, 1-10, 1-15 and 1-20, a mobility management entity (MME) 1-25, and a serving-gateway (S-GW) 1-30. A user equipment 1-35 (hereinafter, referred to as a UE or a terminal) may access an external network through the eNBs 1-05 to 1-20 and the S-GW 1-30.

In FIG. 1, the eNBs 1-05 to 1-20 may correspond to conventional Node Bs of a universal mobile telecommunications system (UTMS). The eNB is connected to the UE 1-35 through a radio channel, and may perform a more complicated role than the conventional node B. In the LTE system, since all user traffic including a real time service such as a voice over IP (VoIP) through an Internet protocol are serviced through a shared channel, an apparatus for collecting and scheduling status information on buffer statuses of UEs, available transmission power status, and channel statuses is required, and the eNBs 1-05 to 1-20 may serve as this apparatus. In general, one eNB may control a plurality of cells. For example, in order to implement a transmission rate of 100 Mbps, the LTE system may use orthogonal frequency-division multiplexing (OFDM) as a wireless access technology in a bandwidth of 20 MHz. Furthermore, an adaptive modulation and coding (AMC) scheme of determining a modulation scheme and a channel-coding rate may be applied depending on the channel status of the UE. The S-GW 1-30 is a device for providing a data bearer, and may generate or remove the data bearer under a control of the MME 1-25. The MME is a device for performing not only a function of managing the mobility of the UE but also various control functions, and may be connected to a plurality of eNBs 1-05 to 1-20.

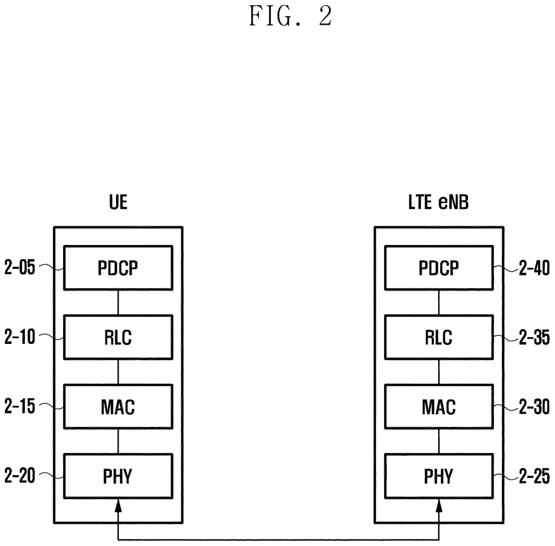

FIG. 2 is a diagram illustrating a radio protocol structure in an LTE system according to an embodiment of the disclosure.

With reference to FIG. 2, the UE and the eNB may include Packet data convergence protocols (PDCPs) 2-05 and 2-40, radio link controls (RLCs) 2-10 and 2-35, medium access controls (MACs) 2-15 and 2-30, respectively, in the radio protocol of the LTE system.

The packet data convergence protocols (PDCPs) 2-05 and 2-40 may perform an operation of compressing/reconstructing an IP header. The main functions of the PDCP are described below.
- Header compression and decompression function (Header compression and decompression: ROHC only)
- User data transmission function (transfer of user data)
- Sequential delivery function (in-sequence delivery of upper-layer PDUs at PDCP reestablishment procedure for RLC AM)
- Sequence re-arrangement function (For split bearers in DC (only support for RLC AM): PDCP PDU routing for transmission and PDCP PDU reordering for reception)
- Duplicate detection function (duplicate detection of lower-layer SDUs at PDCP reestablishment procedure for RLC AM)
- Retransmission function (retransmission of PDCP SDUs at handover and, for split bearers in DC, of PDCP PDUs at PDCP data recovery procedure, for RLC AM)
- Ciphering and deciphering function (Ciphering and deciphering)
- Timer-based SDU removal function (timer-based SDU discard in uplink)

Radio Link Control (RLC) 2-10 or 2-35 reconfigures the PDCP Packet Data Unit (PDU) to be the proper size and performs an ARQ operation. The main functions of the RLC are summarized below.
- Data transmission function (transfer of upper-layer PDUs)
- ARQ function (Error Correction through ARQ (only for AM data transfer))
- Concatenation, segmentation, and reassembly function (Concatenation, segmentation and reassembly of RLC SDUs (only for UM and AM data transfer))
- Re-segmentation function (re-segmentation of RLC data PDUs (only for AM data transfer))
- Reordering function (reordering of RLC data PDUs (only for UM and AM data transfer))
- Duplication detection function (duplicate detection (only for UM and AM data transfer))
- Error detection function (protocol error detection (only for AM data transfer))
- RLC SDU deletion function (RLC SDU discard (only for UM and AM data transfer))
- RLC reestablishment function (RLC reestablishment)

The MACs 2-15 and 2-30 are connected with various RLC layer devices configured in one UE, and perform an operation for multiplexing RLC PDUs to the MAC PDU and de-multiplexing the RLC PDUs from the MAC PDU. The main functions of the MAC are summarized below.
- Mapping function (Mapping between logical channels and transport channels)
- Multiplexing and demultiplexing function (Multiplexing/demultiplexing of MAC SDUs belonging to one or multiple different logical channels into/from transport blocks (TB) delivered to/from the physical layer on transport channels)
- Scheduling information report function (scheduling information reporting)
- HARQ (hybrid automatic repeat request) function (error correction through HARQ)
- Logical channel priority control function (priority handling between logical channels of one UE)
- UE priority control function (priority handling between UEs by means of dynamic scheduling)
- MBMS service identification function (MBMS service identification)
- Transport format selection function (transport format selection)
- Padding function (padding)

The PHY layers 2-20 and 2-25 may perform an operation for channel-coding and modulating higher-layer data to generate an OFDM symbol and transmitting the OFDM symbol through a radio channel or demodulating and channel-decoding the OFDM symbol received through the radio channel and transmitting the demodulated and channel-decoded OFDM symbol to the higher layer.

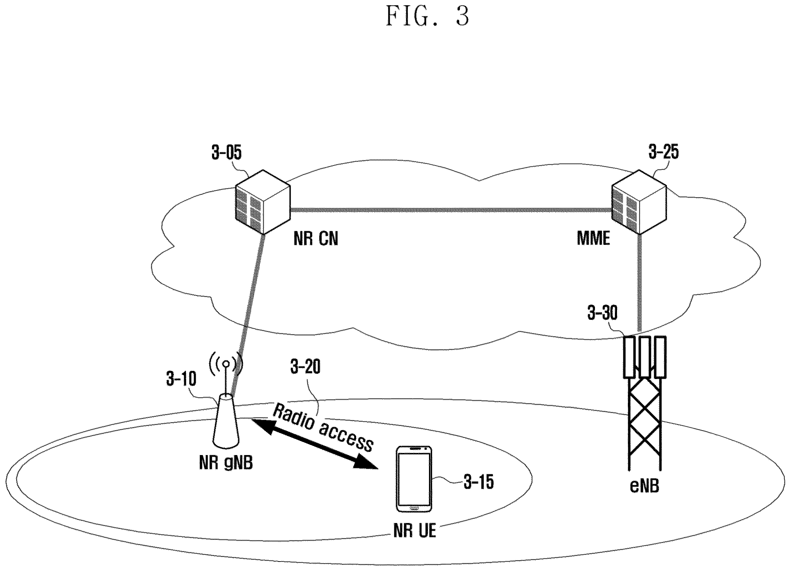

FIG. 3 is a diagram illustrating the structure of a next-generation mobile communication system according to an embodiment of the disclosure.

With reference to FIG. 3, a radio access network of the next-generation mobile communication system (hereinafter, referred to as NR or 5G) may include a next-generation base station 3-10 (new radio node B, hereinafter, referred to as an NR NB, a gNB, or an NR gNB) and a new radio core network (NR CN) 3-05. A user terminal 3-15 (hereinafter, referred to as a new radio user equipment (NR UE) or a terminal) may access an external network through the NR gNB 3-10 and the NR CN 3-05.

In FIG. 3, the NR gNB 3-10 may correspond to an evolved Node B (eNB) in a conventional LTE system. The base station may be connected to the NR UE 3-15 through a radio channel and may provide better service than the conventional node B. Since all user traffic is served through a shared channel in the next-generation mobile communication system, a device for collecting and scheduling status information of buffer statuses, available transmission power statuses, and channel statuses of UEs is required, and corresponds to the NR NB 3-10. One NR gNB may generally control a plurality of cells. The base station may have a bandwidth wider than the conventional maximum bandwidth in order to implement super-high-speed data transmission compared to conventional LTE, may apply orthogonal frequency-division multiplexing (OFDM) through radio-access technology, and may further apply beamforming technology. Further, an adaptive modulation and coding (AMC) scheme of determining a modulation scheme and a channel-coding ratemay be applied depending on the channel status of the NR UE. The NR CN 3-05 may perform a function of supporting mobility, configuring a bearer, and configuring QoS. The NR CN is a device for performing a function of managing the mobility of the NR UE and various control functions, and may be connected to a plurality of base stations. Further, the next-generation mobile communication system may be linked to the conventional LTE system, and the NR CN may be connected to an MME 3-25 through a network interface. The MME may be connected to an eNB 3-30, which is a conventional base station.

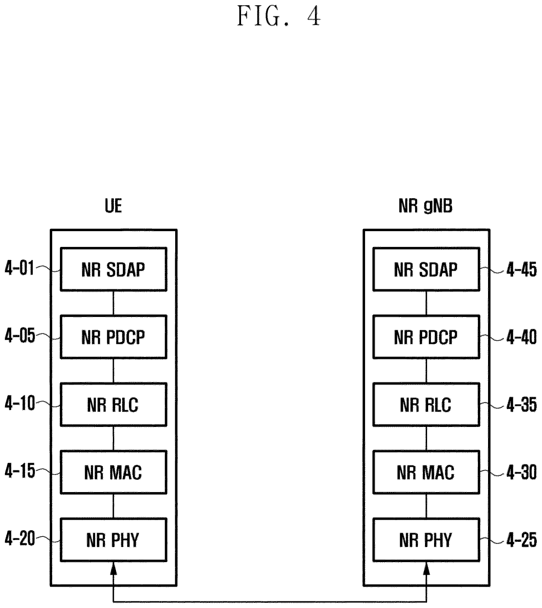

FIG. 4 is a diagram illustrating a radio protocol structure of a next-generation mobile communication system according to an embodiment of the disclosure.

With reference to FIG. 4, the UE and the MR base station may include NR SDAPs 4-01 and 4-45, NR PDCPs 4-05 and 4-40, NR RLCs 4-10 and 4-35, and NR MACs 4-15 and 4-30 in the radio protocol of the next-generation mobile communication system.

The main functions of the NR SDAPs 4-01 and 4-45 may include some of the following functions.
- User data transmission function (transfer of user-plane data)
- Function of mapping QoS flow and a data bearer for uplink and downlink (mapping between a QoS flow and a DRB for both DL and UL)
- Function of marking a QoS flow ID for uplink and downlink (marking QoS flow ID in both DL and UL packets)
- Function of mapping reflective QoS flow to a data bearer for uplink SDAP PDUs (reflective QoS flow to DRB mapping for the UL SDAP PDUs)

With respect to the SDAP layer device, the UE may receive a configuration as to whether to use a header of the SDAP layer device or a function of the SDAP layer device for each PDCP layer device, each bearer, or each logical channel through an RRC message. If the SDAP header is configured, a 1-bit indicator of NAS reflective QoS of the SDAP header and a 1 bit-indicator of AS reflective QoS may indicate that the UE updates or reconfigures information on mapping of QoS flow and a data bearer in uplink and downlink. The SDAP header may include QoS flow ID information indicating the QoS. The QoS information may be used as data-processing-priority or scheduling information to support a seamless service.

The main functions of the NR PDCPs 4-05 and 4-40 may include some of the following functions.
- Header compression and decompression function (Header compression and decompression: ROHC only)
- User data transmission function (transfer of user data)
- Sequential delivery function (in-sequence delivery of upper-layer PDUs)
- Non-sequential delivery function (out-of-sequence delivery of upper-layer PDUs)
- Reordering function (PDCP PDU reordering for reception)
- Duplicate detection function (duplicate detection of lower-layer SDUs)
- Retransmission function (retransmission of PDCP SDUs)
- Ciphering and deciphering function (Ciphering and deciphering)
- Integrity protection and verification function (Integrity protection and verification)
- Timer-based SDU removal function (timer-based SDU discard in uplink)

The reordering function of the NR PDCP device is a function of sequentially reordering PDCP PDUs received by a lower layer on the basis of a PDCP Sequence Number (SN), and may include a function of sequentially transferring the reordered data to a higher layer, a function of directly transmitting the reordered data without regard to the order, a function of recording PDCP PDUs lost due to the reordering, a function of reporting statuses of the lost PDCP PDUs to a transmitting side, and a function of making a request for retransmitting the lost PDCP PDUs.

The main functions of the NR RLCs 4-10 and 4-35 may include some of the following functions.
- Data transmission function (transfer of upper-layer PDUs)
- Sequential delivery function (in-sequence delivery of upper-layer PDUs)
- Non-sequential delivery function (out-of-sequence delivery of upper-layer PDUs)
- ARQ function (error correction through ARQ)
- Concatenation, segmentation, and reassembly function (concatenation, segmentation and reassembly of RLC SDUs)
- Re-segmentation function (re-segmentation of RLC data PDUs)
- Reordering function (reordering of RLC data PDUs)
- Duplicate detection function (duplicate detection)
- Error detection function (protocol error detection)
- RLC SDU deletion function (RLC SDU discard)
- RLC reestablishment function (RLC reestablishment)

The sequential delivery function (In-sequence delivery) of the NR RLC device is a function of sequentially transferring RLC PDUs received from a lower layer to a higher layer, and may include, when one original RLC SDU is divided into a plurality of RLC SDUs and then received, a function of reassembling and transmitting the RLC SDUs, a function of reordering the received RLC PDUs on the basis of an RLC Sequence Number (SN) or a PDCP SN, a function of recording RLC PDUs lost due to the reordering, a function of reporting statuses of the lost RLC PDUs to a transmitting side, a function of making a request for retransmitting the lost RLC PDUs, if there is a lost RLC SDU, a function of sequentially transferring only RLC SDUs preceding the lost RLC SDU to the higher layer if a predetermined timer expires when there is a lost RLC SDU, a function of sequentially transferring all RLC SDUs received before the timer starts to the higher layer, or if a predetermined timer expires when there is a lost RLC SDU, and a function of sequentially transferring all RLC SDUs received up to that point in time to the higher layer. Further, the NR RLC device may process the RLC PDUs sequentially in the order of reception thereof (according to an arrival order regardless of a serial number or a sequence number) and may transfer the RLC PDUs to the PDCP device regardless of the sequence thereof (out-of-sequence delivery). In the case of segments, the NR RLC device may receive segments that are stored in the buffer or are to be received in the future, reconfigure the segments to be one RLC PDU, process the RLC PDU, and then transmit the same to the PDCP device. The NR RLC layer may not include a concatenation function, and the function may be performed by the NR MAC layer, or may be replaced with a multiplexing function of the NR MAC layer.

The non-sequential delivery function (Out-of-sequence delivery) of the NR RLC device is a function of transferring RLC SDUs received from a lower layer directly to a higher layer regardless of the sequence of the RLC SDUs, and may include, when one original RLC SDU is divided into a plurality of RLC SDUs and then received, a function of reassembling and transmitting the RLC PDUs and a function of storing RLC SNs or PDCP SNs of the received RLC PDUs, reordering the RLC PDUs, and recording lost RLC PDUs.

The NR MACs 4-15 and 4-30 may be connected to a plurality of NR RLC layer devices configured in one UE and main functions of the NR MAC may include some of the following functions.
- Mapping function (Mapping between logical channels and transport channels)
- Multiplexing and demultiplexing function (multiplexing/demultiplexing of MAC SDUs)
- Scheduling information report function (scheduling information reporting)
- HARQ function (error correction through HARQ)
- Logical channel priority control function (priority handling between logical channels of one UE)
- UE priority control function (priority handling between UEs by means of dynamic scheduling)
- MBMS service identification function (MBMS service identification)
- Transport format selection function (transport format selection)
- Padding function (padding)

The NR PHY layers 4-20 and 4-25 perform an operation for channel-coding and modulating higher layer data to generate an OFDM symbol and transmitting the OFDM symbol through a radio channel or demodulating and channel-decoding the OFDM symbol received through the radio channel and transmitting the demodulated and channel-decoded OFDM symbol to the higher layer.

Since a frequency of a notably high band can be used in the next-generation mobile communication system, a frequency bandwidth may also be very wide. However, in UE implementation, completely supporting the very wide bandwidth requires high implementation complexity, which incurs high costs. Accordingly, the next-generation mobile communication system may introduce the concept of a bandwidth part (BWP), and thus a plurality of BWPs may be configured in one cell (Spcell or Scell) and the UE and the base station may transmit and receive data in one or a plurality of BWPs according to a configuration of the base station.

The disclosure proposes a state transition method or bandwidth part switching method or a detailed operation considering a state of a Scell and a plurality of bandwidth parts configured in the Scell when a dormant bandwidth part proposed in the disclosure is introduced. Further, the disclosure manages a dormant mode in units of bandwidth parts (BWP-levels) and proposes a state transition method or a bandwidth part switching method, and also proposes a detailed operation in a bandwidth part according to a state of each Scell or a state or a mode (active, inactive, or dormant) of each bandwidth part. In addition, the disclosure proposes a method by which a BS configures, by an RRC message or a MAC CE, first channel measurement configuration information for a cell (Scell) or a BWP, and indicates, by an RRC message or a MAC CE, a UE to apply and use (activate) the first channel measurement configuration information, so that the UE may rapidly activate the cell or the BWP. Accordingly, the disclosure proposes a method by which the UE may rapidly measure a channel signal (e.g., a reference signal) for the cell or the BWP, and may rapidly report a measurement result to the BS, so that the UE may rapidly activate the cell or the BWP.

To activate a cell or a BWP may mean a procedure in which the UE monitors a PDCCH on the cell or the BWP, a procedure in which the BS transmits the PDCCH to the UE, or a procedure in which the BS transmits DL data (e.g., via a physical downlink shared channel (PDSCH)) to the UE. Also, to activate a cell or a BWP may mean a procedure in which the UE transmits UL data (e.g., via a physical uplink shared channel (PUSCH)), a procedure in which the UE transmits, on a PUCCH, a measurement result, or HARQ ACK or NACK, or a procedure in which the UE transmits a Sounding Reference Signal (SRS). To activate a cell or a BWP may mean a procedure in which the UE measures a channel measurement signal (Synchronization Signal Block (SSB) or Channel State Information Reference Signal (CSI-RS) or Reference Signal (RS)) transmitted by the BS, or a procedure in which the UE measures a channel measurement signal transmitted by the BS and reports a measurement result thereof.

The first channel measurement configuration information may include configuration information by the BS about a channel measurement signal for a specific UE (or UEs) on a cell or a BWP. For example, channel measurement configuration information may include a period of a channel measurement signal, a count of a signal being transmitted, a time period in which a signal is transmitted, offset about a time in which a signal is transmitted or a time length between signals being transmitted. Alternatively, the channel measurement configuration information may include a list of a plurality of transmittable channel measurement signals, a time transport resource (or frequency transport resource) indicating a position of a signal being transmitted, a transport resource (a time transport resource or frequency transport resource) on which a measurement result is to be reported, a period in which a measurement result is to be reported, or the like.

In addition, the first channel measurement configuration information configured by an RRC message may include a plurality of pieces of channel measurement signal information. The BS indicates channel measurement signal information among the plurality of pieces of channel measurement signal information configured by the RRC message, a MAC CE, or downlink control information (DCI), or beam configuration information, so that the UE may perform channel measurement or channel measurement reporting by using the indicated channel measurement signal information or the indicated beam configuration information. Alternatively, the BS configures or indicates channel measurement signal information by an RRC message or a MAC CE, so that the UE may perform channel measurement or channel measurement reporting by applying or using the configured (or indicated) channel measurement signal information.

In addition, the first channel measurement configuration information may be differently configured for each cell or each BWP with respect to a plurality of cells or a plurality of BWPs configured by an RRC message, and beam-associated configuration information (Transmission Configuration Indication (TCI) state or Quasi Co-Location (QCL)) such as a beam direction or a beam number or a beam position may be configured together so that the UE can easily measure a transport resource for channel measurement.

Also, with the first channel measurement configuration information, the BS includes a Timing Advance (TA) value (or offset value) for synchronization of a DL signal of the BS or synchronization of a UL signal of the BS, a timer (Time Alignment Timer (TAT)) indicating validity of the TA value, or a TAT value, so that the UE may correctly perform channel measurement or channel measurement reporting.

The first channel measurement configuration information proposed in the disclosure may be configured only for DL BWP configuration information of each cell. That is, the first channel measurement configuration information proposed in the disclosure may not be configured for UL BWP configuration information of each cell. This is because, only after the UE first measures a channel for a DL, the UE may report a measurement result of the channel or a cell and then may correctly receive a PDCCH so as to follow indications related to the BS.

The first channel measurement configuration information proposed in the disclosure may be initially deactivated when configured by an RRC message or after handover, and then may be activated by MAC control information or DCI information of a PDCCH or an RRC message, which is proposed in the disclosure. When configured by the RRC message, an initial state has to be an inactive state so that the BS can easily manage a cell state or a channel measurement performing procedure of the UE and can correctly perform timing as to when and how the UE is to perform channel measurement, without a processing delay problem with respect to the RRC message.

According to the disclosure, a plurality of BWPs may be configured for one cell (e.g., an Spcell, a Pcell, a Pscell or an Scell) with respect to each DL or each UL, and through BWP switching, an active BWP (active DL or UL BWP), a dormant BWP (dormant UL BWP or dormant DL BWP), or an inactive BWP (inactive or deactivated DL/UL BWP) may be configured and operated. That is, a data rate may be increased in a way similar to a carrier aggregation technology by transitioning a DL or UL BWP for the one cell to an activate state. Also, battery power consumption may be reduced by allowing the UE not to perform PDCCH monitoring on the cell by transitioning or switching a DL BWP to a dormant BWP, and fast activation of a cell or a BWP may be supported by allowing the UE to perform channel measurement on a DL BWP and report a result of the channel measurement. Battery power consumption of the UE may be reduced by transitioning a DL (or UL) BWP for the one cell to an inactive state. The BS may configure and indicate a BWP state transition indication or a BWP switching indication for each cell by an RRC message, a MAC control element (MAC CE), or DCI of a PDCCH.

The dormant BWP may also be extended and applied to dual connectivity, for example, to a PSCell of an SCG. Alternatively, the dormant BWP may be extended to the concept of cell group suspension or cell group deactivation, and thus, the BS may indicate cell group suspension or deactivation to one cell group (e.g., an SCG) of the UE for which dual connectivity is configured, such that, with respect to the indicated cell group, the UE may suspend data transmission or reception, may suspend PDCCH monitoring, or may intermittently perform PDCCH monitoring with a very long period, thereby reducing power consumption of the UE. Also, when the UE receives the indication of cell group suspension or deactivation, the UE may perform a channel measurement procedure in the cell group for which cell group suspension or deactivation is indicated, and may report a channel measurement result to a network (e.g., to an MCG or an SCG), thereby supporting fast activation of dual connectivity. With respect to the cell group for which cell group suspension or deactivation is indicated, the UE may perform the channel measurement procedure, or may maintain and store cell group configuration information without discarding or releasing the cell group configuration information. Also, the UE may recover the cell group configuration information according to a cell group activation or resumption indication by a network. For example, the UE may changelessly store or maintain the cell group configuration information (e.g., configuration information of each PDCP, RLC, or MAC layer or bearer configuration information) or configuration information of each cell, which is configured for the UE. However, when the cell group is suspended or deactivated, the UE may suspend bearers or an RLC bearer of bearers, or may suspend transmission (or data transmission, e.g., SCG transmission) in the cell group. If the UE receives a cell group resume or activation indication with respect to the cell group for which cell group suspension or deactivation is indicated, the UE may resume or recover or re-apply the cell group configuration information, and may resume a bearer, an RLC bearer, or transmission for the cell group (e.g., SCG transmission). Alternatively, if the UE receives a cell group resume or activation indication with respect to the cell group for which cell group suspension or deactivation is indicated, the UE may re-start data transmission or reception or may re-start PDCCH monitoring or may perform channel measurement reporting or may periodically re-activate a configured transport resource.

When the cell group is suspended or deactivated, to suspend a bearer (a bearer using an RLC UM mode or a bearer using an RLC AM mode) may mean to suspend a PDCP layer or an RLC layer (or to suspend data transmission or data reception or data processing) and not to transmit (or receive), by an MAC layer, data with respect to the bearer (or data with respect to a logical channel identifier corresponding to the bearer) (or not to select, as a target, a logical channel identifier in a Logical Channel Prioritization (LCP) procedure). Embodiments of the disclosure proposed below may be applied to a procedure for suspending the PDCP layer.

When the cell group is suspended or deactivated, to suspend an RLC bearer (a bearer using an RLC UM mode or a bearer using an RLC AM mode) may mean to suspend an RLC layer (or to suspend data transmission or data reception or data processing) and not to transmit (or receive), by an MAC layer, data with respect to the bearer (or data with respect to a logical channel identifier corresponding to the bearer) (or not to select, as a target, a logical channel identifier in an LCP procedure). That the RLC bearer is suspended may mean that a PDCP layer connected to the RLC layer may continuously perform data processing. For example, the PDCP layer connected to the suspended RLC bearer may process and transmit data or receive data and process data via another RLC bearer (e.g., an RLC bearer that belongs to a cell group (e.g., MCG) different from the cell group (e.g., SCG)).

When the cell group is suspended or deactivated, that transmission for the cell group (e.g., SCG transmission) is suspended may mean that the MAC layer does not transmit (or receive) data with respect to a bearer (or data with to a logical channel identifier corresponding to the bearer) (a bearer using an RLC UM mode or a bearer using an RLC AM mode) belonging to the cell group (or a logical channel identifier is not selected as a target in an LCP procedure). However, that transmission for the cell group (e.g., SCG transmission) is suspended may mean that the PDCP layer or the RLC layer may perform data processing or data pre-processing. For example, upper layer data (or UL data) is not transmitted in the cell group but the PDCP layer or the RLC layer or the MAC layer may be enabled to perform data pre-processing for transmission.

When the cell group is resumed or activated, to resume the bearer (the bearer using an RLC UM mode or the bearer using an RLC AM mode) may mean to resume the PDCP layer or the RLC layer (or to resume data transmission or data reception or data processing) and to transmit (or receive), by the MAC layer, data with respect to the bearer (or data with respect to a logical channel identifier corresponding to the bearer) (or to select, as a target, a logical channel identifier in an LCP procedure).

When the cell group is resumed or activated, to resume the RLC bearer (the bearer using an RLC UM mode or the bearer using an RLC AM mode) may mean to resume the RLC layer (or to resume data transmission or reception or data processing) and to transmit (or receive), by the MAC layer, data with respect to the bearer (or data with respect to a logical channel identifier corresponding to the bearer) (or to select, as a target, a logical channel identifier in an LCP procedure). That the RLC bearer is resumed may mean that data is transferred to the PDCP layer connected to the RLC layer or data is received from the PDCP layer.

When the cell group is resumed or activated, that transmission for the cell group (e.g., SCG transmission) is resumed may mean that the MAC layer transmits (or receives) data with respect to the bearer (the bearer using an RLC UM mode or the bearer using an RLC AM mode) belonging to the cell group (or data with respect to a logical channel identifier corresponding to the bearer) (or a logical channel identifier is selected as a target in an LCP procedure). However, that transmission for the cell group (e.g., SCG transmission) is resumed may mean that the PDCP layer or the RLC layer may perform data processing or data pre-processing. For example, upper layer data (or UL data) may be transmitted in the cell group, and the PDCP layer or the RLC layer or the MAC layer may be enabled to perform data pre-processing for transmission.

In another method, when the cell group is suspended or deactivated, the bearer (or the RLC bearer) using an RLC UM mode may be suspended and thus the PDCP layer or the RLC layer is suspended, such that data transmission/reception may be suspended or data processing may be suspended. Alternatively, as a result thereof, data transmission or reception in the MAC layer may be suspended. However, even if transmission for the cell group may be suspended with respect to the bearer using an RLC AM mode (or the RLC bearer), data processing may be continuously performed in the PDCP layer or the RLC layer, or data transmission or reception in the MAC layer may be suspended. This is because, when a security key is changed, a PDCP re-establishment procedure includes a retransmission (or regeneration) procedure for the RLC AM bearer (therefore, when the security key is not changed, data processing time may be decreased. Also, when the security key is changed, data loss does not occur due to the retransmission (or regeneration) procedure), but the PDCP re-establishment procedure does not include a retransmission (or regeneration) procedure for the RLC UM bearer and thus, when the RLC UM bearer pre-performs a data processing procedure, data loss may occur in the UE (when the security key is not changed, data processing speed may be decreased. However, when the security key is changed, there is no retransmission (or regeneration) procedure and data is discarded in a PDCP layer and RLC layer re-establishment procedure, such that data loss occurs). Therefore, different procedures may be applied to the bearer (or the RLC bearer) using an RLC AM mode or the bearer (or the RLC bearer) using an RLC UM mode. Embodiments of the disclosure proposed below may be applied to the procedure for suspending the PDCP layer.

The first channel measurement configuration information for rapid activation of cell group or cell (SpCell (Pcell or PSCell) or SCell) may be included in cell group configuration information or cell (SpCell (Pcell or PSCell) or SCell) configuration information, pre-configured cell group configuration information or cell (SpCell (Pcell or PSCell) or SCell) configuration information, or a message (e.g., an RRC message or RRCReconfiguration or MAC control information of DCI of PDCCH) indicating activation or resumption of a cell group or cell (SpCell (Pcell or PSCell) or SCell).

In order for the BS to temporarily many or frequently transmit a channel measurement signal to allow a UE to rapidly activate a cell group (or cell) or rapidly perform channel measurement on a cell, first channel measurement configuration information may include, in configuration information of the cell (e.g., PCell or PSCell or SCell) of the cell group, configuration information about a period of a frequent channel measurement signal (e.g., radio resource or Temporary Reference Signal (TRS) or Synchronization Signal Block (SSB) or Channel State Information Reference Signal (CSI-RS) or Reference Signal (RS)) or information about a transport resource being transmitted (a frequency or time transport resource on which the frequent channel measurement signal is transmitted) or a duration or a count (the number of times the frequent channel measurement signal is transmitted) or a timer value (a time in which the frequent channel measurement signal is transmitted) or a time duration (duration (e.g., offset such as a time unit (slot or subframe or symbol, etc.)) in which the frequent channel measurement signal is transmitted), or the like. Also, the first channel measurement configuration information may include configuration information about a transport resource, a period, a duration, a timing, offset, or the like in which the UE has to report a measurement result.

With the first channel measurement configuration information, the BS may configure a short reporting period (or transport resource) for the UE to report a channel measurement result, or may configure a transport resource for channel measurement so that the BS can transmit many or frequent channel measurement signals (or transport resources (e.g., radio resource or TRS) to support rapid channel measurement or many signal measurement by the UE.

The first channel measurement configuration information may include configuration information about a channel measurement signal for a specific UE (or UEs) on a cell or a BWP. For example, the first channel measurement configuration information may include a period of a channel measurement signal, a count of a signal being transmitted, a time period in which a signal is transmitted, offset about a time in which a signal is transmitted, a time length between signals being transmitted, or the like. Alternatively, the first channel measurement configuration information may include a list of a plurality of transmittable channel measurement signals, a time transport resource (or frequency transport resource) indicating a position of a signal being transmitted, a transport resource (a time transport resource or frequency transport resource) on which a measurement result is to be reported, a period in which a measurement result is to be reported, or the like.

The first channel measurement configuration information may be differently configured for each cell or each BWP with respect to a plurality of cells or a plurality of BWPs configured by an RRC message, and beam-associated configuration information (TCI state or QCL) such as a beam direction or a beam number or a beam position may be configured together so that the UE can easily measure a transport resource for channel measurement. In addition, with the first channel measurement configuration information, the BS configures a TA value (or offset value) for synchronization of a DL signal of the BS or synchronization of a UL signal of the BS, a timer (TAT) indicating validity of the TA value, or a TAT value, so that the UE may correctly perform channel measurement or channel measurement reporting.

Also, the first channel measurement configuration information configured by an RRC message may include a plurality of pieces of channel measurement signal information. With the first channel measurement configuration information, the BS indicates channel measurement signal information among the plurality of pieces of channel measurement signal information configured by the RRC message, a MAC CE, or DCI, or beam configuration information, so that the UE may perform channel measurement or channel measurement reporting by using the indicated channel measurement signal information or the indicated beam configuration information. The indication may be performed by defining mapping between each configured channel measurement signal information and each of a bitmap, an index, and an identifier, and then by performing the indication based on the mapping. Alternatively, the BS configures or indicates channel measurement signal information by an RRC message or a MAC CE, so that the UE may perform channel measurement or channel measurement reporting by applying or using the configured (or indicated) channel measurement signal information.

The first channel measurement configuration information may be initially deactivated when configured by an RRC message or after handover, and then may be activated by MAC control information or DCI information of a PDCCH or an RRC message, which is proposed in the disclosure. When configured by the RRC message, an initial state has to be an inactive state so that the BS can easily manage a cell state of the UE or a channel measurement performing procedure of the UE and can correctly perform timing as to when and how the UE is to perform channel measurement, without a processing delay problem with respect to the RRC message.

The first channel measurement configuration information may be configured only for DL BWP configuration information of each cell. That is, the first channel measurement configuration information may not be configured for UL BWP configuration information of each cell. This is because, only after the UE first measures a channel for a DL, the UE may report a measurement result of the channel or a cell and then may correctly receive a PDCCH so as to follow indications from the BS.

In addition, the message (e.g., an RRC message or RRCReconfiguration or MAC control information of DCI of PDCCH) indicating activation or resumption of a cell group or cell (SpCell (Pcell or PSCell) or SCell) may include second channel measurement configuration information for measurement of a signal of a cell (PSCell or PCell or SCell) of a cell group. The second channel measurement configuration information may include general channel measurement configuration information such as a transport resource or period or time duration or count of a channel measurement signal or a transport resource or period or time duration for channel measurement reporting.

The UE may report a measurement result of a channel to the BS by applying the first channel measurement configuration information or the second channel measurement configuration information according to conditions below.
- 1> If the UE receives a message (e.g., PDCCH indicator or MAC control information or RRC message) indicating to activate (or to resume) a cell (PCell or PSCell or SCell) or a cell group (or, previously, the cell group has been in an inactive state).
   ■ 2> If the first channel measurement configuration information is configured for the UE.
      ◆ 3> The UE may identify that the BS is to frequently transmit many channel measurement signals according to the first channel measurement configuration information, and may measure, according to the first channel measurement configuration information, many or frequent channel measurement signals temporarily (e.g., up to time duration (e.g., subframe or slot or symbol) configured for the first channel measurement configuration information or during predefined (or predetermined) time duration based on offset or during a certain period of time (e.g., while a timer is running)) or until a first condition is satisfied. Also, according to a period or a transport resource configured in the first channel measurement configuration information, the UE may report a channel measurement result up to time duration configured in the first channel measurement configuration information (e.g., subframe or slot or symbol), or during predefined (or predetermined) time duration based on offset or during a certain period of time (e.g., while a timer is running) or until a first condition is satisfied. Accordingly, because the UE may rapidly measure a frequent channel measurement signal and may rapidly report a result, the UE may rapidly activate (or resume) the cell (PCell or SCell or PSCell) or cell group or may rapidly receive an indication of scheduling information. If the second channel measurement configuration information is configured for the UE after time duration configured in the first channel measurement configuration information (e.g., subframe or slot or symbol), or after predefined (or predetermined) time duration or after a certain period of time (e.g., when a timer expires) or after a first condition is satisfied, the UE may suspend or release application of the first channel measurement configuration information and may measure a channel measurement signal according to the second channel measurement configuration information. For example, the UE may fall back from the first channel measurement configuration information to the second channel measurement information or may apply the second channel information instead of the first channel measurement configuration information. Also, the UE may report the channel measurement result according to a period or a transport resource configured in the second channel measurement configuration information. If the second channel measurement configuration information is not configured, the UE may not perform channel measurement.
   ■ 2> Otherwise (If the first channel measurement configuration information is not configured for the UE).
      ◆ 3> When the second channel measurement configuration information is configured for the UE, the UE may measure a channel measurement signal according to the second channel measurement configuration information. Also, the UE may report a channel measurement result according to a period or a transport resource configured in the second channel measurement configuration information. If the second channel measurement configuration information is not configured, the UE may not perform channel measurement.

According to the disclosure, the first condition may be one of conditions below. In the disclosure, when a cell is activated or when a cell group is activated or is resumed (or the cell group is activated from an inactivate state) or when a UE which is in an RRC inactive mode resumes connection in an RRC connection resume procedure, efficient conditions under which the BS does not need to transmit unnecessarily many transport resources or frequently transport resources are proposed as the first condition. For example, the UE may apply the first channel measurement configuration information, and may perform a channel measurement procedure or a channel measurement reporting procedure until one of conditions below is satisfied.
- In a case where the UE successfully completes a random access procedure (a 4-step random access procedure or a 2-step random access procedure) in the cell (e.g., PCell or SCell or PSCell) or the cell (e.g., PSCell or SCell) of the cell group or a case where the UE successfully completes a random access procedure and is allocated a first UL transport resource or a case where a UL transport resource is first indicated to the UE, the UE may determine that the first condition is satisfied.

■ For example, in more detail, when the UE performs a contention-free random access (CFRA) procedure (e.g., when a pre-designated preamble or a UE cell identifier (e.g., cell radio network temporary identifier (C-RNTI)) is allocated).
◆ In a case where the UE transmits the pre-designated preamble to the cell and receives a random access response (RAR) message or a case where the UE receives an indication of the PDCCH in response to the RAR, it may be determined that the random access procedure is successfully completed and thus the UE may determine that the first condition is satisfied. Alternatively, when a UL transport resource is first received after RAR reception, the UE may determine that the first condition is satisfied.
■ When the UE performs a contention-based random access (CBRA) procedure (e.g., when a pre-designated preamble or a UE cell identifier (e.g., C-RNTI) is not allocated).
◆ In a case where the UE transmits a preamble (e.g., arbitrary preamble) to the cell, receives an RAR message, transmits a message 3 (e.g., handover completion message) by using an UL transport resource allocated, included, or indicated in the RAR message, and receives a MAC CE indicating that contention has been resolved via a message 4 from the target BS or a case where the UE receives a UL transport resource via the PDCCH corresponding to the C-RNTI of the UE, it may be determined that the random access procedure to a target BS is successfully completed and thus the UE may determine that the first condition is satisfied. Alternatively, in a case where the size of the UL transport resource allocated in the RAR message is sufficient and thus, the message 3 can be transmitted and the UE can additionally transmit UL data, the UE may determine that the UL transport resource is first received and the first condition is satisfied. That is, when the UE receives the RAR, the UE may determine that the UL transport resource is first received and may determine that the first condition is satisfied.

- 1> If a 2-step random access procedure is configured or indicated for the UE and thus, the UE performs the procedure.
- 1> Alternatively, when the 2-step random access procedure is not configured or indicated but the UE supports the 2-step random access procedure in UE capability, the 2-step random access procedure is supported in system information of the cell, and information for the 2-step random access procedure is broadcast in the system information (e.g., 2-step random access resource or threshold value for determining whether to or not to perform 2-step random access), or the UE receives the system information and when the strength of a signal is better or greater than the threshold value broadcast in the system information and thus the UE performs the 2-step random access procedure on the cell.
   ■ 2> When the 2-step random access procedure is successfully completed, the UE may determine that the first condition is satisfied.
   ■ 2> The 2-step random access procedure may be performed by using one of a CBRA method or a CFRA method.
      ◆ 3> If the UE performs the CBRA-based 2-step random access procedure,
         ● 4> the UE may transmit a preamble in a transport resource for 2-step random access (e.g., PRACH occasion, transport resource configured by the RRC message by the BS, or transport resource broadcast in the system information), and may transmit data (e.g., MsgA MAC PDU) in a transport resource for data transmission (e.g., PUSCH occasion). The data may include the MAC control information (C-RNTI MAC CE) including the UE identifier (C-RNTI), or the RRC message (RRCReconfigurationComplete message or handover completion message).
         ● 4> The UE may monitor the PDCCH scrambled by the UE identifier (C-RNTI) or a first identifier (MsgB-RNTI) derived by a time or a frequency at which a preamble is transmitted.
         ● 4> If the UE receives the PDCCH scrambled by the UE identifier or is allocated a DL transport resource via the PDCCH or receives the MAC control information for timing adjustment (timing advance command MAC CE) in the DL transport resource,
            ■ 5> the UE may determine that the 2-step random access procedure is successfully completed and may determine that the first condition is satisfied.
         ● 4> If the UE receives the PDCCH scrambled by the first identifier (MsgB-RNTI) or is allocated a DL transport resource via the PDCCH or receives a fallback RAR to a preamble transmitted by the UE in the DL transport resource (i.e., the fallback RAR indicating to transmit MsgA in another transport resource when the BS receives the preamble but does not receive MsgA),
            ■ 5> the UE may transmit data (MsgA MAC PDU) in a transport resource indicated in the fallback RAR.
            ■ 5> The UE may monitor the PDCCH scrambled by the UE identifier (C-RNTI).
            ■ 5> If the UE receives the PDCCH scrambled by the UE identifier or is allocated a UL transport resource via the PDCCH, the UE may determine that the 2-step random access procedure is successfully completed and may determine that the first condition is satisfied.
      ◆ 3> If the UE performs the CFRA-based 2-step random access procedure,
         ● 4> the UE may transmit a preamble in a transport resource for 2-step random access (e.g., PRACH occasion or transport resource designated via the RRC message by the BS), and may transmit data (e.g., MsgA MAC PDU) in a transport resource for data transmission (e.g., PUSCH occasion). The data may include the MAC control information (C-RNTI MAC CE) including the UE identifier (C-RNTI) or the RRC message (RRCReconfigurationComplete message or handover completion message).
         ● 4> The UE may monitor the PDCCH scrambled by the UE identifier (C-RNTI) or the first identifier (MsgB-RNTI) derived by a time or a frequency at which a preamble is transmitted.
         ● 4> If the UE receives the PDCCH scrambled by the UE identifier or is allocated a DL transport resource via the PDCCH or receives the MAC control information for timing adjustment (timing advance command MAC CE) in the DL transport resource,
            ■ 5> The UE may determine that the 2-step random access procedure is successfully completed and may determine that the first condition is satisfied.
         ● 4> If the UE receives the PDCCH scrambled by the first identifier (MsgB-RNTI) or is allocated a DL transport resource via the PDCCH or receives a fallback RAR to a preamble transmitted by the UE in the DL transport resource (i.e., the fallback RAR indicating to transmit MsgA in another transport resource when the BS receives the preamble but does not receive MsgA),
            ■ 5> the UE may determine that the 2-step random access procedure is successfully completed and may determine that the first condition is satisfied.
            ■ 5> The UE may transmit data (MsgA MAC PDU) in a transport resource indicated in the fallback RAR.
- 1> The UE may determine that the first condition is satisfied when the random access procedure starts or a preamble for the random access procedure is transmitted.
- 1> Alternatively, if the 2-step random access procedure is configured or is indicated for the UE, the UE may determine that the first condition is satisfied. For example, the UE may determine that the first condition is satisfied before the 2-step random access procedure starts.
- 1> Alternatively, if the 2-step random access procedure is configured or is indicated for the UE via the message and a transport resource (PUSCH) configured for data transmission in the 2-step random access procedure is greater than a first threshold value, or when a configuration value for timing adjustment (timing advance value) is included in the RRC message, the UE may determine that the first condition is satisfied. The first threshold value may be configured by the RRC message (e.g., RRCReconfiguration) by the BS, may be broadcast in the system information, or may be configured in a size of data which the UE has to transmit. For example, the UE may determine that the first condition is satisfied before the 2-step random access procedure starts. Alternatively, when the configuration value for timing adjustment (timing advance value) is included or the 2-step random access procedure is configured by the RRC message, the UE may not transmit a preamble and may directly transmit data in a configured transport resource (e.g., transport resource configured by the RRC message or transport resource indicated via the PDCCH of a target BS monitored by the UE). Accordingly, before the 2-step random access procedure starts or when the data is transmitted or before the data is transmitted, the UE may determine that the first condition is satisfied. Alternatively, when the configuration value for timing adjustment (timing advance value) is included or the 2-step random access procedure is configured by the RRC message, the UE may not transmit a preamble, and may directly transmit data in a configured transport resource (PUSCH) (e.g., transport resource configured by the RRC message or transport resource indicated via the PDCCH of the target BS monitored by the UE). When the configured transport resource (PUSCH) (e.g., transport resource configured by the RRC message or transport resource indicated via the PDCCH of the target BS monitored by the UE) is greater than the first threshold value, or when the configuration value for timing adjustment (timing advance value) is included in the RRC message, before the 2-step random access procedure starts or when the data is transmitted or before the data is transmitted, the BS may determine that the first condition is satisfied.
- 1> When UE in the RRC inactive mode transmits an RRCResumeRequest message and receives an RRCResume message (or RRCSetup message) as a response thereto, the UE may determine that the first condition is satisfied.
- 1> When the UE performs channel measurement based on the first channel measurement configuration information configured by the RRC message and a timer indicating a time period for the channel measurement is expired,
- 1> When the UE performs channel measurement based on the first channel measurement configuration information configured by the RRC message and time duration indicating a time period for the channel measurement has elapsed (or expires) or time durations are all used (or applied),
- 1> When the UE performs channel measurement based on the first channel measurement configuration information configured by the RRC message and signals for the channel measurement are all measured (or channel measurement is completed) or a signal is received by a preset number of times.
- 1> When the UE performs channel measurement based on the first channel measurement configuration information configured by the RRC message, and the channel measurement based on the configuration information is completed (the channel measurement is expired) or channel measurement reporting is completed (or channel measurement reporting is expired).

When the first condition is satisfied, an upper layer (e.g., RRC layer) may indicate by using an indicator to a lower layer (e.g., PDCP layer or RLC layer or MAC layer or PHY layer), or a lower layer (e.g., PDCP layer or RLC layer or MAC layer or PHY layer) may indicate to an upper layer (e.g., RRC layer).

The methods of configuring or applying the first channel measurement configuration information according to the disclosure may be extended to, configured for, and used in a case where a cell group (e.g., PSCell)) is activated or resumed or SCell is activated or RRC connection is resumed (e.g., RRCResume message is used) in an RRC deactivation mode or a handover procedure is performed (e.g., RRCReconfiguration message is used).

In the disclosure, the term `BWP' may be used without being distinguished between a UL and the DL, and may refer to each of a UL BWP and a DL BWP according to the context.

In the disclosure, the term 'link' may be used without being distinguished between the UL and the DL, and may refer to each of the UL and the DL according to the context.

In the disclosure, the term 'cell' may indicate a PCell or an SCell (e.g., SCell configured in an MCG), a PSCell (e.g., PCell of an SCG), or an SCell (e.g., SCell configured in the SCG).

In the disclosure, a dormant BWP may be configured or introduced for the SCell or the PSCell of the UE that performs carrier aggregation or dual connectivity, and battery power consumption of the UE may be reduced by not monitoring the PDCCH on the dormant BWP. Also, in the disclosure, when channel measurement is performed and reported on the dormant BWP (e.g., channel state information (CSI) or channel quality information (CQI) measurement or reporting) or beam measurement or beam tracking or beam operation is performed on the dormant BWP and thus data transmission is required, the data transmission may rapidly start on a normal BWP by switching or activating to the normal BWP. The dormant BWP may not be configured or applied to the SpCell (PCell of the MCG or PCell (or PSCell) of the SCG) or the SCell configured with a physical uplink control channel (PUCCH), in which a signal should be continuously monitored or a feedback should be transmitted or received or synchronization should be identified and maintained.

If the UE is indicated to switch or activate to the dormant BWP for the SCell of the MCG via the PCell, the UE may perform a channel measurement procedure on the dormant BWP of the SCell, and may report a measured channel measurement result on a transport resource of the PCell of the MCG (e.g., via a physical uplink control channel (PUCCH) transport resource of the PCell) or a transport resource of the SCell configured with the PUCCH of the MCG (e.g., in a PUCCH transport resource). Which cell or on which transport resource (e.g., PUCCH or physical uplink shared channel (PUSCH)) of which cell a channel measurement result of a BWP of which cell is reported may be configured for the UE via the RRC message for each cell or for each BWP.

If the UE is indicated to switch or activate to the dormant BWP for the SCell of the SCG via the PSCell, the UE may perform a channel measurement procedure on the dormant BWP of the SCell, and may report a measured channel measurement result on a transport resource of the PSCell of the SCG (e.g., on a PUCCH transport resource of the PSCell) or on a transport resource of the SCell configured with the PUCCH of the SCG (e.g., on a PUCCH transport resource). Which cell or on which transport resource (e.g., PUCCH or PUSCH) of which cell a channel measurement result for a BWP of which cell is reported may be configured for the UE via the RRC message for each cell or each BWP.

If the UE is indicated to switch or activate to the dormant BWP for the PSCell or the SCell of the SCG via the PCell or is indicated to suspend a cell group for the SCG (or PSCell) (SCG suspension or cell group suspension), the UE may perform a channel measurement result on a BWP of the PSCell or the SCell (BWP configured by the RRC message or last activated BWP) or the dormant BWP, and may report a measured channel measurement result on a transport resource of the PCell of the MCG (e.g., on a PUCCH transport resource of the PCell), or on a transport resource of the SCell configured with the PUCCH of the MCG (e.g., on a PUCCH transport resource), or on a transport resource of the PSCell of the SCG (e.g., on a PUCCH transport resource of the PSCell). Which cell or on which transport resource (e.g., PUCCH or PUSCH) of which cell a channel measurement result of a BWP of which cell is reported may be configured for the UE via the RRC message for each cell or each BWP.

The disclosure provides a plurality of embodiments of operating based on the DCI of the PDCCH or the MAC CE or the RRC message, in order to operate the dormant BWP or cell group suspension state for the SCell (SCell of the MCG when carrier aggregation is configured or SCell of the SCG when dual connectivity is configured) or the PSCell (PCell of the SCG when dual connectivity is configured) of the UE.

The network or the BS may configure Spcell (Pcell and PScell) and a plurality of Scells in the UE. When the UE communicates with one BS, the Spcell may refer to the Pcell, and when the UE communicates with two BSs (master BS and secondary BS), the Spcell may indicate the Pcell of the master BS or the PScell of the secondary BS. The Pcell or the Pscell may be a main cell used when the UE and the BS communicate with each other in respective MAC layers, and may indicate a cell that performs timing for synchronization, performs random access, transmits an HARQ ACK/NACK feedback on a PUCCH transport resource, and transmits and receives most control signals. Technology by which the BS increases transport resources and increases UL or DL data transport resources by operating a plurality of Scells along with the Spcell is referred to as carrier aggregation or dual connectivity.

In the disclosure, a PCell may indicate an MCG, and a PSCell may indicate an SCG. Also, the MCG may include a PCell and SCells configured for the MCG, and the SCG may include a PSCell and SCells configured for the SCG. Also, a cell may indicate a cell group, or a cell group may indicate a cell.

When the UE is configured with the Spcell and the plurality of Scells via the RRC message, the UE may be configured with a state or mode of each cell (PCell or PSCell or SCell), or each Scell or a BWP of each SCell or cell group via the RRC message or the MAC CE or the DCI of the PDCCH. The state or mode of the cell may be configured as an active (activated) mode or an active (activated) state, and an inactive (deactivated) mode or an inactive (deactivated) state. When the cell is in the active mode or the active state, it may mean that the UE may transmit and receive UL or DL data to and from the BS on a BWP other than an activated BWP or an activated normal BWP or an activated dormant BWP of the cell in the active mode or on the activated cell, and may monitor the PDCCH to detect an indication by the BS. Alternatively, when the cell is in the active mode or the active state, it may mean that the UE may perform channel measurement on the DL of the cell of the active mode or the active state (or the BWP other than the activated BWP, or the activated normal BWP, or the activated dormant BWP of the cell) and may periodically report measurement information to BS, and may periodically transmit a pilot signal (sounding reference signal (SRS)) to the BS so that the BS can perform UL channel measurement. Alternatively, the UE may activate the BWP as the dormant BWP or may switch the BWP to the dormant BWP according to the indication by the BS for the activated cell (e.g., the PDCCH or the MAC CE or the RRC message), and when the dormant BWP is activated on the activated cell, the UE may perform channel measurement reporting and may perform a procedure for reporting a channel measurement result, without performing PDCCH monitoring on the cell.

In another method, when the cell on which the dormant BWP is activated is the SCell, the UE may not monitor the PDCCH or may not receive DL data or may perform channel measurement or measurement result reporting. Alternatively, the UE may suspend a configured periodic transport resource (e.g., type 1 periodic transport resource (configured uplink grant type 1)) or may clear or initialize a configured periodic transport resource (e.g., type 2 periodic transport resource (configured uplink grant type 2)). Alternatively, the UE may not transmit a sounding reference signal (SRS) or may not transmit UL data or may not transmit the PUCCH (e.g., scheduling request (SR) or preamble for random access). However, if the cell on which the dormant BWP is activated or cell group suspension is indicated is the PSCell, the UE may not monitor the PDCCH or may perform PDCCH monitoring with a very long period or may not receive DL data. Alternatively, the UE may perform channel measurement or measurement result reporting or may suspend the configured periodic transport resource (e.g., type 1 periodic transport resource) (configured uplink grant type 1)) or may clear or initialize the configured periodic transport resource (e.g., type 2 periodic transport resource (configured uplink grant type 2)). Alternatively, the UE may transmit an SRS or may not transmit UL data or may transmit the PUCCH (e.g., SR or preamble for random access) or may perform a random access procedure.

If the cell on which the BWP other than the dormant BWP is activated is the SCell, the UE may monitor the PDCCH or may receive DL data or may perform channel measurement or measurement result reporting. Alternatively, the UE may resume the configured periodic transport resource (e.g., type 1 periodic transport resource (configured uplink grant type 1)) or may configure or activate the configured periodic transport resource (e.g., type 2 periodic transport resource (configured uplink grant type 2)). Alternatively, the UE may transmit an SRS or may transmit UL data or may transmit the PUCCH (e.g., SR or preamble for random access) or may perform a random access procedure.

If the cell on which the BWP other than the dormant BWP is activated or cell group resumption (SCG resumption) is indicated is the PSCell, the UE may perform PDCCH monitoring or may receive DL data or may perform channel measurement or measurement result reporting. Alternatively, the UE may resume a configured periodic transport resource (e.g., type 1 periodic transport resource (configured uplink grant type 1)) or may configure or activate a configured periodic transport resource (e.g., type 2 periodic transport resource (configured uplink grant type 2)). Alternatively, the UE may transmit an SRS or may transmit UL data or may transmit the PUCCH (e.g., SR or preamble for random access) or may perform a random access procedure.

However, when the cell is in the inactive mode or the inactive state, it may mean that because the UE is in a state in which BWPs configured on the cell are deactivated or the configured BWPs are not activated, or there is no activated BWP from among the configured BWPs, the UE cannot transmit and receive data to and from the BS. Alternatively, when the cell is in the inactive mode or the inactive state, it may mean that the UE does not monitor the PDCCH to detect an indication by the BS, does not perform channel measurement, does not perform measurement reporting, and does not transmit a pilot signal.

Accordingly, in order to activate the cells in the inactive mode, the BS may first configure frequency measurement configuration information for the UE via the RRC message, and the UE may perform cell or frequency measurement, based on the frequency measurement configuration information. The BS may receive a cell or frequency measurement report of the UE, and then may activate the deactivated cells, based on frequency/channel measurement information. Accordingly, long latency occurs when the BS activates carrier aggregation or dual connectivity and starts data transmission or reception to or from the UE.

The disclosure provides a dormant BWP or a dormant state for a BWP of each activated cell (e.g., activated Scell or activated PSCell) to reduce battery power consumption of the UE and rapidly start data transmission or reception, and provides the configuration or introduction of a dormant BWP for each activated cell. Alternatively, the disclosure provides the configuration or introduction of a state of a cell group for each cell group as an active state, a dormant state, a suspended state, an inactive state, or a resumed state, when dual connectivity is configured for the UE, and provides a method of performing a cell group suspension (SCG suspension or Cell group suspension) or cell group resumption (SCG resumption or Cell group resumption) indication indicating cell group state transition, and corresponding UE operation.

On a BWP or a dormant BWP that is a dormant mode of the activated cell (dormant BWP on activated SCell), or when the dormant BWP is activated, the UE may not transmit and receive data to and from the BS, or may not monitor the PDCCH to detect an indication by the BS, or may not transmit a pilot signal but may perform channel measurement, and may report a measured frequency/cell/channel measurement result according to the BS configuration periodically or when an event occurs. Accordingly, because the UE does not monitor the PDCCH and does not transmit a pilot signal on the dormant BWP of the activated cell, battery power consumption may be reduced compared to a normal BWP of the activated cell (or BWP other than the dormant BWP) or compared to when the normal BWP of the activated cell (or BWP other than the dormant BWP) is activated. Also, unlike a case where the cell is deactivated, because the UE performs channel measurement reporting, the BS may rapidly activate the normal BWP of the activated cell, based on a measurement report or a measurement report of the dormant BWP of the activated cell, such that rapid use of carrier aggregation is possible and thus transmission latency may be decreased.

Accordingly, in the disclosure, when the cell is in the active mode or the active state, it may mean that the UE may transmit and receive UL or DL data to and from the BS on the BWP other than the activated BWP or the activated normal BWP or the activated dormant BWP of the cell in the activated mode or on the activated cell, may monitor the PDCCH to detect an indication by the BS, may perform channel measurement on the DL of the cell of the active mode or the active state (or the BWP other than the activated BWP or the activated normal BWP or the activated dormant BWP of the cell) and may periodically report measurement information to the BS, and may periodically transmit a pilot signal (SRS) to the BS so that the BS can perform UL channel measurement. Also, in the disclosure, when the cell is in the active mode or the active state, it may mean that the UE may not transmit and receive UL or DL data to and from the BS on the activated dormant BWP of the cell in the active mode or on the activated cell or may not monitor the PDCCH to detect an indicator by the BS but may perform channel measurement on the DL of the activated dormant BWP of the cell of the active mode or the active state and may periodically report measurement information to the BS.

If the cell on which the dormant BWP is activated or cell group suspension is indicated is the PSCell, the UE may not monitor the PDCCH or may perform PDCCH monitoring with a very long period or may not receive DL data. Alternatively, the UE may perform channel measurement or measurement result reporting or may suspend the configured periodic transport resource (e.g., type 1 periodic transport resource (configured uplink grant type 1)) or may clear or initialize the configured periodic transport resource (e.g., type 2 periodic transport resource (configured uplink grant type 2)). Alternatively, the UE may transmit an SRS or may not transmit UL data or may transmit the PUCCH (e.g., SR or preamble for random access) or may perform a random access procedure.

If the cell for which cell group inactivation (or suspension) is indicated is the PSCell (or the SCG), the UE may not monitor the PDCCH or may perform PDCCH monitoring with a very long period or may not receive DL data. Alternatively, the UE may perform channel measurement or measurement result reporting or may suspend the configured periodic transport resource (e.g., type 1 periodic transport resource (configured uplink grant type 1)) or may clear or initialize the configured periodic transport resource (e.g., type 2 periodic transport resource (configured uplink grant type 2)). Alternatively, the UE may transmit an SRS or may not transmit UL data or may transmit the PUCCH (e.g., SR or preamble for random access) or may perform a random access procedure. However, when the cell group inactivation (or suspension) is indicated, radio resource management may be performed based on frequency measurement configuration information configured by the BS in an RRC message indicating the cell group inactivation (or suspension). Alternatively, in a case where Radio Link Monitoring (RLM) configuration information is configured, when an indication indicating signal desynchronization based on timer (T310) is received from an RLM procedure (lower layer (PHY layer)), timer (T310) is running, and when timer (T310) is expired, a radio link failure may be declared. If an indication indicating that synchronization of signals is matched is received, running timer (T310) may be stopped. Also, in a case where the cell group inactivation (or suspension) is indicated, when beam-associated configuration information to perform a BFD procedure is configured by the RRC message indicating the cell group inactivation (or suspension), the UE may perform the BFD procedure.

Additionally, in the disclosure, a dormant BWP may indicate a state of a BWP or may be used as a logical name indicating a specific BWP. Accordingly, the dormant BWP may be activated or may be deactivated or may be switched. For example, an indication to switch a activated BWP on a cell to a dormant BWP or an indication to transition the cell to hibernation or a dormant mode or an indication to activate a dormant BWP of the cell may be interpreted as the same meaning.

Additionally, in the disclosure, a normal BWP may indicate BWPs other than a dormant BWP from among BWPs configured for each cell of the UE via an RRC message. On the normal BWP, the UE may transmit and receive UL or DL data to and from the BS, may monitor the PDCCH to detect an indication by the BS, may perform channel measurement on the DL and may periodically report measurement information to the BS, and may periodically transmit a pilot signal (SRS) to the BS so that the BS can perform UL channel measurement. Also, the normal BWP may indicate a first active BWP or a default BWP or a first active BWP activated from hibernation or an initial BWP.

Additionally, from among BWPs configured for each cell of the UE, only one dormant BWP may be configured for the DL. Alternatively, from among BWPs configured for each cell of the UE, only one dormant BWP may be configured for the UL or the DL.

Additionally, in the disclosure, the state of the cell group may be configured as an active state or a suspended state or an inactive state. The state of the cell group may be indicated by a bitmap or an indicator of the DCI of the PDCCH or may be indicated by the MAC control information or may be indicated by an indicator of the RRC message. When the state of the cell group is indicated as the active state, the UE may store configuration information of the cell group configured or indicated by the RRC message (e.g., RRCReconfiguration message or RRCSetup message or RRCResume message) and may apply, recover, or resume the configuration information. Also, on the configured SCell or the PCell or the PSCell of the cell group, the UE may monitor the PDCCH or may receive DL data or may perform channel measurement or measurement result reporting, according to the configuration of the RRC message. Alternatively, the UE may resume the configured periodic transport resource (e.g., type 1 periodic transport resource (configured uplink grant type 1)) or may configure or activate a configured periodic transport resource (e.g., type 2 periodic transport resource (configured uplink grant type 2)). Alternatively, the UE may transmit an SRS or may transmit UL data or may transmit the PUCCH (e.g., SR or preamble for random access) or may perform a random access procedure.

Additionally, when the state of the cell group is indicated as the suspended state or the inactive state, the UE may store or not discard but may suspend applying configuration information of the cell group configured or indicated by the RRC message (e.g., RRCReconfiguration message or RRCSetup message or RRCResume message). Also, on the configured SCell or the PCell or the PSCell of the cell group, the UE may perform PDCCH monitoring or may receive DL data or may perform channel measurement or measurement result reporting, according to the configuration of the RRC message. Alternatively, the UE may resume the configured periodic transport resource (e.g., type 1 periodic transport resource (configured uplink grant type 1)) or may configure or activate a configured periodic transport resource (e.g., type 2 periodic transport resource (configured uplink grant type 2)). Alternatively, the UE may transmit an SRS or may transmit UL data or may transmit the PUCCH (e.g., SR or preamble for random access) or may perform a random access procedure.

Additionally, when the state of the cell group is indicated as the inactive state or when the release of cell group configuration information is indicated, the UE may release or discard the configuration information of the cell group configured or indicated in the RRC message (e.g., RRCReconfiguration message or RRCSetup message or RRCResume message).

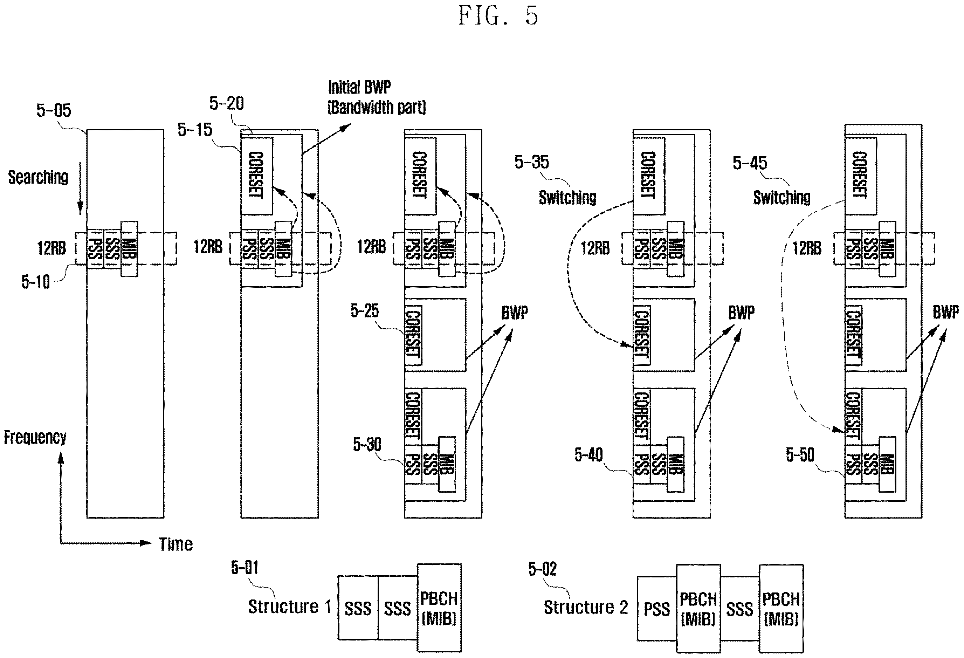

FIG. 5 is a diagram illustrating a procedure for providing a service to a UE by efficiently using a very wide frequency bandwidth in a next-generation wireless communication system according to an embodiment of the disclosure.

With reference to FIG. 5, how a next-generation wireless communication system can efficiently use a very wide frequency bandwidth to provide services to UEs having different capabilities (or categories) and reduce battery power consumption will be described.

One cell served by a BS may serve a very wide frequency band as in 5-05. However, in order to provide services to UEs having different capabilities, the BS may divide the wide frequency band into a plurality of BWPs and may manage the same as one cell.

First, a UE that is initially turned on may search an entire frequency band provided by a service provider (public land mobile network (PLMN)) in units of certain resource blocks (e.g., 12 resource blocks (RBs)). That is, the UE may start to monitor a primary synchronization sequence (PSS)/secondary synchronization sequence (SSS) in an entire system bandwidth in units of resource blocks (5-10). When the UE detects signals of the PSS/SSS while monitoring the PSS/SSS in units of resource blocks (5-01 or 5-02), the UE may read and interpret (decode) the signals of the PSS/SSS to identify a boundary between a subframe and a radio transport resource frame (radio frame). Accordingly, the subframe may be distinguished in units of 1 ms, and the UE may synchronize a DL signal with the BS. A resource block (RB) may be defined as a two-dimensional unit with a size of a certain frequency resource and a certain time resource. For example, the time resource may be defined in units of 1 ms and the frequency resource may be defined as 12 subcarriers (1 carrier × 15 kHz = 180 kHz). When synchronization is completed, the UE may identify control resource set (CORESET) information and initial access BWP information by identifying a master system information block (MIB) or minimum system information (MSI) (5-15 and 5-20). The CORESET information refers to a position of a time/frequency transport resource on which a control signal is transmitted from the BS, and indicates, for example, a position of a resource on which a PDCCH is transmitted. That is, the CORESET information is information indicating where first system information (system information block 1 (SIB1)) is transmitted, and may indicate on which frequency/time resource the PDCCH is transmitted. When the UE receives the first system information, the UE may identify information about an initial BWP. When the UE completes synchronization of a DL signal with the BS and is enabled to receive a control signal, the UE may perform a random access procedure in an initial BWP of a cell on which the UE camps, may request an RRC connection configuration, may receive an RRC message, and may perform an RRC connection configuration.

In the RRC connection configuration, a plurality of BWPs may be configured for each cell (Pcell or Pscell or Spcell or Scell). In one cell, a plurality of BWPs may be configured for a DL, and separately from the configuration, a plurality of BWPs may be configured for a UL.

The plurality of BWPs may be indicated and configured by a BWP identifier to be used as an initial BWP or a default BWP or a first active BWP or a dormant BWP or a first active BWP activated from a dormant state.

The initial BWP may be used as a cell-specific BWP existing for each cell, and may be used as a BWP on which the UE first accessing the cell can configure a connection to the cell via a random access procedure or the UE connected to the cell can perform synchronization. Also, the BS may configure, for each cell, an initial DL BWP to be used in the DL and an initial UL BWP to be used in the UL. Also, configuration information about the initial BWP may be broadcast in the first system information (system information 1 (SIB1)) indicated by the CORESET, and the BS may re-configure the configuration information about the initial BWP to a UE accessing the cell via an RRC message. Also, the initial BWP may be used by being designated as 0 of a BWP identifier in each of the UL and the DL. That is, all UEs accessing the same cell may use the equal initial BWP by designating the same as the equal BWP identifier #0. This is because, when a random access procedure is performed, the BS may transmit an RAR message in the initial BWP that may be read by all the UEs, and thus a CBRA procedure may be facilitated.

The first active BWP may be differently configured for each UE (UE specific), and may be indicated by being designated by a BWP identifier from among a plurality of BWPs. The first active BWP may be configured for each of the DL and the UL, and a first active DL BWP and a first active UL BWP may be respectively configured as BWP identifiers. The first active BWP may be used to indicate which BWP is to be first activated and used when a plurality of BWPs are configured for one cell. For example, when a Pcell or a Pscell and a plurality of Scells are configured for the UE and a plurality of BWPs are configured for the Pcell or the Pscell or an Scell, if the Pcell or the Pscell or the Scell is activated, the UE may activate and use the first active BWP from among the plurality of BWPs configured for the Pcell or the Pscell or the Scell. That is, for the DL, the first active DL BWP may be activated and used, and for the UL, the first active UL BWP may be activated and used.

An operation in which the UE activates the first active DL BWP (or BWP configured or indicated via the RRC message) by switching the current or activated DL BWP or in which the UE activates the first active UL BWP (or BWP configured or indicated via the RRC message) by switching the current or activated UL BWP may be performed when the UE receives an indication to activate the cell or the BWP in the inactive state via the RRC message or the MAC control information or the DCI. Also, the operation may be performed when the UE receives an indication to transition the cell or the BWP to the dormant state or an indication to activate the dormant BWP via the RRC message or the MAC control information or the DCI. This is because, when the cell or the BWP is activated, the first active DL BWP (or BWP configured or indicated via the RRC message) is to be activated by switching the current or activated DL BWP or the first active UL BWP (or BWP configured or indicated via the RRC message) is to be activated by switching the UL BWP, and thus even when channel measuring reporting is performed in the dormant state, the BS may effectively use carrier aggregation only when a frequency/channel should be measured and reported for the first active DL/UL BWP. The default BWP may be differently configured for each UE (UE specific), and may be indicated by being designated by a BWP identifier from among a plurality of BWPs. The default BWP may be configured only for the DL. The default BWP may be used as a BWP to which an activated BWP from among a plurality of DL BWPs is to fall back after a certain time. For example, a BWP inactivity timer may be configured for each cell or each BWP via an RRC message, and the BWP inactivity timer may start or re-start when data transmission/reception occurs in the activated BWP other than the default BWP, or may start or re-start when the activated BWP is switched to another BWP. When the BWP inactivity timer expires, the UE may fall back or switch the activated DL BWP to the default bandwidth in the cell. Switching may refer to a procedure for deactivating a currently activated BWP and activating a BWP for which the switching is indicated, and the switching may be triggered via an RRC message or MAC control information (MAC CE) or L1 signaling (DCI of the PDCCH). The switching may be triggered by an indication of the BWP to be switched or activated, and the BWP may be indicated by a BWP identifier (e.g., 0 or 1 or 2 or 3 or 4).

The reason why the default BWP is applied and used only for the DL is that the UE is indicated by the BS so as to fall back to the default BWP after a certain time for each cell (e.g., DCI of the PDCCH), and thus BS scheduling is facilitated. For example, when the BS configures the default BWP of UEs accessing one cell as the initial BWP, the BS may continuously perform a scheduling indication only in the initial BWP after a certain time. If the default BWP is not configured by the RRC message, the initial BWP may be considered as the default BWP, and thus, the UE may fall back to the initial BWP when the BWP inactivity timer expires.

Alternatively, in order to increase an implementation degree of freedom of the BS, a default BWP may also be defined and configured for the UL and may be used like the default BWP of the DL.

The dormant BWP refers to a BWP that is in a dormant mode of an activated cell or a dormant BWP (dormant BWP in activated SCell) or when the dormant BWP is activated, the UE cannot transmit and receive data to and from the BS or may not monitor the PDCCH to indicate an indication by the BS or may not transmit a pilot signal but may perform channel measurement and may report a measured frequency/cell/channel measurement result according to the BS configuration periodically or when an event occurs. Accordingly, because the UE does not monitor the PDCCH and does not transmit a pilot signal in the dormant BWP of the activated cell, battery power consumption may be reduced compared to a normal BWP of the activated cell (or BWP other than the dormant BWP) or compared to when the normal BWP of the activated cell (or BWP other than the dormant BWP) is activated, and unlike when the cell is deactivated, because the UE performs channel measurement reporting, the BS may rapidly activate the normal BWP of the activated cell based on a measurement report or a measurement report of the dormant BWP of the activated cell, such that rapid use of carrier aggregation is possible and thus transmission latency may be decreased.

When the UE operates a BWP of one activated cell as a dormant BWP or when an activated BWP on an activated cell is a dormant BWP or when it is switched to a dormant BWP on a cell or when the BS indicates the UE to switch the BWP of the activated cell from the dormant BWP to the normal BWP (or BWP other than the dormant BWP) via the DCI of the PDCCH or the MAC CE or the RRC message or when the BS indicates to switch or transition the active BWP from the dormant BWP to the normal BWP or when the BS indicates to switch or transition or activate the active BWP from the dormant BWP to the normal BWP (e.g., first active BWP activated from dormancy), the first active BWP switched and activated from the dormant state or from the dormant BWP (or first active non-dormant BWP or BWP configured or indicated via the RRC message) may be a BWP to be activated by switching the current or activated BWP of the activated cell by the UE according to the indication or a BWP to be activated from the dormant state configured by the RRC message.

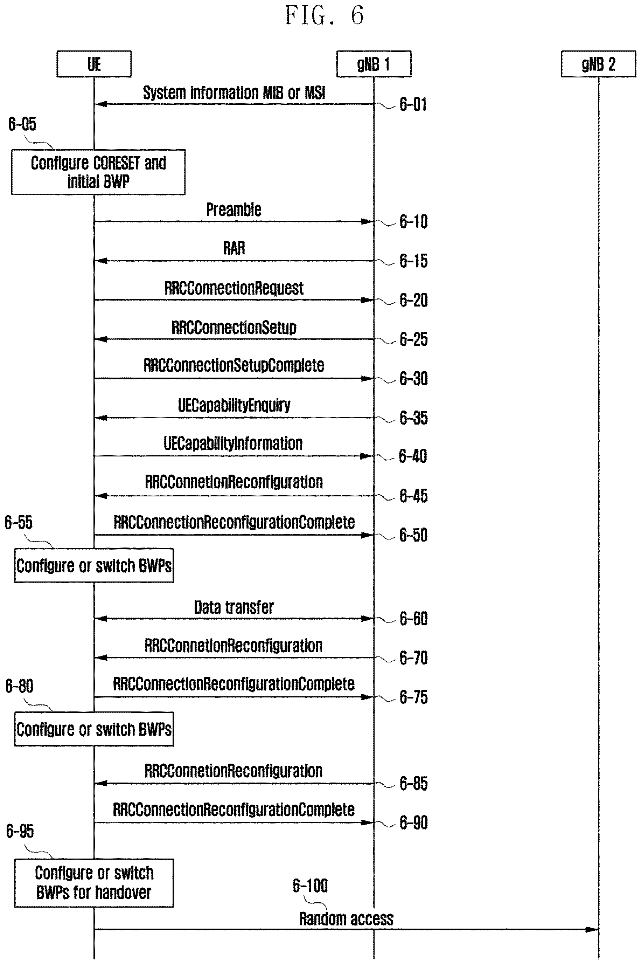

FIG. 6 illustrates a procedure in which a UE transitions from an RRC idle mode to an RRC connected mode in a next-generation wireless communication system, and a procedure in which bearer configuration information or cell group or cell configuration information or channel estimation configuration information for connection is configured for the UE, according to an embodiment of the disclosure.

One cell served by a BS may serve a very wide frequency band. First, the UE may search an entire frequency band provided by a service provider (PLMN) in units of certain resource blocks (e.g., 12 resource blocks (RBs)). That is, the UE may start to monitor a PSS/SSS in an entire system bandwidth in units of resource blocks. If the UE detects signals of the PSS/SSS while monitoring the PSS/SSS in units of resource blocks, the UE may read and interpret (decode) the signals of the PSS/SSS to identify a boundary between a subframe and a radio transport resource frame (radio frame). When synchronization is completed, the UE may read system information of a cell on which the UE currently camp. That is, the UE may identify CORESET information by identifying a MIB or MSI and may identify initial BWP information by reading the system information (6-01 and 6-05). The CORESET information refers to a position of a time/frequency transport resource on which a control signal is transmitted from the BS, and may indicate, for example, a position of a resource on which a PDCCH is transmitted.

When the UE completes synchronization of a DL signal with the BS and is enabled to receive a control signal, the UE may perform a random access procedure on an initial BWP, may receive an RAR, may request an RRC connection configuration, may receive an RRC message, and thus, may perform an RRC connection configuration (6-10, 6-15, 6-20, 6-25, and 6-30).

When a basic RRC connection configuration is completed, the BS may transmit an RRC message asking a capability of the UE so as to identify a UE capability (UECapabilityEnquiry) (6-35). Alternatively, the BS may ask an MME or an access and mobility management function (AMF) about a capability of the UE so as to identify a UE capability. This is because, if the UE previously accessed the BS, the MME or the AMF may have stored capability information of the UE. If the MME or the AMF does not store UE capability information desired by the BS, the BS may request the UE for a UE capability. When the UE reports a UE capability, the UE may report, to the BS, as a UE capability, whether the UE supports a dormant BWP for an SCell of each cell group (MCG or SCG) or whether the UE supports Embodiment 1 or Embodiment 2 or Embodiment 3 or Embodiment 4 of the disclosure or whether the UE supports a dormant BWP for a PSCell of each cell group or whether the UE supports a cell group suspension or resume procedure for a PSCell of each cell group or the number of supported cell groups. Also, the UE may report, to the BS, as a UE capability via an RRCResume message in an RRC connection resume procedure, whether the UE is able to store and recover configuration information of the SCell of the MCG or the SCell of the SCG or the PSCell of the SCG or whether the UE is able to discard the configuration information or whether the UE is able to re-configure part of the configuration information or whether the UE is able to activate the configuration information.

The reason why the BS transmits an RRC message to the UE so as to identify a capability of the UE is to identify a capability of the UE, for example, how much frequency band the UE is able to monitor or a region of the frequency band that may be monitored by the UE. After the BS identifies the capability of the UE, the BS may configure an appropriate BWP for the UE. When the UE receives the RRC message asking the capability of the UE, the UE may indicate, as a response thereto, a range of a bandwidth supported by the UE or to which extent the bandwidth is supported in the current system bandwidth by an offset from a reference center frequency, or to directly indicate a start point and an end point of the supported frequency bandwidth, or to indicate the same by the center frequency and the bandwidth (6-40).

The BWP may be configured by an RRCSetup message or an RRCResume message of the RRC connection configuration (6-25) or an RRCReconfiguration message (6-45 and 6-70), and the RRC message may include configuration information of a PCell or a Pscell or a plurality of cells, and a plurality of BWPs may be configured for each cell (PCell or Pscell or Scell) by the RRC message. When the plurality of BWPs are configured for each cell, a plurality of BWPs to be used in the DL of each cell may be configured, and in a case of a frequency division duplex (FDD) system, a plurality of BWPs to be used in the UL of each cell may be configured separately from DL BWPs. In a case of a time division duplex (TDD) system, a plurality of BWPs to be commonly used in the DL and the UL of each cell may be configured.

Cell configuration information or information for configuring a BWP of each cell (PCell or Pscell or Scell) may include some of a plurality of pieces of information below.
- Cell identifier (SCell index);
- Cell configuration information;
   ■ First channel measurement configuration information for each cell or each BWP;
   ■ Second channel measurement configuration information for each cell or each BWP;
- DL BWP configuration information of cell;
   ■ Initial DL BWP configuration information;
   ■ A plurality of pieces BWP configuration information and BWP identifiers (IDs) respectively corresponding to BWPs;
   ■ Initial state configuration information of cell or DL BWP (e.g., active state or dormant state or inactive state);
   ■ BWP identifier indicating first active DL BWP; and
   ■ BWP identifier indicating default BWP.
   ■ Configuration information for PDCCH monitoring for each BWP. For example, CORESET information or search space resource information or PDCCH transport resource, period, subframe number information, or the like;
   ■ BWP identifier indicating dormant BWP;
   ■ BWP identifier indicating first active BWP activated from dormancy;
   ■ BWP inactivity timer configuration and timer value;
   ■ First channel measurement configuration information for each cell or each BWP;
   ■ Second channel measurement configuration information for each cell or each BWP;
- UL BWP configuration information of cell;
   ■ Initial UL BWP configuration information;
   ■ A plurality of pieces of BWP configuration information and BWP IDs respectively corresponding to BWPs;
   ■ Initial state configuration information of cell or DL BWP (e.g., active state or dormant state or inactive state);
   ■ BWP identifier indicating first active UL BWP; and
- Configuration information about transport resource for performing channel measurement and reporting a measurement result in dormant BWP or BWP other than dormant BWP (e.g., PUCCH transport resource information of PCell or PUCCH SCell or PSCell).

In order for the BS to temporarily many or frequently transmit a channel measurement signal to allow a UE to rapidly activate a cell group (or cell) or rapidly perform channel measurement on a cell, first channel measurement configuration information may include, in configuration information of the cell (e.g., PCell or PSCell or SCell) of the cell group, configuration information about a period of a frequent channel measurement signal (e.g., radio resource or Temporary Reference Signal (TRS) or Synchronization Signal Block (SSB) or Channel State Information Reference Signal (CSI-RS) or Reference Signal (RS)) or information about a transport resource being transmitted (a frequency or time transport resource on which the frequent channel measurement signal is transmitted) or a duration or a count (the number of times the frequent channel measurement signal is transmitted) or a timer value (a time in which the frequent channel measurement signal is transmitted) or a time duration (duration (e.g., offset such as a time unit (slot or subframe or symbol, etc.) in which the frequent channel measurement signal is transmitted), or the like. Also, the first channel measurement configuration information may include configuration information about a transport resource, a period, a duration, a timing, offset, or the like in which the UE has to report a measurement result.

With the first channel measurement configuration information, the BS may configure a short reporting period (or transport resource) for the UE to report a channel measurement result, or may configure a transport resource for channel measurement so that the BS can transmit many or frequent channel measurement signals (or transport resources (e.g., radio resource or TRS) to support rapid channel measurement or many signal measurement by the UE. The first channel measurement configuration information may include configuration information about a channel measurement signal for a specific UE (or UEs) on a cell or a BWP. For example, the first channel measurement configuration information may include a period of a channel measurement signal, a count of a signal being transmitted, a time period in which a signal is transmitted, offset about a time in which a signal is transmitted, a time length between signals being transmitted, or the like. Alternatively, the first channel measurement configuration information may include a list of a plurality of transmittable channel measurement signals, a time transport resource (or frequency transport resource) indicating a position of a signal being transmitted, a transport resource (a time transport resource or frequency transport resource) on which a measurement result is to be reported, a period in which a measurement result is to be reported, or the like.

In addition, the first channel measurement configuration information may be differently configured for each cell or each BWP with respect to a plurality of cells or a plurality of BWPs configured by an RRC message, and beam-associated configuration information (TCI state or QCL) such as a beam direction or a beam number or a beam position may be configured together so that the UE can easily measure a transport resource for channel measurement. In addition, with the first channel measurement configuration information, the BS configures a TA value (or offset value) for synchronization of a DL signal of the BS or synchronization of a UL signal of the BS, a timer (TAT) indicating validity of the TA value, or a TAT value, so that the UE may correctly perform channel measurement or channel measurement reporting.

Also, the first channel measurement configuration information configured by an RRC message may include a plurality of pieces of channel measurement signal information. The BS indicates channel measurement signal information among the plurality of pieces of channel measurement signal information configured by the RRC message, a MAC CE, or DCI, or beam configuration information, so that the UE may perform channel measurement or channel measurement reporting by using the indicated channel measurement signal information or the indicated beam configuration information. The indication may be performed by defining mapping between each configured channel measurement signal information and each of a bitmap, an index, and an identifier, and then by performing the indication based on the mapping. Alternatively, the BS configures or indicates channel measurement signal information by an RRC message or a MAC CE, so that the UE may perform channel measurement or channel measurement reporting by applying or using the configured (or indicated) channel measurement signal information.

The first channel measurement configuration information may be initially deactivated when configured by an RRC message or after handover, and then may be activated by MAC control information or DCI information of a PDCCH or an RRC message, which is proposed in the disclosure. When configured by the RRC message, an initial state has to be an inactive state so that the BS can easily manage a cell state or a channel measurement performing procedure of the UE and can correctly perform timing as to when and how the UE is to perform channel measurement, without a processing delay problem with respect to the RRC message.

Also, an RRC message (RRCReconfiguration or RRCResume) may include or configure second channel measurement configuration information. The second channel measurement configuration information may include general channel measurement configuration information such as a transport resource or period or time duration or count of a channel measurement signal or a transport resource or period or time duration for channel measurement reporting.

The configured initial BWP or default BWP or first active BWP may be used for the following purposes, and may operate as below according to the purposes.

The initial BWP may be used as a cell-specific BWP existing for each cell, and may be used as a BWP in which the UE first accessing the cell can configure a connection to the cell via a random access procedure or the UE connected to the cell can perform synchronization. Also, the BS may configure, for each cell, an initial DL BWP to be used in the DL and an initial UL BWP to be used in the UL. Also, configuration information about the initial BWP may be broadcast in the first system information (system information 1 (SIB1)) indicated by the CORESET, and the BS may re-configure the configuration information about the initial BWP to a UE accessing the cell via an RRC message. Also, the initial BWP may be used by being designated as 0 of a BWP identifier in each of the UL and the DL. That is, all UEs accessing the same cell may use the equal initial BWP by designating the same as the equal BWP identifier #0. This is because, when a random access procedure is performed, the BS may transmit an RAR message in the initial BWP that may be read by all the UEs, and thus a CBRA procedure may be facilitated.

The first active BWP may be differently configured for each UE (UE specific), and may be indicated by being designated by a BWP identifier from among a plurality of BWPs. The first active BWP may be configured for each of the DL and the UL, and a first active DL BWP and a first active UL BWP may be respectively configured as BWP identifiers. The first active BWP may be used to indicate which BWP is to be first activated and used when a plurality of BWPs are configured for one cell. For example, when a Pcell or a Pscell and a plurality of Scells are configured for the UE and a plurality of BWPs are configured for the Pcell or the Pscell or an Scell, if the Pcell or the Pscell or the Scell is activated, the UE may activate and use the first active BWP from among the plurality of BWPs configured for the Pcell or the Pscell or the Scell. That is, for the DL, the first active DL BWP may be activated and used, and for the UL, the first active UL BWP may be activated and used.

An operation in which the UE activates the first active DL BWP (or BWP configured or indicated via the RRC message) by switching the current or activated DL BWP or in which the UE activates the first active UL BWP (or BWP configured or indicated via the RRC message) by switching the current or activated UL BWP may be performed when the UE receives an indication to activate a cell or a BWP of an activated cell in an inactive state or a dormant state or an indication to switch from an inactive or dormant BWP to a normal BWP or an indication to activate an inactive or dormant BWP via the RRC message or the MAC control information or the DCI of the PDCCH. Also, when the UE receives an indication to transition an activated cell or BWP to a dormant state or an indication to switch to a dormant BWP or an indication to activate a dormant BWP via the RRC message or the MAC control information or the DCI of the PDCCH, the UE may switch or activate the BWP to the dormant BWP or may hibernate the BWP.

Switching to the dormancy or the dormant BWP or activation of the dormant BWP may refer to performing an operation in the dormant state proposed in the disclosure. That is, the UE may not perform PDCCH monitoring, and the UE may perform an operation of measuring a channel on a DL BWP (or dormant BWP) and reporting a result to the BS. Alternatively, when the activated cell or BWP is activated or switched to the normal BWP, because the first active DL BWP is to be activated by switching the DL BWP and the first active UL BWP is to be activated by switching the UL BWP, the dormant BWP may be configured as the first active DL or UL BWP or the default BWP.

The default BWP may be differently configured for each UE (UE specific), and may be indicated by being designated by a BWP identifier from among a plurality of BWPs. The default BWP may be configured only for the DL. The default BWP may be used as a BWP to which an activated BWP from among a plurality of DL BWPs is to fall back after a certain time. For example, a BWP inactivity timer may be configured for each cell or each BWP through an RRC message, and may start or re-start when data transmission and reception occurs in the activated BWP other than the default BWP or may start or re-start when the activated BWP is switched to another BWP. When the BWP inactivity timer expires, the UE may fall back or switch the activated DL BWP to the default bandwidth in the cell. Switching may refer to a procedure of deactivating a currently activated BWP and activating a BWP for which the switching is indicated, and the switching may be triggered via an RRC message or MAC control information (MAC CE) or L1 signaling (DCI of the PDCCH). Switching may be triggered in response to an indication of the BWP to be switched or activated, and the BWP may be indicated by a BWP identifier (e.g., 0 or 1 or 2 or 3 or 4).

The reason why the default BWP is applied and used only for the DL is that the UE is indicated by the BS to fall back to the default BWP after a certain time for each cell (e.g., DCI of the PDCCH), and thus BS scheduling is facilitated. For example, when the BS configures the default BWP of UEs accessing one cell as the initial BWP, the BS may continuously perform a scheduling indication only in the initial BWP after a certain time. If the default BWP is not configured by the RRC message, the initial BWP may be considered as the default BWP and thus the UE may fall back to the initial BWP when the BWP inactivity timer expires.

Alternatively, in order to increase an implementation degree of freedom of the BS, a default BWP may also be defined and configured for the UL and may be used like the default BWP of the DL.

The dormant BWP refers to a BWP that is in a dormant mode of an activated cell or a dormant BWP (dormant BWP in activated SCell) or when the dormant BWP is activated, the UE may not transmit and receive data to and from the BS or may not monitor the PDCCH to detect an indication by the BS or may not transmit a pilot signal but may perform channel measurement and may report a measured frequency/cell/channel measurement result according to the BS configuration periodically or when an event occurs. Accordingly, because the UE does not monitor the PDCCH and does not transmit a pilot signal in the dormant BWP of the activated cell, battery power consumption may be reduced compared to a normal BWP of the activated cell (or BWP other than the dormant BWP) or compared to when the normal BWP of the activated cell (or BWP other than the dormant BWP) is activated, and unlike when the cell is deactivated, because the UE performs channel measurement reporting, the BS may rapidly activate the normal BWP of the activated cell based on a measurement report or a measurement report of the dormant BWP of the activated cell, such that rapid use of carrier aggregation is possible and thus transmission latency may be decreased.

When the UE operates a BWP of one activated cell as a dormant BWP or when an activated BWP in an activated cell is a dormant BWP or when it is switched to a dormant BWP in a cell or when the BS indicates to switch the BWP of the activated cell from the dormant BWP to the normal BWP (or BWP other than the dormant BWP) via the DCI of the PDCCH or the MAC CE or the RRC message or when the BS indicates to switch or transition the active BWP from the dormant BWP to the normal BWP or when the BS indicates to switch, transition, or activate the active BWP from the dormant BWP to the normal BWP (e.g., first active BWP activated from dormancy), the first active BWP activated from dormancy (or first active non-dormant BWP) may be a BWP to be switched from the BWP of the activated cell by the UE according to the indication or a first active BWP activated from dormancy configured by the RRC message.

In the disclosure, when a first BWP is switched to a second BWP, it may be interpreted that the second BWP is activated, or the activated first BWP is deactivated and the second BWP is activated.

Also, in the RRCSetup message or the RRCResume message of the RRC connection configuration (6-25) or the RRCReconfiguration message (6-45), a state transition timer may be configured so that the UE itself may perform state transition even without receiving an indication from the BS via the RRC message or the MAC control information or the DCI of the PDCCH. For example, the UE may configure a cell deactivation timer (ScellDeactivationTimer) for each cell, and when the cell deactivation timer expires, the UE may transition a state of the cell to the inactive state.

Also, the RRCSetup message of the RRC connection configuration or the RRCResume message (6-25) or the RRCReconfiguration message (6-45) may include frequency measurement configuration information and frequency measurement gap configuration information, and may include frequency measurement object information. Also, in the RRCSetup message of the RRC connection configuration or the RRCResume message (6-25) or the RRCReconfiguration message (6-45), a function for reducing power consumption of the UE (power saving mode) may be configured, and along with the function for reducing power consumption, configuration information such as discontinuous reception (DRX) cycle or offset or on-duration period (duration in which the terminal should monitor the PDCCH) or time information or short time period information or time information indicating when to monitor or detect the PDCCH from the BS before the on-duration period in the DRX cycle may be configured. When the function for reducing power consumption of the UE is configured, the UE may configure a DRX cycle, and may detect a wake-up signal (WUS) in duration configured to monitor the PDCCH of the BS before the on-duration period, and the BS may indicate the UE whether to skip (or not to perform) or perform PDCCH monitoring in an immediately next on-duration period via the DCI of the PDCCH of the WUS. The UE should always monitor the PDCCH in the on-duration period, and, however, when the BS indicates the UE not to perform PDCCH monitoring in the on-duration period by using the WUS, battery power consumption of the UE may be reduced.

When the RRC connection configuration is completed, the UE may configure a plurality of BWPs according to an indication configured by the RRC message. In order to reduce battery power consumption, one or a small number of BWPs from among the configured plurality of BWPs may be activated. For example, one BWP to be activated may be indicated. The BS may indicate activation of the BWP via an RRC message or MAC control information (MAC CE) or L1 signaling (PHY layer control signaling such as DCI of the PDCCH), to indicate switching from an initial access BWP to a new BWP. Alternatively, the BS may define new bitmap information in the DCI of the PDCCH, and may indicate, by the new bitmap information, whether to activate the normal BWP (or BWP other than the dormant BWP) or activate the dormant BWP or deactivate the BWP. Alternatively, the BS may indicate, by the bitmap, whether to activate the normal BWP (e.g., first active BWP to be activated from dormancy) or activate the dormant BWP or switch to the dormant BWP or perform BWP switching. Because there may be many newly connected users in the initial access BWP, it may be more advantageous to allocate a new BWP and separately manage the connected users in terms of scheduling. This is because the initial access BWP is not configured for each UE, but may be commonly shared and used by all the UEs. Also, in order to reduce signaling overhead, the default BWP may be dynamically indicated via the MAC control information or the L 1 signaling or the system information.

The RRC message (the RRCSetup message or the RRCResume (6-25) or the RRCReconfiguration message (6-70)) may include configuration information for a cell group. The configuration information for the cell group may include some of a plurality of pieces information below, and may indicate, for the cell group, a state or procedure or configuration information application or release for each cell group.
- Cell group identifier indicating cell group (e.g., cell group identifier or index);
- Indicator indicating state of cell group (e.g., active state or suspended state or inactive state);
- Indicator indicating state of cell group (e.g., indicator to suspend (or deactivate) cell group (e.g., Cellgroup (SCG) suspension indicator) or indicator to resume (or activate) cell group (e.g., Cellgroup (SCG) resumption indicator)); and
- Indicator (e.g., PDCP reestablishment indicator or PDCP data recovery indicator or indicator triggering new procedure or RLC reestablishment indicator or MAC layer reset indicator or MAC layer partial reset indicator) triggering procedure of corresponding protocol layer (e.g., SDAP layer or PDCP layer or RLC layer or MAC layer) according to indicator indicating state of cell group.
- When an indicator to suspend (or deactivate) the state of the cell group is included, second DRX configuration information (e.g., monitoring interval or active period (on-duration) length or period or offset) may be configured to perform PDCCH monitoring with a very long period in the PSCell of the cell group. For example, when the UE receives an indicator to suspend the cell group, the UE may perform PDCCH monitoring with a very long period by applying the second DRX configuration information, thereby reducing power consumption of the UE. Alternatively, when the UE receives an indicator to suspend the cell group, the UE may activate or switch the DL BWP to the dormant BWP of the PSCell of the cell group by applying BWP configuration information of the PSCell of the cell group, and may perform a UE operation on the cell in which the dormant BWP is activated according to the disclosure. Also, when the UE receives an indicator to suspend the cell group, the UE may deactivate all SCells configured in the cell group. Alternatively, when the UE receives an indicator to suspend the cell group, the UE may activate or switch the DL BWP to the dormant BWP for the SCell in which the dormant BWP is configured from among SCells configured in the cell group, and may perform a UE operation on the cell in which the dormant BWP is activated according to the disclosure, or may deactivate the SCell in which the dormant BWP is not configured. Alternatively, when the UE receives an indicator to suspend the cell group in the RRC message, the UE may perform activation, deactivation, hibernation, or dormant BWP activation on each SCell according to an indicator or configuration information for each SCell of the cell group included in the RRC message, or, alternatively, before or after the UE receives an indictor to suspend the cell group, the UE may perform activation or deactivation or hibernation or dormant BWP activation on each SCell of the cell group via the indicator (e.g., bitmap) of the PDCCH or the MAC control information or the RRC message.
- Configuration information about transport resource for performing channel measurement and reporting a measurement result in dormant BWP or BWP other than dormant BWP (e.g., PUCCH transport resource information of PCell or PUCCH SCell or PSCell).
- When an indicator to resume (or activate) the state of the cell group is included, first DRX configuration information (e.g., monitoring duration or active period (on-duration) length or period or offset) may be configured to re-perform PDCCH monitoring in the PSCell of the cell group. Alternatively, the UE may recover and apply the first DRX configuration information that is stored for the cell group. For example, when the UE receives an indicator to resume the cell group, the UE may perform PDCCH monitoring by applying the first DRX configuration information that is received from the RRC message or that is stored to resume data transmission or reception. Alternatively, when the UE receives an indicator to resume the cell group, the UE may activate or switch the DL BWP of the PSCell of the cell group to the BWP other than the dormant BWP (e.g., BWP configured by the RRC message) by applying BWP configuration information of the PSCell of the cell group, and may perform a UE operation on the cell in which the normal BWP (BWP other than the dormant BWP) is activated according to the disclosure. Alternatively, when the UE receives an indicator to resume the cell group, the UE may trigger a random access procedure in the PSCell of the cell group by applying random access configuration information (random access transport resource information for preamble transmission (time or frequency transport resource) or designated preamble information) that is received from the RRC message or that is stored. Alternatively, when the UE receives an indicator to resume the cell group, if random access configuration information (random access transport resource information for preamble transmission (time or frequency transport resource) or designated preamble information) is included in the RRC message, the UE may trigger a random access procedure (e.g., CFRA procedure) in the PSCell of the cell group by applying the random access configuration information, and when random access configuration information (random access transport resource information for preamble transmission (time or frequency transport resource) or designated preamble information) is not included in the RRC message indicating to resume or activate the cell group, the UE may trigger a random access procedure (e.g., CBRA procedure) in the PSCell of the cell group, or may trigger a random access procedure (CBRA or 2-step random access) based on system information. When there is random access configuration information (random access transport resource information for preamble transmission (time or frequency transport resource) or designated preamble information) that is stored in the UE before an indicator to resume the cell group is received, the UE may release or discard the random access configuration information. Alternatively, the UE may perform PDCCH monitoring in the indicated or configured cell group or cell, and may trigger and perform a random access procedure according to an indication indicated in the PDCCH.
- When an indicator to resume (or activate) the state of the cell group is included or when the UE receives an indicator to resume the cell group, the UE may activate all SCells configured in the cell group. Alternatively, when the UE receives an indicator to resume the cell group, the UE may activate or switch the DL BWP to the BWP other than the dormant BWP (e.g., BWP configured by the RRC message or the first active BWP) for the SCell in which the dormant BWP is configured from among SCells configured in the cell group, and may perform a terminal operation in the cell in which the BWP other than the dormant BWP is activated according to the disclosure or may activate the SCell in which the dormant BWP is not configured. Alternatively, when the UE receives an indicator to resume the cell group in the RRC message, the UE may perform activation or deactivation or hibernation or dormant BWP activation on each SCell according to an indicator or configuration information for each SCell of the cell group included in the RRC message, and alternatively, before or after the UE receives an indicator to resume the cell group, the UE may perform activation or deactivation or hibernation or dormant BWP activation on each SCell of the cell group via the indicator (e.g., bitmap) of the PDCCH or the MAC control information or the RRC message.
- Indicator adding cell group configuration;
- Indicator releasing cell group configuration;
- Security configuration information (security key information or security key information for cell group or additional information (e.g., sk-counter));
- Indicator indicating handover or cell group addition or cell group modification (e.g., ReconfigurationWithSync indicator or mobilitycontrolInfo indicator);
- First channel measurement configuration information for each cell or each BWP;
- Second channel measurement configuration information for each cell or each BWP;
- Indicator indicating addition of cell group configuration or an indicator (ReconfigurationWithSync) indicating cell group modification or an indicator (ReconfigurationWithSync or newly defined indicator) indicating a random access procedure;
- Indicator (ReconfigurationWithSync or newly defined indicator) indicating whether to activate a cell group by performing a random access procedure or to activate the cell group without the random access procedure, when activation of the cell group; and
- Radio Resource Management (RRM) configuration information or frequency measurement configuration information or separate configuration information of RRM to be applied or performed to deactivate a cell group or frequency measurement configuration information (e.g., frequency measurement configuration information (Reduced or Relaxed RRM configuration information simplified for reduction of battery power consumption)).
- Configuration information for RLM or configuration information for RLM to be applied or performed to deactivate a cell group. For example, the configuration information for RLM or the configuration information for RLM to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for RLM or the configuration information for RLM to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for RLM or the configuration information for RLM to be applied or performed to deactivate a cell group may include configuration information of an SSB or CSI-RS or RS to be measured, transport resource information (e.g., PUCCH configuration information (e.g., SR information or specific transport resource) or frequency transport resource or time transport resource) on which a result can be reported when a beam failure occurs. Also, the configuration information may include BWP configuration information (e.g., may be indicated as a BWP identifier) indicating on which BWP the RLM procedure is to be performed. Alternatively, when a cell group is in an inactivate state, the UE may perform the RLM procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the RLM procedure on a BWP that was last (or previously) activated before the cell group is deactivated, so that a connected state with respect to the cell group may be continuously maintained (e.g., a case where BWP configuration information indicating on which BWP the RLM procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the RLM procedure is to be performed is not configured, when activating the cell group, the UE may perform the RLM procedure on the BWP that was last (or previously) activated. Also, the configuration information may include beam-associated configuration information (which may be indicated as a BWP identifier or TCI state or QCL configuration information) indicating on which beam the RLM procedure is to be performed. Alternatively, when the cell group is in an inactivate state, the UE may perform the RLM procedure on a beam (e.g., TCI state or QCL configuration information) configured by the RRC message or may perform the RLM procedure by activating the beam, and may early monitor the beam to be activated to activate the cell group, so that latency in activation of the cell group may be minimized. Alternatively, when a state of the cell group is configured as an inactive state (or an active state), the UE may perform the RLM procedure on a beam that was last (or previously) activated before the cell group is deactivated, so that a connected state with respect to the cell group may be continuously maintained (e.g., a case where beam-associated configuration information indicating on which beam the RLM procedure is to be performed is not configured), or when the UE activates the cell group, the UE may perform an activation procedure on a beam configured by the RRC message. If the beam-associated configuration information indicating on which beam the RLM procedure is to be performed is not configured when activating the cell group, the UE may perform the RLM procedure on the beam that was last (or previously) activated.
- Configuration information for a beam failure detection (BFD) procedure or BFD or configuration information for BFD to be applied or performed to deactivate a cell group. For example, the configuration information for a BFD procedure or BFD or the configuration information for BFD to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for a BFD procedure or BFD or the configuration information for BFD to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for a BFD procedure or BFD or the configuration information for BFD to be applied or performed to deactivate a cell group may include configuration information of an SSB or CSI-RS or RS to be measured, or when a beam failure occurs, transport resource information (e.g., PUCCH configuration information (e.g., SR information or specific transport resource) or frequency transport resource or time transport resource) on which a result can be reported. Also, the configuration information may include BWP configuration information (e.g., may be indicated as a BWP identifier) indicating on which BWP the BFD procedure is to be performed. Alternatively, when a cell group is in an inactivate state, the UE may perform the BFD procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the BFD procedure on a BWP that was last (or previously) activated before the cell group is deactivated, so that a connected state with respect to the cell group may be continuously maintained (e.g., a case where BWP configuration information indicating on which BWP the BFD procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the BFD procedure is to be performed is not configured when activation of the cell group, the UE may perform the BFD procedure on the BWP that was last (or previously) activated. Also, the configuration information may include beam-associated configuration information (which may be indicated as a BWP identifier or TCI state or QCL configuration information) indicating on which beam the BFD procedure is to be performed. Alternatively, when the cell group is in an inactivate state, the UE may perform the BFD procedure on a beam (e.g., TCI state or QCL configuration information) configured by the RRC message, so that the beam to be activated to activate the cell group may be early monitored, and thus, latency in activation of the cell group may be minimized. Alternatively, when a state of the cell group is configured as an inactive state (or an active state), the UE may perform the BFD procedure on a beam that was last (or previously) activated before the cell group is deactivated, so that a connected state with respect to the cell group may be continuously maintained (e.g., a case where beam-associated configuration information indicating on which beam the BFD procedure is to be performed is not configured), or when the UE activates the cell group, the UE may perform an activation procedure on a beam configured by the RRC message. If the beam-associated configuration information indicating on which beam the BFD procedure is to be performed is not configured when activation of the cell group, the UE may perform the BFD procedure on the beam that was last (or previously) activated.
- In order to efficiently perform a dual connectivity configuration procedure (or an SCG configuration procedure) or a handover procedure, a first timer (e.g., T304) or a second timer (e.g., T310) or a third timer (e.g., T312) or a fourth timer (e.g., timer for fall back) may be introduced and configured in the message. It is proposed that the timers are running and applied in the dual connectivity configuration procedure or the handover procedure. The first timer (e.g., T304) may be a timer for determining whether the dual connectivity configuration procedure or the handover procedure is successfully performed, the second timer (e.g., T310) may be a timer for determining whether wireless connection is valid, and the third timer (e.g., T312) may be an auxiliary timer for determining whether the wireless connection is valid and may be a timer for triggering a frequency measurement procedure and reporting a frequency measurement result. When activation of the cell group (or SCG or PSCell) without a random access procedure which is proposed in the disclosure is failed, the fourth timer (e.g., timer for fall back) may be introduced to attempt activation of the cell group by performing a fall back procedure as a random access procedure (a normal random access procedure (a 4-step random access procedure or a 2-step random access procedure)). The fourth timer may be the first timer, and the first timer may be used as a timer for fall back.

It is proposed that, when the RRC message (e.g., RRCReconfiguration message) includes an indicator for suspending (or deactivating) the cell group, an indicator indicating handover or cell group addition or cell group modification (e.g., ReconfigurationWithSync indicator or mobilitycontrolInfo indicator) may not be included, and when the RRC message includes an indicator for resuming the cell group or configuration information for configuration, an indicator indicating handover or cell group addition or cell group modification (e.g., ReconfigurationWithSync indicator or mobilitycontrolInfo indicator) may be included. This is because, when the cell group is resumed, a connection to the cell group should be re-performed, and thus synchronization should be performed or system information should be received, or a random access procedure should be performed when necessary. For example, when the BS configures, by the RRC message, the cell group of the UE to have an inactive state, the BS is not allowed to configure a cell group addition indicator or a cell group modification indicator or an indicator indicating a random access procedure or a ReconfigurationWithSync indicator, so that the UE may not need to perform a synchronization procedure or a connection procedure or a random access procedure, which is not necessary.

When the RRC message (e.g., RRCReconfiguration) includes an indicator to deactivate the cell group (SCG), the BS (or network) may configure, by including it in the RRC message, configuration information that indicates whether the UE performs the RLM procedure or the BFD procedure on the deactivated cell group when the cell group is deactivated. When configuring the configuration information to perform the RLM procedure or the BFD procedure for the deactivated cell group, the BS (or network) may configure beam-related configuration information indicating which beam or BWP to perform the RLM procedure or the BFD procedure on.

In the following, the disclosure proposes methods for configuring the beam-related configuration information that reduce the size (or overhead) of the RRC message and simplify UE implementation. One method among the following methods of the BS (or network) or the UE may be applied, a plurality of methods may be applied, or a new method may be applied based on the following methods.
- First method: If the BS (or network) instructs to perform the RLM procedure or the BFD procedure for the deactivated cell group, it may configure the beam-related configuration information for performing the RLM procedure or the BFD procedure to the UE, and beam information (e.g., TCI state) is always included in the beam-related configuration information (mandatory). Therefore, if the UE receives the beam-related configuration information, it may perform the RLM procedure or the BFD procedure for the deactivated cell group in the first active downlink BWP configured in the RRC message or on the beam configured with beam information in the beam-related configuration information.
- Second method: If the BS (or network) instructs to perform the RLM procedure or the BFD procedure for the deactivated cell group, it may configure the beam-related configuration information for performing the RLM procedure or the BFD procedure to the UE, and beam information (e.g., TCI state) is included if nessary in the beam-related configuration information (optional). Therefore, if the UE receives the beam-related configuration information, it may perform the RLM procedure or the BFD procedure for the deactivated cell group in the first active downlink BWP configured in the RRC message or, if beam information is configured in the beam-related configuration information, on the beam configured with the beam information. If the beam information is not configured in the beam-related configuration information, the RLM procedure or the BFD procedure may be performed on a previously activated (or last activated or currently activated) beam.
- Third method: If the BS (or network) instructs to perform the RLM procedure or the BFD procedure for the deactivated cell group, it may configure the beam-related configuration information for performing the RLM procedure or the BFD procedure to the UE, and a BWP identifier and/or beam information (e.g., TCI state) are/is always included in the beam-related configuration information (mandatory). Therefore, if the UE receives the beam-related configuration information, it may perform the RLM procedure or the BFD procedure for the deactivated cell group in the BWP configured with the BWP identifier or on the beam configured with beam information in the beam-related configuration information.
- Fourth method: If the BS (or network) instructs to perform the RLM procedure or the BFD procedure for the deactivated cell group, it may configure the beam-related configuration information for performing the RLM procedure or the BFD procedure to the UE, a BWP identifier is always included in the beam-related configuration information (mandatory) and/or beam information (e.g., TCI state) is included if nessary (optional). Therefore, if the UE receives the beam-related configuration information, it may perform the RLM procedure or the BFD procedure for the deactivated cell group in the BWP configured with the BWP identifier or on the beam configured with beam information in the beam-related configuration information. If the beam information is not configured in the beam-related configuration information, the RLM procedure or the BFD procedure may be performed on a previously activated (or last activated or currently activated) beam. Additionally, if the BWP identifier configured in the beam-related configuration information does not indicate a previously activated (or last activated or currently activated) BWP, the BWP must be changed (or switched), and thus the beam information (TCI state) is included in the beam-related configuration information to allow the UE to perform the RLM procedure or the BFD procedure on the configured new beam.
- Fifth method: If the BS (or network) instructs to perform the RLM procedure or the BFD procedure for the deactivated cell group, it may configure the beam-related configuration information for performing the RLM procedure or the BFD procedure to the UE, a BWP identifier is included if nessary in the beam-related configuration information (optional) and/or beam information (e.g., TCI state) is always included (mandatory). Therefore, if the UE receives the beam-related configuration information, it may perform the RLM procedure or the BFD procedure for the deactivated cell group in the BWP configured with the BWP identifier or on the beam configured with beam information in the beam-related configuration information. If the BWP identifier is not configured in the beam-related configuration information, the RLM procedure or the BFD procedure may be performed on a previously activated (or last activated or currently activated) BWP (or first active downlink BWP configured in the RRC message). Also, if the BWP identifier configured in the beam-related configuration information does not indicate a previously activated (or last activated or currently activated) BWP, the BWP must be changed (or switched), and thus the beam information (TCI state) is included in the beam-related configuration information to allow the UE to perform the RLM procedure or the BFD procedure on the configured new beam.
- Sixth method: If the BS (or network) instructs to perform the RLM procedure or the BFD procedure for the deactivated cell group, it may configure the beam-related configuration information for performing the RLM procedure or the BFD procedure to the UE, a BWP identifier is included if nessary in the beam-related configuration information (optional) and/or beam information (e.g., TCI state) is included if nessary (optional). Therefore, if the UE receives the beam-related configuration information, it may perform the RLM procedure or the BFD procedure for the deactivated cell group in the BWP configured with the BWP identifier or on the beam configured with beam information in the beam-related configuration information. If the BWP identifier is not configured in the beam-related configuration information, the RLM procedure or the BFD procedure may be performed on a previously activated (or last activated or currently activated) BWP (or first active downlink BWP configured in the RRC message). If the beam information is not configured in the beam-related configuration information, the RLM procedure or the BFD procedure may be performed on a previously activated (or last activated or currently activated) beam. Also, if the BWP identifier configured in the beam-related configuration information does not indicate a previously activated (or last activated or currently activated) BWP, the BWP must be changed (or switched), and thus the beam information (TCI state) is included in the beam-related configuration information to allow the UE to perform the RLM procedure or the BFD procedure on the configured new beam.

Alternatively, when the RRC message (e.g., RRCReconfiguration) includes an indicator to deactivate the cell group (SCG), the BS (or network) may include, in the RRC message, configuration information that indicates whether the UE performs the RLM procedure or the BFD procedure on the deactivated cell group. When configuring the configuration information to perform the RLM procedure or the BFD procedure for the deactivated cell group, the BS (or network) may configure (include), in MAC control information, beam-related configuration information indicating which beam or BWP to perform the RLM procedure or the BFD procedure, multiplex the MAC control information with the RRC message (e.g., included in the same transport block (TB) or the same MAC PDU), and transmit it to the UE. In addition, the above-proposed method for configuring the beam-related configuration information may be applied. Also, configuring or switching of the BWP on which BWP to perform the RLM procedure or the BFD procedure may be indicated via the DCI of the PDCCH.

Alternatively, when the RRC message (e.g., RRCReconfiguration) includes an indicator to deactivate the cell group (SCG), the BS (or network) may include, in the RRC message, configuration information that indicates whether the UE performs the RLM procedure or the BFD procedure on the deactivated cell group. When configuring the configuration information to perform the RLM procedure or the BFD procedure for the deactivated cell group, the BS (or network) may configure (include), in MAC control information, beam-related configuration information indicating which beam or BWP to perform the RLM procedure or the BFD procedure, include the MAC control information in a container of the RRC message, and transmit it to the UE. In addition, the above-proposed method for configuring the beam-related configuration information may be applied. Also, configuring or switching of the BWP on which BWP to perform the RLM procedure or the BFD procedure may be indicated via the DCI of the PDCCH.

Hereinafter, in the disclosure, a dormant BWP in a next-generation mobile communication system is newly proposed, and a UE operation on each BWP when each BWP is transitioned or switched will now be proposed in detail.

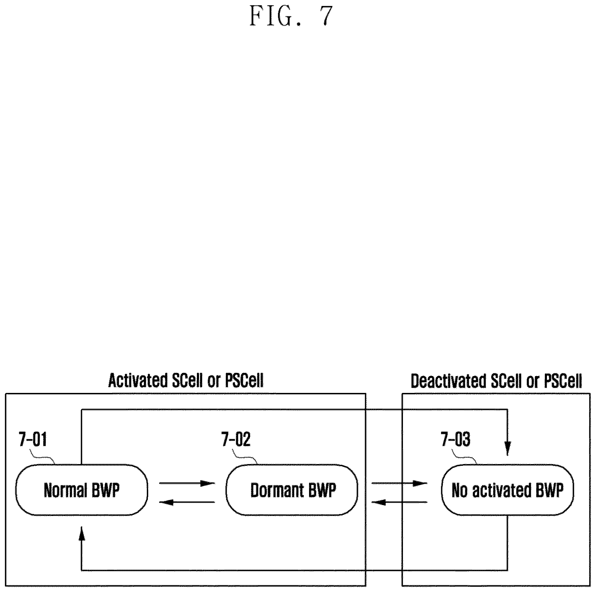

FIG. 7 is a diagram illustrating a state transition for each BWP or a BWP switching procedure according to an embodiment of the disclosure.

As shown in FIG. 7, a BWP of each cell (e.g., SCell or PSCell) of each cell group of a UE may be activated to a normal BWP 7-01 or may be activated to a dormant BWP 7-02 or may be deactivated (7-03). A BWP of each cell of each cell group of the UE may be activated to a normal BWP or a dormant BWP or deactivated to a normal BWP or a dormant BWP, in response to an indication according to configuration information of an RRC message or MAC control information or DCI of a PDCCH.

In the disclosure, a state transition operation (activation or deactivation or hibernation) for each BWP of the cell or an operation of activating the normal BWP or activating the dormant BWP or activating the first active BWP activated from dormancy or deactivating the normal BWP or the dormant BWP may be performed in response to an indication or configuration in one of the following cases.
- When the BWP state of the cell is configured by the RRC message, or when the BWP of each cell is configured by the RRC message and the dormant BWP is configured in the cell, or when the first active BWP is configured as the dormant BWP, the UE may start the cell by switching the cell to the dormant BWP or activating the dormant BWP and may perform an operation in the dormant BWP.
- When the cell activation or deactivation or hibernation MAC CE is received;
- When the MAC CE indicating to activate or deactivate the normal BWP or the first active BWP activated from dormancy or the dormant BWP is received;
- When the DCI of the PDCCH indicating to activate or deactivate the normal BWP or the first active BWP activated from dormancy or the dormant BWP is received;
- When a cell hibernation timer is not configured in the active cell and a configured cell deactivation timer expires; and
- When the BWP hibernation timer is not configured in the active BWP and a configured BWP state inactivity timer (e.g., bwpInactivityTimer) expires.

Also, a state transition operation or a dormant BWP operation method proposed in the disclosure may have characteristics below.
- The dormant BWP cannot be configured on the Spcell (Pcell or Pscell or DL BWP or UL BWP of the cell), and only the normal BWP may be configured and may always be activated. As the Spcell synchronizes and transmits and receives a primary control signal, the Spcell should always be maintained in the active state because a connection with a BS is disconnected when the BWP of the Spcell is hibernated or deactivated or is operated as the dormant BWP.
- When a PUCCH is configured for the Scell or for the BWP of the Scell, the dormant state or the dormant BWP may not be configured. Because there may be another cell to which a feedback such as HARQ ACK/NACK should be transmitted via the PUCCH, the active state or the normal BWP should be activated and used.
- Due to such characteristics, the cell deactivation timer (ScellDeactivationTimer) or the BWP hibernation timer may not be applied to the Spcell or the BWP of the Spcell and the Scell or the BWP of the SCell for which the PUCCH is configured, and may run only for other SCells.
- The cell or BWP hibernation timer (ScellHibernationTimer) may be prioritized over the cell or BWP state deactivation timer (ScellDeactivationTimer). When one value is set via the RRC message as a timer value, the same value may be applied to all the cells. Alternatively, the BS may set a different timer value for each SCell or each BWP by considering characteristics of each SCell or characteristics of each BWP.
- The cell or the BWP may basically operate in the inactive state initially when it is not indicated as active or dormant in the RRC message.

In the disclosure, a UL may indicate the UL BWP, and a DL may indicate the DL BWP. This is because only one activated or hibernated BWP may operate for each UL or each DL.

In the disclosure, when an active state or an inactive state or a dormant state is operated and cell or BWP transition or switching is performed, it may be performed in units of BWPs, and when state transition or switching occurs in units of BWPs, a BWP (DL BWP or UL BWP) indicated with state transition or switching may perform state transition or switching according to a state transition or switching indication. For example, when the BWP (DL BWP or UL BWP) is transitioned from the active state to the dormant state or is switched (or activated) to the dormant BWP, the BWP may be transitioned to the dormant state, or may be switched (or activated) to the dormant BWP.

In the disclosure, 'BWP switching' may mean that, when BWP switching is indicated by the DCI of the PDCCH and switching is indicated by a BWP identifier while allocating a downlink assignment, the DL BWP is switched to the BWP indicated by the BWP identifier, and when BWP switching is indicated by the DCI of the PDCCH and switching is indicated by a BWP identifier while allocating an UL grant, the UL BWP is switched to the BWP indicated by the BWP identifier. Also, because the DCI format of the PDCCH varies between the format for downlink assignment (format1) and the format for UL grant (format0), the UE may operate according to the DCI format even when the UL and the DL are not separately described.

The method of operating a state transition in units of BWPs (BWP-level) and a BWP operation according to each state, which are proposed in the disclosure, may be extended and applied to various embodiments. Hereinafter, embodiments to which the proposals of the disclosure are extended and applied will now be described.

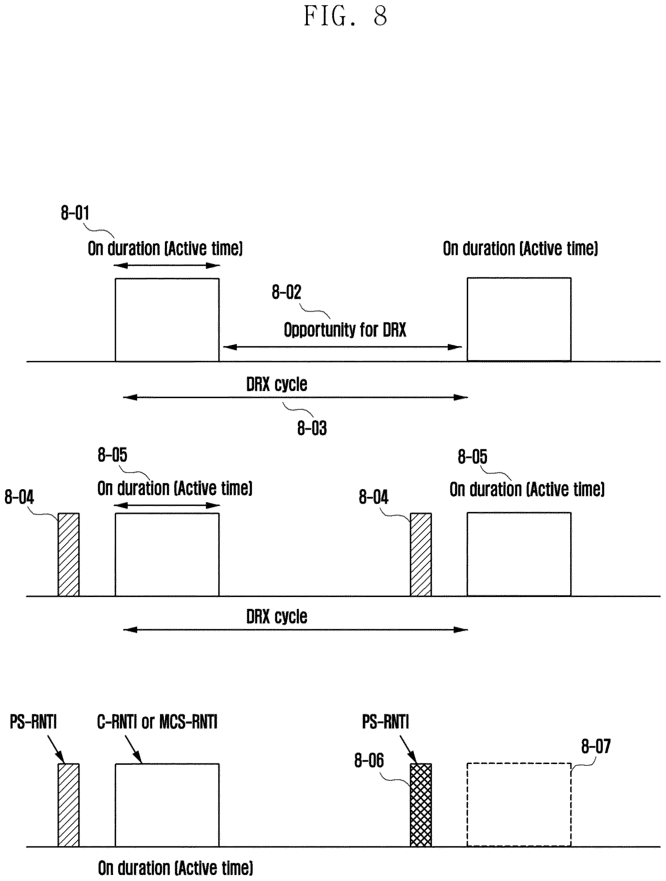

FIG. 8 is a diagram illustrating a method of configuring or operating DRX for reduction of battery power consumption of a UE according to an embodiment of the disclosure.

With reference to FIG. 8, a BS may configure, by an RRC message for the UE, a DRX mode such as a DRX cycle or start point or offset or on-duration (active time), or the like to a PCell or an SCell or a PSCell. In the disclosure, it is considered that the DRX mode is configured for the PCell or the SpCell or the PSCell.

When the DRX mode is configured for the PCell (or the SpCell or the PSCell), the UE may apply the DRX mode by considering a DRX cycle 8-03 and a DRX start time or offset. When the DRX mode is applied, the UE may monitor a PDCCH or DCI of the PDCCH which can be received on the PCell from the BS only in on-duration (or active time) 8-01 of DRX. Also, in outside active time 8-02 of the DRX mode, the UE does not monitor the PDCCH or the DCI of the PDCCH, thereby reducing battery power consumption.

As in FIG. 6, in order to further increase reduction of the battery power consumption of the UE, the BS may configure, by an RRC message, a power saving mode for the UE. If the power saving mode and the DRX mode are co-configured, the UE monitors the PDCCH in outside active time 8-02 during short time duration 8-04 configured by an RRC message before the active time 8-01 in which the UE is to monitor the PDCCH in the DRX mode, and in outside active time 8-02, the UE monitors and receives a WUS. With a bit of DCI of a PDCCH of the WUS, the BS may indicate whether the UE is to perform PDCCH monitoring or is not to perform PDCCH monitoring in next on-duration 8-05 or 8-07.

That is, the UE configured with the power saving mode or the DRX mode may monitor the WUS during the short time duration 8-04 configured by the RRC message, and if a value of the bit of the DCI of the PDCCH which is associated with the next on-duration 8-05 or 8-07 has 0 (or 1) in the received WUS, the UE may be indicated not to monitor the PDCCH in the next on-duration 8-07 or may be indicated not to monitor the PDCCH by not running, in a MAC layer, a timer corresponding to next on-duration. If a value of the bit of the DCI of the PDCCH which is associated with the next on-duration 8-05 or 8-07 has 1 (or 0) in the received WUS, the UE may be indicated to monitor the PDCCH in the next on-duration 8-05 or may be indicated to monitor the PDCCH by running, in the MAC layer, a timer corresponding to next on-duration.

Also, in on-duration, the UE may not monitor the WUS or the PDCCH for detecting the WUS.

Also, when the UE configured with the power saving mode or the DRX mode monitors the WUS during the short time duration 8-04 configured by the RRC message before every on-duration 8-05, the UE may detect a signal by identifying the PDCCH by a first RNTI identifier (e.g., PS-RNTI). The first RNTI identifier (e.g., PS-RNTI) may be configured for a plurality of UEs, and the BS may simultaneously indicate, by using the first RNTI identifier (e.g., PS-RNTI), the plurality of UEs to monitor a PDCCH or not to monitor the PDCCH in next on-duration.

Also, when the UE configured with the power saving mode or the DRX mode monitors and detects the PDCCH in the on-duration 8-05, the UE may detect a signal, based on a second RNTI (e.g., C-RNTI) or a third RNTI (e.g., MCS-C-RNTI) or a fourth RNTI (SPS-C-RNTI or CS-RNTI), which is uniquely configured for the UE by the RRC message. The second RNTI (e.g., C-RNTI) may be used to indicate normal scheduling for the UE, the third RNTI (e.g., MCS-C-RNTI) may be used to indicate a Modulation and Coding Scheme (MCS) of the UE, and the fourth RNTI (SPS-C-RNTI or CS-RNTI) may be used to indicate a periodic transport resource of the UE.

Based on the method proposed with reference to FIG. 8, the BS may indicate, by DCI of a PDCCH, a state of a cell or cell group of the UE to have activation or deactivation or hibernation in the on-duration 8-05 or the short time duration 8-04 which is configured by the RRC message. Also, the UE may perform a PDCCH monitoring procedure to receive an indication of the state of the cell or cell group in the on-duration 8-05 or the short time duration 8-04 which is configured by the RRC message. If dual connectivity is configured for the UE, the UE may monitor a PDCCH on a PCell of an MCG during the on-duration 8-05 or the short time duration 8-04 which is configured by the RRC message, DCI of the PDCCH may indicate a state of activation or deactivation or hibernation associated with a cell (SCell) of the MCG or a PSCell (or SCell) of an SCG, and thus, the UE may perform an activation procedure or deactivation procedure or hibernation procedure or BWP switching procedure associated with a cell (or a BWP). That is, the BS may indicate to the UE the state of activation or deactivation or hibernation associated with the cell (SCell) of the MCG or the PSCell (or SCell) of the SCG, by the DCI of the PDCCH on the PCell of the MCG during the on-duration 8-05 or the short time duration 8-04 which is configured by the RRC message.

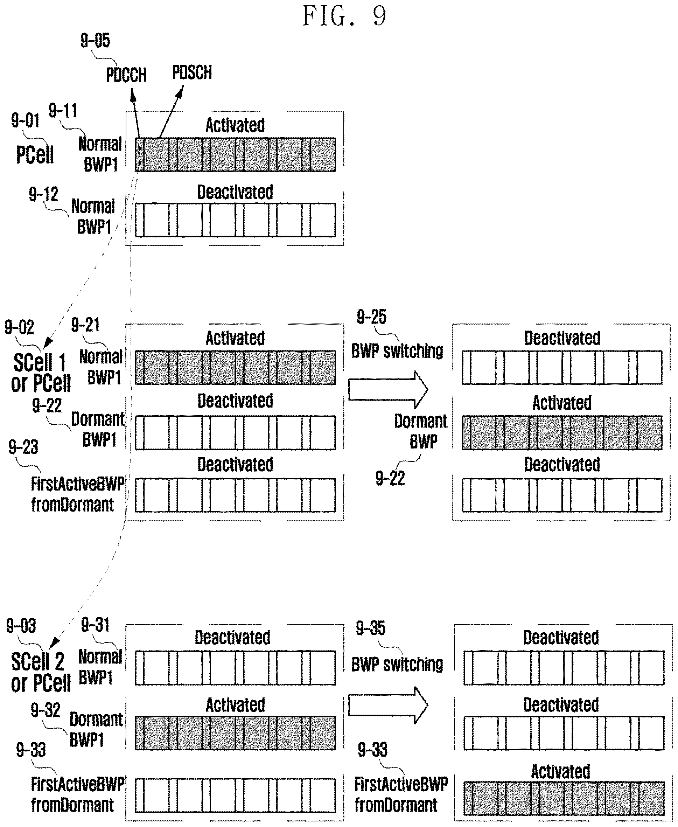

FIG. 9 is a diagram illustrating a concept of a method of operating a dormant BWP on an activated SCell or PSCell according to an embodiment of the disclosure.

With reference to FIG. 6, the BS may configure, by an RRC message, the UE with a plurality of SCells for carrier aggregation and may allocate respective SCell identifiers, and may configure a dormant BWP for each SCell or may configure a plurality of cell groups for dual connectivity and may allocate cell group identifiers. Also, with respect to each cell group or a PSCell of each cell group for the UE, the BS may configure or indicate a cell group suspension identifier and configure a dormant BWP. The BS may configure the UE with a plurality of SCells included in each SCell group, and one SCell group may include a plurality of SCells. In addition, SCell group identifiers may be respectively allocated to SCell groups, and the plurality of SCell identifiers may be configured to be included in or mapped to the SCell group identifiers, respectively. An Scell identifier value or an SCell group identifier value may be allocated a preset bit value and may have an integer value (or a natural value). Alternatively, a PSCell of each cell group may be indicated by a cell group identifier.

In FIG. 9, the BS may define a new bitmap in DCI of a PDCCH to be transmitted on a PCell, and may perform mapping such that each bit value of the bitmap may indicate each SCell identifier value or each SCell group identifier value or cell group (or secondary cell group) identifier or a PSCell (or an SCell) of a cell group (or a secondary cell group). Also, the BS may indicate, by defining each bit value, whether to switch to a dormant BWP or activate a dormant BWP with respect to an SCell or SCells included in an SCell group or a cell group (or a secondary cell group) or a PSCell (or an SCell) of the cell group (or the secondary cell group) which corresponds to a bit. Also, the BS may indicate whether to switch to a normal BWP (e.g., a first active BWP activated from hibernation) or activate a normal BWP (e.g., a first active BWP activated from hibernation) with respect to an SCell or SCells included in an SCell group or a cell group (or secondary cell group) identifier or a PSCell (or an SCell) of the cell group (or the secondary cell group) which corresponds to a bit.

In FIG. 9, after the UE receives the DCI of the PDCCH on a PCell 9-01, the UE may detect, by reading the DCI, whether there is a bitmap including an indication (e.g., switching or activation to a dormant BWP or switching or activation to a normal BWP) about a BWP of an SCell or SCell groups or an indication of suspension or resumption of a cell group (or a secondary cell group) or a PSCell (or an SCell) of the cell group (or the secondary cell group), and if there is the bitmap, the UE may switch or activate a BWP or suspend or resume a cell group according to a bit value with respect to an SCell or SCells 9-02 or 9-03 included in an SCell group or a cell group (or a secondary cell group) or a PSCell (or an SCell) of the cell group (or the secondary cell group) which is indicated by each bit of the bitmap. For example, when a bit of the bitmap indicates a first SCell (or a first SCell identifier) 9-02 or the cell group (or the secondary cell group) or the PSCell (or the SCell) of the cell group (or the secondary cell group) or when the bit indicates an SCell group (or an SCell group identifier) including the first SCell and has a value of 0 (or 1), the UE may activate a BWP (normal BWP9-21) to a dormant BWP 9-22 or may switch a current BWP to the dormant BWP 9-22 or, when the current BWP is not a dormant BWP, the UE may switch or activate the currently-active BWP (normal BWP9-21) to the dormant BWP 9-22 or may suspend or deactivate the cell group, with respect to the first SCell 9-02 or the cell group (or the secondary cell group) or the PSCell (or the SCell) of the cell group (or the secondary cell group). Alternatively, the UE may changelessly maintain a BWP of the cell group (or the secondary cell group) or the PSCell (or the SCell) of the cell group (or the secondary cell group), may apply second DRX configuration information or second SRS configuration information which is proposed in the disclosure, and may perform PDCCH monitoring with a long period or may perform SRS transmission with a long period, thereby reducing battery power consumption of the UE.

In FIG. 9, after the UE receives the DCI of the PDCCH on a PCell 9-01, the UE may detect, by reading the DCI, whether there is a bitmap including an indication (e.g., switching or activation to a dormant BWP or switching or activation to a normal BWP) about a BWP of an SCell or SCell groups or an indication of suspension or resumption of a cell group (or a secondary cell group) or a PSCell (or an SCell) of the cell group (or the secondary cell group), and if there is the bitmap, the UE may switch or activate a BWP or suspend or resume a cell group according to a bit value with respect to an SCell or SCells 9-02 or 9-03 included in an SCell group or a cell group (or a secondary cell group) or a PSCell (or an SCell) of the cell group (or the secondary cell group) which is indicated by each bit of the bitmap.

For example, when a bit of the bitmap indicates a second SCell (or a second SCell identifier) 9-03 or indicates an SCell group (or an SCell group identifier) including the second SCell or the cell group (or the secondary cell group) or the PSCell (or the SCell) of the cell group (or the secondary cell group) and has a value of 1 (or 0), if a current-active BWP for the second SCell 9-03 is a dormant BWP 9-32 or the current-active BWP is not a normal BWP or a current BWP (or cell) is activated and the current BWP is activated as the dormant BWP 9-32 (or is activated as a BWP other than a normal BWP), the UE may switch or activate a BWP of the second SCell 9-03 to a BWP (e.g., a first active BWP 9-33 activated from hibernation) configured by an RRC message (9-35) or may resume or activate the cell group.

A bit value is 1 (or 0), and thus, the UE has to switch or activate to a non-dormant BWP or to resume a cell group with respect to an SCell or SCells included in an SCell group or the cell group (or a secondary cell group) or a PSCell (or an SCell) of the cell group (or the secondary cell group which is indicated by the bit, the UE may not apply or may ignore or may not read the bit value with respect to the SCell or each SCell included in the SCell group if a state of the Scell is an inactive state or if a state of the Scell is an active state and an activated BWP is not a dormant BWP (or is a normal BWP). Alternatively, when the cell group (or the secondary cell group) or the PSCell (or the SCell) of the cell group (or the secondary cell group) is already in an active state or a resumed state, the UE may not apply or may ignore or may not read the bit value. Also, a bit value is 0 (or 1), and thus, the UE has to switch or activate to a dormant BWP or to suspend a cell group with respect to an SCell or SCells included in an SCell group or the cell group (or a secondary cell group) or a PSCell (or an SCell) of the cell group (or the secondary cell group which is indicated by the bit, the UE may not apply or may ignore or may not read the bit value with respect to the SCell or each SCell included in the SCell group if a state of the Scell is an active state and an activated BWP is a dormant BWP. Alternatively, when the cell group (or the secondary cell group) or the PSCell (or the SCell) of the cell group (or the secondary cell group) is already in a suspended state or an inactive state, the UE may not apply or may ignore or may not read the bit value.

In the disclosure, hereinafter, methods of rapidly activating a cell (an SCell or a PSCell or an SCell) are proposed.

In detail, the BS may configure, by an RRC message (RRCReconfiguration or RRCResume), first channel measurement configuration information with which the UE can rapidly measure a channel and perform reporting when the UE activates a cell. In order for the BS to temporarily many or frequently transmit a channel measurement signal to allow a UE to rapidly activate a cell group (or cell) or rapidly perform channel measurement on a cell, first channel measurement configuration information may include, in configuration information of the cell (e.g., radio resource or Temporary Reference Signal (TRS) or Synchronization Signal Block (SSB) or Channel State Information Reference Signal (CSI-RS) or Reference Signal (RS)) or information about a transport resource being transmitted (a frequency or time transport resource on which the frequent channel measurement signal is transmitted) or a duration or a count (the number of times the frequent channel measurement signal is transmitted) or a timer value (a time in which the frequent channel measurement signal is transmitted) or a time duration (duration (e.g., offset such as a time unit (slot or subframe or symbol, etc.)) in which the frequent channel measurement signal is transmitted), or the like. Also, the first channel measurement configuration information may include configuration information about a transport resource, a period, a duration, a timing, offset, or the like in which the UE has to report a measurement result.

With the first channel measurement configuration information, the BS may configure a short reporting period (or transport resource) for the UE to report a channel measurement result, or may configure a transport resource for channel measurement so that the BS can transmit many or frequent channel measurement signals (or transport resources (e.g., radio resource or TRS) to support rapid channel measurement or many signal measurement by the UE. The first channel measurement configuration information may include configuration information about a channel measurement signal for a specific UE (or UEs) on a cell or a BWP.

In addition, the first channel measurement configuration information may be differently configured for each cell or each BWP with respect to a plurality of cells or a plurality of BWPs configured by an RRC message, and beam-associated configuration information (TCI state or QCL) such as a beam direction or a beam number or a beam position may be configured together so that the UE can easily measure a transport resource for channel measurement. Also, with the first channel measurement configuration information, the BS configures a TA value (or offset value) for synchronization of a DL signal of the BS or synchronization of a UL signal of the BS, a timer (TAT) indicating validity of the TA value, or a TAT value, so that the UE may correctly perform channel measurement or channel measurement reporting. For example, the first channel measurement configuration information may include a period of a channel measurement signal, a count of a signal being transmitted, a time period in which a signal is transmitted, offset about a time in which a signal is transmitted, a time length between signals being transmitted, or the like. Alternatively, the first channel measurement configuration information may include a list of a plurality of transmittable channel measurement signals, a time transport resource (or frequency transport resource) indicating a position of a signal being transmitted, a transport resource (a time transport resource or frequency transport resource) on which a measurement result is to be reported, a period in which a measurement result is to be reported, configuration information (TCI state or QCL) about a beam for measuring channel measurement signals, or the like.

Also, the first channel measurement configuration information configured by the RRC message may include a plurality of pieces of channel measurement signal information, and with the first channel measurement configuration information, the BS indicates channel measurement signal information among the plurality of pieces of channel measurement signal information configured by the RRC message, a MAC CE, or DCI, or beam configuration information, so that the UE may perform channel measurement or channel measurement reporting by using the indicated channel measurement signal information or the indicated beam configuration information The indication may be performed by defining mapping between each configured channel measurement signal information and each of a bitmap, an index, and an identifier, and then by performing the indication based on the mapping. Alternatively, the BS configures or indicates channel measurement signal information by an RRC message or a MAC CE, so that the UE may perform channel measurement or channel measurement reporting by applying or using the configured (or indicated) channel measurement signal information.

Alternatively, when the BS configures the UE with the first channel measurement configuration information included in the RRC message, if the BS indicates, by the RRC message, activation of a cell by configuring a state of the cell as an active state in the RRC message, the UE may apply or use the first channel measurement configuration information so that the UE may rapidly measure or report a channel and thus may rapidly activate the cell. For example, when the first channel measurement configuration information or the channel measurement signal information or beam-associated configuration information which is applicable to a case where the BS may indicate, by the RRC message, activation of a cell by configuring a state of the cell as an active state in the RRC message is configured (default configuration or channel measurement signal information (beam-associated configuration information) corresponding to identifier 0 or one channel measurement signal information (beam-associated configuration information)) as separate configuration information in the RRC message, the channel measurement signal information (the beam-associated configuration information) may be used.

The first channel measurement configuration information may be configured only for DL BWP configuration information of each cell. That is, the first channel measurement configuration information may not be configured for UL BWP configuration information of each cell. This is because, only after the UE first measures a channel for a DL, the UE may report a measurement result of the channel or a cell and then may correctly receive a PDCCH so as to follow indications related to the BS.

The first channel measurement configuration information proposed in the disclosure may be initially deactivated when configured by an RRC message or after handover, and then may be activated by MAC control information or DCI information of a PDCCH or an RRC message, which is proposed in the disclosure. When configured by the RRC message, an initial state has to be an inactive state so that the BS can easily manage a cell state or a channel measurement performing procedure of the UE and can correctly perform timing as to when and how the UE is to perform channel measurement, without a processing delay problem with respect to the RRC message.

Also, an RRC message (RRCReconfiguration or RRCResume) may include or configure second channel measurement configuration information. The second channel measurement configuration information may include general channel measurement configuration information such as a transport resource or period or time duration or count of a channel measurement signal or a transport resource or period or time duration for channel measurement reporting.

Hereinafter, in the disclosure, when first channel measurement configuration information or second channel measurement configuration information is configured by an RRC message as proposed, proposed is a structure of an MAC CE or an indication method of the MAC CE by which the UE is enabled to activate a cell and rapidly measure a channel or report a measurement result based on the first channel measurement configuration information and then rapidly activate a cell. For example, a MAC CE (or an RRC message) proposed in the disclosure may indicate which cell is to be activated or deactivated among a plurality of cells (SCells) configured by the RRC message, or when a certain cell is indicated to be activated, the MAC CE (or the RRC message) indicates which measurement signal information of first channel measurement configuration information configured by the RRC message is to be applied, how a signal is to be measured (e.g., how many times a measurement of a signal transport resource is to be performed or how many signals are to be transmitted or in which time duration measurement is to be performed or on which offset determination of measurement time duration is based or in which period a signal is to be measured or on which transport resource a signal is to be measured, or the like may be indicated), how reporting is to be performed (e.g., how many times a measurement result is to be reported or in which time duration a measurement result is to be reported or on which offset determination of a transport resource for a measurement result report is based or on which transport resource a measurement result is to be reported, or the like may be indicated), such that the UE is enabled to rapidly activate a cell, based on the first channel measurement configuration information configured by the RRC message.

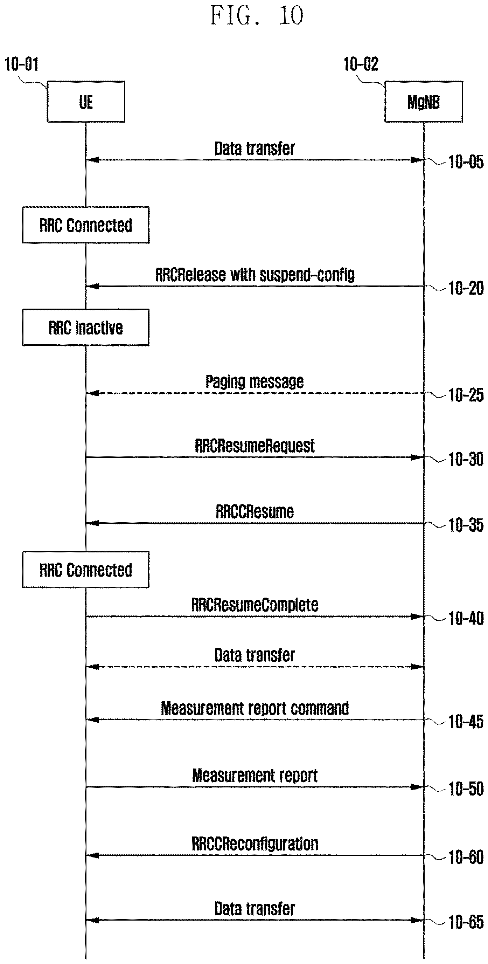

FIG. 10 is a diagram illustrating a method by which a UE in an RRC inactive mode operates according to an embodiment of the disclosure.

In the disclosure, a cell group or a cell may refer to a PCell of an MCG or an Scell of the MCG or a PSCell of an SCG or an Scell of the SCG.

In an embodiment of the disclosure, it is proposed that, even when the UE in an RRC connected mode is transitioned to an RRC inactive mode, the UE may not release or discard but may continuously store a plurality of pieces of SCell configuration information (e.g., a plurality of pieces of configuration information described or proposed with reference to FIG. 6) or a plurality of pieces of PSCell (or SCell) configuration information of a cell group (e.g., SCG) which are configured or stored for the proposed embodiments as in FIG. 6. Also, when an RRC connection resume procedure is performed, the UE in the RRC inactive mode may determine, by an indicator of an RRCResume message or an RRCReconfiguration message transmitted by a BS or via a reconfiguration procedure, whether to discard or release, or maintain and apply, or reconfigure the SCell configuration information (e.g., configuration information described or proposed with reference to FIG. 6) or the PSCell (or SCell) configuration information of the cell group (e.g., SCG) stored in the UE. Also, when the BS transmits, to the UE, an RRCRelease message including a configuration or an indicator to transition the UE to the RRC inactive mode, the BS may transmit, to the UE, the RRCRelease message including an indicator or configuration information indicating whether to discard or release, or maintain and apply, or reconfigure the SCell configuration information (e.g., configuration information described or proposed with reference to FIG. 6) or the PSCell (or SCell) configuration information of the cell group (e.g., SCG) stored in the UE. Also, the UE in the RRC inactive mode may move, and when RAN notification area (RNA) updating is performed, via the RRCRelease message transmitted by the BS to the UE, the UE may receive and apply the indicator or the configuration information indicating whether to discard or release, or maintain and apply, or reconfigure the SCell configuration information (e.g., configuration information described or proposed with reference to FIG. 6) or the PSCell (or SCell) configuration information of the cell group (e.g., SCG) stored in the UE.

In an embodiment proposed in the disclosure, in the SCell configuration information (e.g., configuration information described or proposed with reference to FIG. 6) and the PSCell (or SCell) configuration information of the cell group (e.g., SCG) of the RRC message, the BS may allow a first active BWP of DL or UL BWP configuration information of each cell to be configured as a dormant BWP, and when the UE activates each SCell, each cell group, or the PSCell of each cell group, the UE may directly operate a DL BWP or a UL BWP of each SCell, or each cell group, or the PSCell of each cell group as the dormant BWP, or may suspend or resume the cell group, thereby reducing battery power consumption of the UE.

Alternatively, in an embodiment proposed in the disclosure, in the SCell configuration information (e.g., configuration information described or proposed with reference to FIG. 6) or the PSCell (or SCell) configuration information of the cell group (e.g., SCG) of the RRC message, the BS may not configure the first active BWP of the DL or UL BWP configuration information of each cell as the dormant BWP, and when the UE activates or resumes each SCell, each cell group, or the PSCell of each cell group, the UE may always activate the DL BWP or the UL BWP of each SCell, or each cell group, or the PSCell of each cell group to the first active BWP, or may switch or activate the same to the dormant BWP in the embodiments proposed in the disclosure, or may suspend or resume the cell group, thereby reducing battery power consumption of the UE.

The proposed embodiment of the disclosure may be extended and applied to each SCell configuration information or PSCell configuration information of an MCG or an SCG of the UE for which dual connectivity is configured. That is, the SCell configuration information or the PSCell configuration information of the SCG may also be stored when the UE is transitioned to the RRC inactive mode, and the BS may transmit, to the UE, the RRC message (e.g., RRCResume, RRCReconfiguration, or RRCRelease) including the indicator or the configuration information indicating whether to discard or release, or maintain and apply, or reconfigure the SCell configuration information (e.g., configuration information described with reference to FIG. 6) or the PSCell configuration information of the MCG or SCG stored in the UE, when the BS performs the RRC connection resume procedure or transitions the UE to the RRC inactive mode.

With reference to FIG. 10, a UE 10-01 may perform a network connection with a BS 10-02 and may transmit and receive data (10-05). When the BS needs to transition the UE to an RRC inactive mode for a certain reason, the BS may transmit an RRCRelease message 10-20 to the UE and may transition the UE to the RRC inactive mode. The BS may transmit, to the UE, an RRC message (e.g., RRCRelease) including an indicator or configuration information indicating whether to discard or release, or maintain and apply, or reconfigure SCell configuration information of an MCG or an SCG (e.g., configuration information described or proposed with reference to FIG. 6) or PSCell (or SCell) configuration information of the cell group (e.g., SCG) stored in the UE. When the UE supports dual connectivity, the BS may determine whether to suspend and resume a master cell group bearer configuration or RRC configuration information or SCell configuration information of the MCG or SCG, and may determine whether to suspend and resume a secondary cell group bearer configuration and RRC configuration by asking a secondary cell BS whether to suspend and resume the same and receiving a response from the secondary cell BS (10-15). In the RRCRelease message, the BS may configure a frequency list to be measured in an RRC idle mode or an RRC inactive mode by the UE, or frequency measurement configuration information, or a frequency measurement period.

When the RRC inactive mode UE receives a paging message (10-25), needs to transmit UL data, or needs to update an RNA while moving, the UE may perform an RRC connection resume procedure.

When the UE needs to configure a connection, the UE may perform a random access procedure and may transmit an RRCResumeRequest message to the BS, and here, proposed UE operations related to the message transmission are as below (10-30).
1. The UE identifies system information, and when the system information indicates to transmit a complete terminal connection resume identifier (I-RNTI or Full resume ID), the UE prepares to transmit the message including a stored complete terminal connection resume identifier (I-RNTI). When the system information indicates to transmit a truncated terminal connection resume identifier (truncated I-RNTI or truncated resume ID), the UE configures a truncated terminal connection resume identifier (truncated resume ID) from the stored complete terminal connection resume identifier (I-RNTI) by using a certain method and prepares to transmit the message including the truncated terminal connection resume identifier.
2. The UE recovers RRC connection configuration information and security context information from stored UE context.
3. The UE updates a new KgNB security key corresponding to the MCG based on a current KgNB security key, a Next Hop (NH) value, and an NH chain counter (NCC) value received in the RRCRelease message and stored.
4. When the UE receives an SCG-counter value (or sk-counter) in the RRCRelease message, the UE updates a new SKgNB security key corresponding to the SCG based on the KgNB security key and the SCG-counter value (or sk-counter).
5. The UE derives new security keys (K RRCenc, K_RRC_int, K_UPint, and K UPenc) to be used in an integrity protection and verification procedure and an encryption and decryption procedure, by using the newly updated KgNB security key.
6. When the UE receives the SCG-counter value (or sk-counter) in the RRCRelease message, the UE derives new security keys (SKRRCenc, SK_RRC_int, SK_UPint, and SK UPenc) to be used in an integrity protection and verification procedure and an encryption and decryption procedure, by using the newly updated SKgNB security key corresponding to the SCG.
7. The UE calculates a message authentication code for integrity (MAC-I) and prepares to transmit the message including the MAC-I.
8. The UE resumes a signaling radio bearer 1 (SRB1) (the UE should resume the SRB 1 in advance because the UE will receive the RRCResume message via the SRB1 in response to the RRCReseumeRequest message to be transmitted).
9. The UE configures the RRCResumeRequest message and transmits the RRCResumeRequest message to a lower layer.
10. For all bearers except for an SRB0 corresponding to the MCG (MCG terminated RBs), an integrity protection and verification procedure may be resumed by applying the updated security keys and a previously configured algorithm, and integrity verification and protection may be applied to subsequently transmitted and received data (in order to improve the reliability and security of data subsequently transmitted and received from the SRB 1 or DRB s).
11. For all the bearers except for the SRB0 corresponding to the MCG (MCG terminated RBs), an encryption and decryption procedure may be resumed by applying the updated security keys and the previously configured algorithm, and encryption and decryption may be applied to subsequently transmitted and received data (in order to improve the reliability and security of data subsequently transmitted and received from the SRB1 or DRBs).
12. When the UE receives the SCG-counter value (or sk-counter) in the RRCRelease message, the UE may resume an integrity protection and verification procedure by applying the updated security keys and the previously configured algorithm for all bearers corresponding to the SCG (SCG terminated RBs), and may apply integrity verification and protection to subsequently transmitted and received data (in order to improve the reliability and security of data subsequently transmitted and received from the DRBs).
13. When the UE receives the SCG-counter value (or sk-counter) in the RRCRelease message, the UE may resume an encryption and decryption procedure by applying the updated security keys and the previously configured algorithm for all the bearers corresponding to the SCG (SCG terminated RBs) and may apply encryption and decryption to subsequently transmitted and received data (in order to improve the reliability and security of data subsequently transmitted and received from the DRBs).

UE operations proposed when the UE needs to configure a connection and thus, performs a random access procedure, transmits the RRCResumeRequest message to the BS, and then receives the RRCResume message as a response are as below (10-35). If the RRCResume message includes an indicator indicating the UE to report when there is a valid frequency measurement result in the RRC inactive mode, the UE may configure a frequency measurement result in an RRCResumeComplete message and may report the frequency measurement result. Also, the BS may transmit, to the UE, the RRC message (RRCResume) including the indicator or the configuration information indicating whether to discard or release, or maintain and apply, or reconfigure the SCell configuration information of the MCG or the SCG (e.g., configuration information described or proposed with reference to FIG. 6) stored in the UE.
1. When receiving the message, the UE restores a PDCP state corresponding to the MCG, resets a count value, and re-establishes PDCP layers of an SRB2 and all DRBs (MCG terminated RBs) corresponding to the MCG.
2. When receiving the SCG-counter value (or sk-counter) in the message, the UE updates a new SKgNB security key corresponding to the SCG based on a KgNB security key and the SCG-counter value (sk-counter). The UE derives new security keys (SK RRCenc, SK_RRC_int, SK UPint, and SK UPenc) to be used in an integrity protection and verification procedure and an encryption and decryption procedure, by using the newly updated SKgNB security keys corresponding to the SCG.
3. If the message includes MCG (masterCellgroup) configuration information.
   - the MCG configuration information included in the message is performed and applied. The MCG information may include configuration information about RLC layers belonging to the MCG, a logical channel identifier, and a bearer identifier.
4. If the message includes bearer configuration information (radioBearerConfig).
   - the bearer configuration information (radioBearerConfig) included in the message is performed and applied. The bearer configuration information (radioBearerConfig) may include configuration information about PDCP layers for each bearer, configuration information about SDAP layers, a logical channel identifier, and a bearer identifier.
5. If the message includes SCG (masterCellgroup) configuration information.
   - the SCG configuration information included in the message is performed and applied. The SCG information may include configuration information about RLC layers belonging to the SCG, a logical channel identifier, and a bearer identifier.
6. If the message includes secondary bearer configuration information (radioBearerConfig).
   - the secondary bearer configuration information (radioBearerConfig) included in the message is performed and applied. The secondary bearer configuration information (radioBearerConfig) may include configuration information about PDCP layers for each secondary bearer, configuration information about SDAP layers, a logical channel identifier, and a bearer identifier.
7. The UE resumes the SRB2 and all the DRBs (MCG terminated RBs) corresponding to the MCG.
8. If the message includes frequency measurement configuration information (measConfig).
   - the frequency measurement configuration information included in the message is performed and applied. That is, frequency measurement may be performed according to the configuration.
9. The UE is transitioned to the RRC connected mode.
10. The UE indicates an upper layer that a suspended RRC connection has been resumed.
11. Then, the UE configures and transmits the RRCResumeComplete message to a lower layer (10-40).

When the UE has bearer configuration information and UE context information for a suspended SCG, the UE may perform frequency measurement based on the system information or the frequency configuration information configured by the RRCRelease message or the RRCResume message, and when there is a valid result, in order to indicate that there is the valid result, the UE may transmit the RRCResumeComplete message including the indicator. When the BS receives the indicator, if carrier aggregation or dual connectivity needs to be resumed, the BS may indicate the UE to report the frequency measurement result (10-45) and may receive the frequency measurement result, or may receive the frequency measurement result in the RRCResumeComplete message (10-50).

When the BS receives the frequency measurement result, the BS may ask the secondary cell BS whether to resume bearer information for the suspended SCG, may perform determination by receiving a response thereto, and may transmit an RRCReconfiguration message (10-60) to the UE to indicate whether to resume or release bearers for the SCG. Also, the BS may transmit, to the UE, the RRC message (e.g., RRCReconfiguration message) (10-60) including the indicator or the configuration information or data (10-65) indicating whether to discard or release, or maintain and apply, or reconfigure the SCell configuration information (e.g., configuration information described or proposed with reference to FIG. 6) of the MCG or the SCG stored in the UE.

In an embodiment proposed with reference to FIG. 10 of the disclosure, in the SCell configuration information (e.g., configuration information described or proposed with reference to FIG. 6) or the PSCell (or SCell) configuration information of the cell group (e.g., SCG) of the RRC message (e.g., RRCRelease, RRCResume, or RRCReconfiguartion), the BS may allow a first active BWP of DL or UL BWP configuration information of each cell to be configured as a dormant BWP, and when the UE activates each SCell or the PSCell of each cell group (SCG), the BS may directly operate a DL BWP or a UL BWP of each SCell or the PSCell as the dormant BWP, or may suspend or resume the cell group, thereby reducing battery power consumption of the UE. For example, for each SCell or each PSCell, when an SCell state is configured as the active state, or a cell group state is configured as the active state, or the suspended state, or the deactivated state, or an indication to suspend or resume the cell group is configured in the SCell configuration information or the cell group configuration information of the RRC message (e.g., RRCRelease or RRCResume or RRCReconfiguartion), or when an indication to activate the SCell is received in MAC control information according the disclosure, the SCell or the PSCell may be activated, or resumed, or suspended, and the DL BWP or the UL BWP of the SCell or the PSCell may be directly activated as a dormant BWP when the SCell or the PSCell is activated, such that battery power consumption of the UE may be reduced.

When the RRC inactive mode UE is transitioned to the RRC connected mode and recovers or applies or reconfigures the SCell configuration information or the PSCell (or SCell) configuration information of the cell group (e.g., SCG) of the disclosure, switching or activation between BWPs or activation or application of a dormant BWP may be performed for each activated SCell or PSCell (or SCell) of the cell group. Also, embodiments of the disclosure may be extended and applied even when handover is performed.

In the disclosure, when the UE receives an indicator indicating to suspend or resume or activate or deactivate a cell group or a PSCell of the cell group, a PHY layer or a MAC layer receiving the indication may transmit the indication to an upper layer (e.g., MAC layer or RLC layer or PDCP layer or RRC layer). When the upper layer receives the indication (e.g., to suspend or resume or activate or deactivate the cell group) from the lower layer, the upper layer may perform a procedure of a protocol layer for cell group suspension or resumption or activation or deactivation, the procedure corresponding to the indication. Alternatively, as in embodiments of the disclosure, when an indicator indicating to suspend or resume or activate or deactivate a cell group or a PSCell of the cell group is received in an RRC message, an RRC layer receiving the indication may transmit the indication to a lower layer (e.g., PHY layer or MAC layer or RLC layer or PDCP layer). When the lower layer receives the indication (e.g., to suspend or activate or deactivate the cell group) from the upper layer (e.g., RRC layer), the lower layer may perform a procedure of a protocol layer for cell group suspension or resumption or activation or deactivation, the procedure corresponding to the indication.

Various embodiments may be configured and operated by combining or extending embodiments proposed in the disclosure.

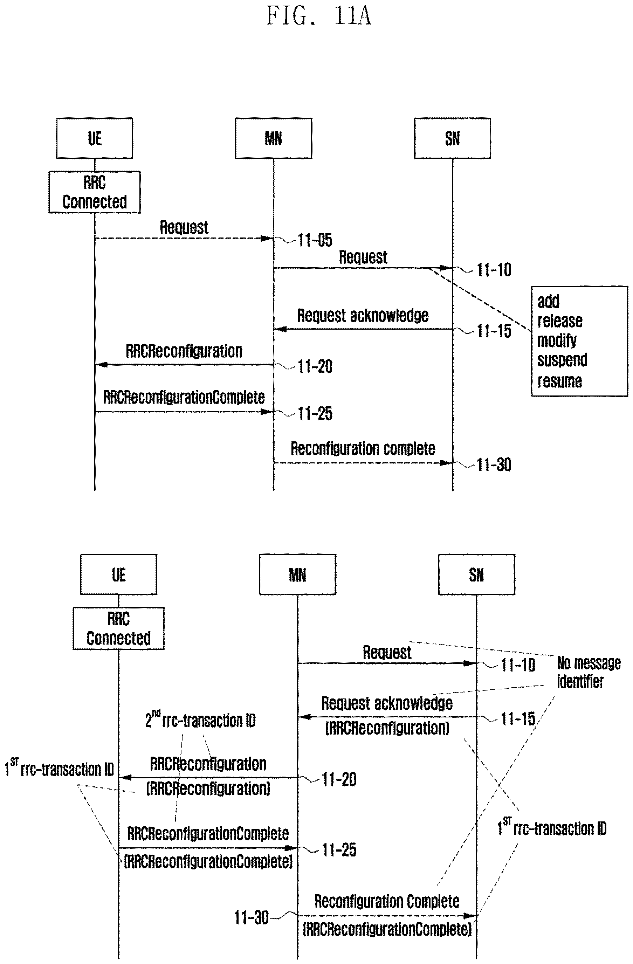

FIG. 11A is a flowchart of a signaling procedure for configuring or releasing dual connectivity, or activating or resuming or suspending or deactivating an SCG configured with dual connectivity, in a next-generation wireless communication system, according to an embodiment of the disclosure.

In FIG. 11A, a first signaling procedure for configuring or releasing dual connectivity, or activating or resuming or suspending or deactivating an SCG configured with dual connectivity is as below.

In FIG. 11A, a UE may configure an RRC connection with a network or a BS as shown in FIG. 6 of the disclosure, and may perform data transmission or reception with the BS (e.g., MCG, master node (MN), or cells (PCells or SCells) of MCG).

The BS may configure dual connectivity for the UE for a certain reason (e.g., when a high data rate is required, at a request of the UE (request 11-05), or when a high QoS requirement should be satisfied). For example, the UE may transmit, to the BS, a request to configure or release, or activate or deactivate, or resume or suspend dual connectivity, a cell group (e.g., SCG), or a cell, and a message of the request may include a frequency (or channel) measurement result report or a cell group identifier or cell identifiers or measurement results (request 11-05). Alternatively, the BS may determine whether to configure or release or add or deactivate or activate or resume or modify or reconfigure or suspend dual connectivity, a cell group (e.g., SCG), or a cell, by considering the amount of DL (or UL) data or the amount of buffer.

A master BS (MN or MCG) may receive a frequency or channel measurement report for a frequency or a channel received from the UE, and may determine a secondary BS (secondary node (SN) or SCG) for configuring dual connectivity, based on the measurement report. Alternatively, the master BS may determine whether to configure or release or add or deactivate or activate or resume or modify or reconfigure or suspend dual connectivity or a cell group (e.g., SCG) or a cell, by considering the amount of DL (or UL) data or the amount of buffer. In order to configure or release or add or deactivate or activate or resume or modify or reconfigure or suspend dual connectivity or a cell group (e.g., SCG) or a cell to the determined secondary BS, the master BS may transmit, to the secondary BS, a request message for requesting to configure or add to the SCG of the UE through an Xn interface (e.g., interface between BSs) or an Sn interface (interface between a BS and an AMF or a UMF, or interface between BSs) (request 11-10).

In order to configure or release or add or deactivate or activate or resume or modify or reconfigure or suspend dual connectivity or a cell group (e.g., SCG) or a cell for the secondary BS, each separate new request message may be defined and used, and in another method, and a new indicator may be defined in an existing message (e.g., SN addition request message or SN modification request message or SN release request message) to indicate (or request) to configure or release or add or deactivate or activate or resume or modify or reconfigure or suspend a cell group (e.g., SCG) or a cell. The request message may include information such as cell group configuration information (e.g., MCG configuration information) currently configured for the UE or bearer configuration information or capability information of the UE or frequency (or channel) measurement result information of the UE, and by With reference to the above information, the secondary BS may configure SCG configuration information or bearer configuration information to correspond to UE capability or not to exceed UE capability or to match bearer configuration information of the MCG when the SCG is configured for the UE.

When the secondary BS (the SCG) having received the request 11-10 rejects the request message, the secondary BS may configure a rejection message and may transmit the rejection message to the master BS through the Xn interface (e.g., interface between BSs) or the Sn interface (interface between a BS and an AMF or a UMF, or interface between BSs) (request acceptance message 11-15). If the secondary BS accepts the request message, the secondary BS may transmit a request acceptance message including configuration information or an indicator for configuring or releasing or adding or deactivating or activating or resuming or modifying or reconfiguring or suspending dual connectivity or a cell group (e.g., SCG) or a cell through the Xn interface (e.g., interface between BSs) or the Sn interface (interface between a BS and an AMF or a UMF, or interface between BSs) to the master BS (11-15).

The request acceptance message may include at least some of a plurality of pieces of information below.
- The same identifier as a message identifier included in the request message, or an indicator indicating that a request in the request message is accepted.
- Configuration information or indicator (e.g., configuration information or indicator for the MCG) for configuring or releasing or adding or deactivating or activating or resuming or modifying or reconfiguring or suspending dual connectivity or a cell group (e.g., SCG) or a cell.
- First RRC message (e.g., RRCReconfiguration message) including configuration information or an indicator for configuring or releasing or adding or deactivating or activating or resuming or modifying or reconfiguring or suspending dual connectivity a cell group (e.g., SCG) or a cell.
- The first RRC message may include at least some of a plurality of pieces of information below.
   ■ First RRC message identifier (e.g., rrc-Transaction identifier) for identifying the first RRC message. Because the UE and the BS (e.g., secondary BS) transmit or receive a plurality of RRC messages therebetween, an identifier for identifying each RRC message may be included in the RRC message. For example, the same first RRC identifier may be included in an RRC message (e.g., RRCReconfiguration) transmitted by a transmitting end, or an RRC message (e.g., RRCReconfigurationComplete) corresponding to the RRC message (e.g., RRCReconfiguration) transmitted by a receiving end, or an RRC message corresponding to the RRC message transmitted by the transmitting end.
   ■ Configuration information or an indicator (e.g., configuration information or an indicator for the UE) for configuring or releasing or adding or deactivating or activating or resuming or modifying or reconfiguring or suspending dual connectivity or a cell group (e.g., SCG) or a cell;
   ■ Indicator indicating a state of a cell group (e.g., active or inactive or suspended or resumed); and
   ■ Cell group identifier for identifying cell groups. The cell group identifier may be allocated by the master BS, or one identifier from among already preset identifiers may be allocated by the secondary BS.
   ■ Cell group or cell configuration information; and
   ■ Bearer configuration information. For example, indicator information indicating an operation of a protocol layer (e.g., SDAP layer or PDCP layer or RLC layer or MAC layer) of each bearer (e.g., PDCP suspension indicator or PDCP reestablishment indicator or PDCP data recovery indicator or RLC reestablishment indicator or MAC partial reset indicator or MAC reset indicator or indicator triggering new operation).
   ■ If configuration information or an indicator for configuring or adding or activating or resuming or modifying or reconfiguring dual connectivity or a cell group (e.g., SCG) or a cell is included, a first indicator (e.g., mobilityControlInfor or ReconfigurationWithSync) may also be included. However, when configuration information or an indicator for releasing or deactivating or reconfiguring or suspending dual connectivity or a cell group (e.g., SCG) or a cell is included, the first indicator (e.g., mobilityControlInfor or ReconfigurationWithSync) may not be included. The first indicator may be an indicator to trigger a random access procedure in the cell group or the cell, or an indicator to perform signal synchronization with a new cell, or an indicator indicating to perform frequency shift of the UE, or an indicator indicating to modify the cell group (or cell).
   ■ If configuration information or an indicator for configuring or adding or activating or resuming or modifying or reconfiguring dual connectivity or a cell group (e.g., SCG) or a cell is included, random access configuration information may also be included. However, when configuration information or an indicator for releasing or deactivating or reconfiguring or suspending dual connectivity or a cell group (e.g., SCG) or a cell is included, the random access configuration information may not be included. The random access configuration information may include random access transport resource information (time or frequency transport resource) for preamble transmission for the cell group or the cell or designated preamble information for the cell group or cell.
   ■ Time information indicating when to activate or resume or deactivate or suspend dual connectivity, a cell group (e.g., SCG) or a cell (PSCell or SCG SCell) (e.g., information indicating a timing (e.g., X), a time unit, a subframe, a time slot, or a symbol unit, for example, when the message is received in an nth time unit, time information indicating whether to activate or resume or deactivate or suspend a cell in an n+Xth time unit);
   ■ First channel measurement configuration information for each cell or each BWP;
   ■ Second channel measurement configuration information for each cell or each BWP;
   ■ Indicator indicating addition of cell group configuration or an indicator (ReconfigurationWithSync) indicating cell group modification or an indicator (ReconfigurationWithSync or newly defined indicator) indicating a random access procedure;
   ■ Indicator (ReconfigurationWithSync or newly defined indicator) indicating whether to activate a cell group by performing a random access procedure or to activate the cell group without the random access procedure, when activation of the cell group; and
   ■ Radio Resource Management (RRM) configuration information or frequency measurement configuration information or configuration information of separate RRM to be applied or performed to deactivate a cell group or frequency measurement configuration information (e.g., frequency measurement configuration information (Reduced or Relaxed RRM configuration information simplified for reduction of battery power consumption).
   ■ Configuration information for RLM or configuration information for RLM to be applied or performed to deactivate a cell group. For example, the configuration information for RLM or the configuration information for RLM to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for RLM or the configuration information for RLM to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for RLM or the configuration information for RLM to be applied or performed to deactivate a cell group may include configuration information of an SSB or CSI-RS or RS to be measured, transport resource information (e.g., PUCCH configuration information (e.g., SR information or specific transport resource) or frequency transport resource or time transport resource) on which a result can be reported when a beam failure occurs. Also, the configuration information may include BWP configuration information (e.g., may be indicated as a BWP identifier) indicating on which BWP the RLM procedure is to be performed. Alternatively, when a cell group is in an inactivate state, the UE may perform the RLM procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the RLM procedure on a BWP that was last (or previously) activated before the cell group is deactivated, so that a connected state with respect to the cell group may be continuously maintained (e.g., a case where BWP configuration information indicating on which BWP the RLM procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the RLM procedure is to be performed is not configured when activation of the cell group, the UE may perform the RLM procedure on the BWP that was last (or previously) activated. Also, the configuration information may include beam-associated configuration information (which may be indicated as a BWP identifier or TCI state or QCL configuration information) indicating on which beam the RLM procedure is to be performed. Alternatively, when the cell group is in an inactivate state, the UE may perform the RLM procedure on a beam (e.g., TCI state or QCL configuration information) configured by the RRC message or may perform the RLM procedure by activating the beam, and may early monitor the beam to be activated to activate the cell group, so that latency in activation of the cell group may be minimized. Alternatively, when a state of the cell group is configured as an inactive state (or an active state), the UE may perform the RLM procedure on a beam that was last (or previously) activated before the cell group is deactivated, so that a connected state with respect to the cell group may be continuously maintained (e.g., a case where beam-associated configuration information indicating on which beam the RLM procedure is to be performed is not configured), or when the UE activates the cell group, the UE may perform an activation procedure on a beam configured by the RRC message. If the beam-associated configuration information indicating on which beam the RLM procedure is to be performed is not configured when activation of the cell group, the UE may perform the RLM procedure on the beam that was last (or previously) activated.
   ■ Configuration information for a BFD procedure or BFD or configuration information for BFD to be applied or performed to deactivate a cell group. For example, the configuration information for a BFD procedure or BFD or the configuration information for BFD to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for a BFD procedure or BFD or the configuration information for BFD to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for a BFD procedure or BFD or the configuration information for BFD to be applied or performed to deactivate a cell group may include configuration information of an SSB or CSI-RS or RS to be measured, or when a beam failure occurs, transport resource information (e.g., PUCCH configuration information (e.g., SR information or specific transport resource) or frequency transport resource or time transport resource) on which a result can be reported. Also, the configuration information may include BWP configuration information (e.g., may be indicated as a BWP identifier) indicating on which BWP the BFD procedure is to be performed). Alternatively, when a cell group is in an inactivate state, the UE may perform the BFD procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the BFD procedure on a BWP that was last (or previously) activated before the cell group is deactivated, so that a connected state with respect to the cell group may be continuously maintained (e.g., a case where BWP configuration information indicating on which BWP the BFD procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the BFD procedure is to be performed is not configured when activation of the cell group, the UE may perform the BFD procedure on the BWP that was last (or previously) activated. Also, the configuration information may include beam-associated configuration information (which may be indicated as a BWP identifier or TCI state or QCL configuration information) indicating on which beam the BFD procedure is to be performed. Alternatively, when the cell group is in an inactivate state, the UE may perform the BFD procedure on a beam (e.g., TCI state or QCL configuration information) configured by the RRC message, so that the beam to be activated to activate the cell group may be early monitored, and thus, latency in activation of the cell group may be minimized. Alternatively, when a state of the cell group is configured as an inactive state (or an active state), the UE may perform the BFD procedure on a beam that was last (or previously) activated before the cell group is deactivated, so that a connected state with respect to the cell group may be continuously maintained (e.g., a case where beam-associated configuration information indicating on which beam the BFD procedure is to be performed is not configured), or when the UE activates the cell group, the UE may perform an activation procedure on a beam configured by the RRC message. If the beam-associated configuration information indicating on which beam the BFD procedure is to be performed is not configured when activation of the cell group, the UE may perform the BFD procedure on the beam that was last (or previously) activated.
   ■ SDAP layer configuration information (sdap-config): The SDAP layer configuration information may be configured for each bearer and may include a plurality of pieces of information below. The SDAP layer configuration information may be configuration information for determining, by an NR BS or an E-UTRA when connected to a 5G core (5GC), how to map QoS flows to bearers (DRBs) or whether a UL (or DL) SDAP header is existed.
   ◆ PDU session identifier (pdu-Session): The PDU session identifier may indicate a PDU session of QoS flows mapped to a bearer.
   ◆ Indicator indicating existence or non-existence of DL SDAP header (sdap-HeaderDL): This indicator may indicate whether a SDAP header exists or does not exists with respect to DL data of a bearer. A value of the indicator indicating existence or non-existence of a DL SDAP header cannot be changed after the bearer is set.
   ◆ Indicator indicating existence or non-existence of UL SDAP header (sdap-HeaderUL): This indicator may indicate whether a SDAP header exists or does not exists with respect to UL data of a bearer. When the bearer is set as a default bearer, a network may configure the indicator indicating existence or non-existence of a UL SDAP header to indicate existence of the SDAP header with respect to the UL data.
   ◆ Indicator indicating default bearer (defaultDRB): This indicator may indicate whether a set bearer (or DRB) is a default bearer of this PDU session. Only one bearer among bearers (or instances) belonging to the same PDU session (or having the same PDU session identifier value) may be configured to have an indicator value of TRUE for indication of the default bearer, and other bearers may be configured to have FALSE. That is, only one default bearer may be configured for one PDU session.
   ◆ Configuration information for adding QoS flow mapping information (mappedQoS-FlowsToAdd): This may indicate a list of QoS Flow Identifiers (QFIs) of UL QoS flows of a PDU session which are additionally mapped to a bearer. One QFI identifier value may be configured by being included one time in a plurality of pieces of SDAP layer configuration information having the same PDU session identifier value among all SDAP layer configuration information configured for a UE. A QFI identifier of a QoS flow to be remapped when the QoS flow remapping is configured may be configured by being included only in the configuration information for adding QoS flow mapping information (mappedQoS-FlowsToAdd) of SDAP layer configuration information corresponding to a new bearer (or a bearer to be newly mapped), and is not included in configuration information for releasing QoS flow mapping information (mappedQoS-FlowsToRelease) corresponding to an old bearer (or a previously-mapped bearer).
   ◆ Configuration information for releasing QoS flow mapping information (mappedQoS-FlowsToRelease): This may indicate to a bearer a list of QoS Flow Identifiers (QFIs) of QoS flows of a PDU session which are released from existing QoS Flows mapped to the bearer.

When the MCG receives a request acceptance message 11-15, the MCG may identify the request acceptance message 11-15, and may transmit, to the UE, a second RRC message (e.g., RRCReconfiguration) including a first RRC message included in a request acceptance message (e.g., the request acceptance message 11-15) (11-20). The second RRC message may include at least some of a plurality of pieces of information below.
- Second RRC message identifier (e.g., rrc-Transaction identifier) for identifying the first RRC message. Because the UE and the BS (e.g., secondary BS) transmit or receive a plurality of RRC messages therebetween, an identifier for identifying each RRC message may be included in the RRC message. For example, the same second RRC identifier may be included in an RRC message (e.g., RRCReconfiguration) transmitted by a transmitting end, or an RRC message (e.g., RRCReconfigurationComplete) corresponding to the RRC message (e.g., RRCReconfiguration) transmitted by a receiving end, or an RRC message corresponding to the RRC message transmitted by the transmitting end.
- The request acceptance message 11-15 may include at least some of a plurality of pieces of information below.
- Configuration information or an indicator (e.g., configuration information or an indicator for the UE) for configuring or releasing or adding or deactivating or activating or resuming or modifying or reconfiguring or suspending dual connectivity or a cell group (e.g., SCG) or a cell;
- Indicator indicating a state of a cell group (e.g., active or inactive or suspended or resumed); and
- Cell group identifier for identifying cell groups. The cell group identifier may be allocated by the master BS, or one identifier from among already preset identifiers may be allocated by the secondary BS.
- Cell group or cell configuration information; and
- Bearer configuration information. For example, indicator information indicating an operation of a protocol layer (e.g., SDAP layer or PDCP layer or RLC layer or MAC layer) of each bearer (e.g., PDCP suspension indicator or PDCP reestablishment indicator or PDCP data recovery indicator or RLC reestablishment indicator or MAC partial reset indicator or MAC reset indicator or indicator triggering new operation).
- If configuration information or an indicator for configuring or adding or activating or resuming or modifying or reconfiguring dual connectivity or a cell group (e.g., SCG) or a cell is included, a first indicator (e.g., mobilityControlInfor or ReconfigurationWithSync) may also be included. However, when configuration information or an indicator for releasing or deactivating or reconfiguring or suspending dual connectivity or a cell group (e.g., SCG) or a cell is included, the first indicator (e.g., mobilityControlInfor or ReconfigurationWithSync) may not be included. The first indicator may be an indicator to trigger a random access procedure in the cell group or the cell, or an indicator to perform signal synchronization with a new cell, or an indicator indicating to perform frequency shift of the UE, or an indicator indicating to modify the cell group (or cell). In another method, the UE may perform PDCCH monitoring in the indicated or configured cell group or cell, and may trigger and perform a random access procedure according to an indication indicated in the PDCCH. For example, an upper layer (e.g., RRC layer) may transmit an indicator to trigger a random access procedure to a lower layer (e.g., MAC layer).
- If configuration information or an indicator for configuring or adding or activating or resuming or modifying or reconfiguring dual connectivity or a cell group (e.g., SCG) or a cell is included, random access configuration information may also be included. When configuration information or an indicator for releasing, deactivating, reconfiguring, or suspending dual connectivity, a cell group (e.g., SCG), or a cell is included, the random access configuration information may not be included. The random access configuration information may include random access transport resource information (time or frequency transport resource) for preamble transmission for the cell group or the cell or designated preamble information for the cell group or cell.
- Time information indicating when to activate or resume or deactivate or suspend dual connectivity or a cell group (e.g., SCG) or a cell (PSCell or SCG SCell) (e.g., information indicating a timing (e.g., X), a time unit, a subframe, a time slot, or a symbol unit, for example, when the message is received in an nth time unit, time information indicating whether to activate or resume or deactivate or suspend a cell in an n+Xth time unit);
- First channel measurement configuration information for each cell or each BWP;
- Second channel measurement configuration information for each cell or each BWP;
- Indicator indicating addition of cell group configuration or an indicator (ReconfigurationWithSync) indicating cell group modification or an indicator (ReconfigurationWithSync or newly defined indicator) indicating a random access procedure;
- Indicator (ReconfigurationWithSync or newly defined indicator) indicating whether to activate a cell group by performing a random access procedure or to activate the cell group without the random access procedure, when activation of the cell group;
- Radio Resource Management (RRM) configuration information or frequency measurement configuration information or configuration information of separate RRM to be applied or performed to deactivate a cell group or frequency measurement configuration information (e.g., frequency measurement configuration information (Reduced or Relaxed RRM configuration information simplified for reduction of battery power consumption); and
- Configuration information for RLM or configuration information for RLM to be applied or performed to deactivate a cell group. For example, the configuration information for RLM or the configuration information for RLM to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for RLM or the configuration information for RLM to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for RLM or the configuration information for RLM to be applied or performed to deactivate a cell group may include configuration information of an SSB or CSI-RS or RS to be measured, transport resource information (e.g., PUCCH configuration information (e.g., SR information or specific transport resource) or frequency transport resource or time transport resource) on which a result can be reported when a beam failure occurs. Also, the configuration information may include BWP configuration information (e.g., may be indicated as a BWP identifier) indicating on which BWP the RLM procedure is to be performed. Alternatively, when a cell group is in an inactivate state, the UE may perform the RLM procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the RLM procedure on a BWP that was last (or previously) activated before the cell group is deactivated, so that a connected state with respect to the cell group may be continuously maintained (e.g., a case where BWP configuration information indicating on which BWP the RLM procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the RLM procedure is to be performed is not configured when activation of the cell group, the UE may perform the RLM procedure on the BWP that was last (or previously) activated. Also, the configuration information may include beam-associated configuration information (which may be indicated as a BWP identifier or TCI state or QCL configuration information) indicating on which beam the RLM procedure is to be performed. Alternatively, when the cell group is in an inactivate state, the UE may perform the RLM procedure on a beam (e.g., TCI state or QCL configuration information) configured by the RRC message or may perform the RLM procedure by activating the beam, and may early monitor the beam to be activated to activate the cell group, so that latency in activation of the cell group may be minimized. Alternatively, when a state of the cell group is configured as an inactive state (or an active state), the UE may perform the RLM procedure on a beam that was last (or previously) activated before the cell group is deactivated, so that a connected state with respect to the cell group may be continuously maintained (e.g., a case where beam-associated configuration information indicating on which beam the RLM procedure is to be performed is not configured), or when the UE activates the cell group, the UE may perform an activation procedure on a beam configured by the RRC message. If the beam-associated configuration information indicating on which beam the RLM procedure is to be performed is not configured when activation of the cell group, the UE may perform the RLM procedure on the beam that was last (or previously) activated.
- Configuration information for a BFD procedure or BFD or configuration information for BFD to be applied or performed to deactivate a cell group. For example, the configuration information for a BFD procedure or BFD or the configuration information for BFD to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for a BFD procedure or BFD or the configuration information for BFD to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for a BFD procedure or BFD or the configuration information for BFD to be applied or performed to deactivate a cell group may include configuration information of an SSB or CSI-RS or RS to be measured, or when a beam failure occurs, transport resource information (e.g., PUCCH configuration information (e.g., SR information or specific transport resource) or frequency transport resource or time transport resource) on which a result can be reported. Also, the configuration information may include BWP configuration information (e.g., may be indicated as a BWP identifier) indicating on which BWP the BFD procedure is to be performed). Alternatively, when a cell group is in an inactivate state, the UE may perform the BFD procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the BFD procedure on a BWP that was last (or previously) activated before the cell group is deactivated, so that a connected state with respect to the cell group may be continuously maintained (e.g., a case where BWP configuration information indicating on which BWP the BFD procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the BFD procedure is to be performed is not configured when activation of the cell group, the UE may perform the BFD procedure on the BWP that was last (or previously) activated. Also, the configuration information may include beam-associated configuration information (which may be indicated as a BWP identifier or TCI state or QCL configuration information) indicating on which beam the BFD procedure is to be performed. Alternatively, when the cell group is in an inactivate state, the UE may perform the BFD procedure on a beam (e.g., TCI state or QCL configuration information) configured by the RRC message, so that the beam to be activated to activate the cell group may be early monitored, and thus, latency in activation of the cell group may be minimized. Alternatively, when a state of the cell group is configured as an inactive state (or an active state), the UE may perform the BFD procedure on a beam that was last (or previously) activated before the cell group is deactivated, so that a connected state with respect to the cell group may be continuously maintained (e.g., a case where beam-associated configuration information indicating on which beam the BFD procedure is to be performed is not configured), or when the UE activates the cell group, the UE may perform an activation procedure on a beam configured by the RRC message. If the beam-associated configuration information indicating on which beam the BFD procedure is to be performed is not configured when activation of the cell group, the UE may perform the BFD procedure on the beam that was last (or previously) activated.
- SDAP layer configuration information (sdap-config): The SDAP layer configuration information may be configured for each bearer and may include a plurality of pieces of information below. The SDAP layer configuration information may be configuration information for determining, by an NR BS or an E-UTRA when connected to a 5G core (5GC), how to map QoS flows to bearers (DRBs) or whether UL (or DL) SDAP header is existed.
   ■ PDU session identifier (pdu-Session): The PDU session identifier may indicate a PDU session of QoS flows mapped to a bearer.
   ■ Indicator indicating existence or non-existence of DL SDAP header (sdap-HeaderDL): This indicator may indicate whether a SDAP header exists or does not exists with respect to DL data of a bearer. A value of the indicator indicating existence or non-existence of a DL SDAP header cannot be changed after the bearer is set.
   ■ Indicator indicating existence or non-existence of UL SDAP header (sdap-HeaderUL): This indicator may indicate whether a SDAP header exists or does not exists with respect to UL data of a bearer. When the bearer is set as a default bearer, a network may configure the indicator indicating existence or non-existence of a UL SDAP header to indicate existence of the SDAP header with respect to the UL data.
   ■ Indicator indicating default bearer (defaultDRB): This indicator may indicate whether a set bearer (or DRB) is a default bearer of this PDU session. Only one bearer among bearers (or instances) belonging to the same PDU session (or having the same PDU session identifier value) may be configured to have an indicator value of TRUE for indication of the default bearer, and other bearers may be configured to have FALSE. That is, only one default bearer may be configured for one PDU session.
   ■ Configuration information for adding QoS flow mapping information (mappedQoS-FlowsToAdd): This may indicate a list of QoS Flow Identifiers (QFIs) of UL QoS flows of a PDU session which are additionally mapped to a bearer. One QFI identifier value may be configured by being included one time in a plurality of pieces of SDAP layer configuration information having the same PDU session identifier value among all SDAP layer configuration information configured for a UE. A QFI identifier of a QoS flow to be remapped when the QoS flow remapping is configured may be configured by being included only in the configuration information for adding QoS flow mapping information (mappedQoS-FlowsToAdd) of SDAP layer configuration information corresponding to a new bearer (or a bearer to be newly mapped), and is not included in configuration information for releasing QoS flow mapping information (mappedQoS-FlowsToRelease) corresponding to an old bearer (or a previously-mapped bearer).
   ■ Configuration information for releasing QoS flow mapping information (mappedQoS-FlowsToRelease): This may indicate, to a bearer, a list of QoS Flow Identifiers (QFIs) of QoS flows of a PDU session which are released from existing QoS Flows mapped to the bearer.

When the UE receives the second RRC message 11-20, the UE may read and identify the second RRC message or may read information (e.g., a first RRC message included in the second RRC message) included in the second RRC message, and may configure or add or modify or resume or suspend or deactivate dual connectivity or a cell group (e.g., SCG).

Also, when a first indicator to trigger a random access procedure is included in the second RRC message or the first RRC message, the UE may trigger the random access procedure for the configured or indicated cell group or cell. When the random access procedure is performed, if there is random access information in the RRC message or if there is stored random access information, the UE may perform a random access procedure (e.g., CFRA procedure (e.g., 4-step random access or 2-step random access)), based on the stored random access information, or the random access information received in the RRC message, or system information. When there is no random access information in the RRC message, the UE may perform a random access procedure (e.g., CBRA procedure (e.g., 4-step random access or 2-step random access)). Alternatively, the UE may perform PDCCH monitoring in the indicated or configured cell group or cell, and may trigger and perform a random access procedure according to an indication indicated in the PDCCH. For example, an upper layer (e.g., RRC layer) may transmit an indicator to trigger a random access procedure to a lower layer (e.g., MAC layer).

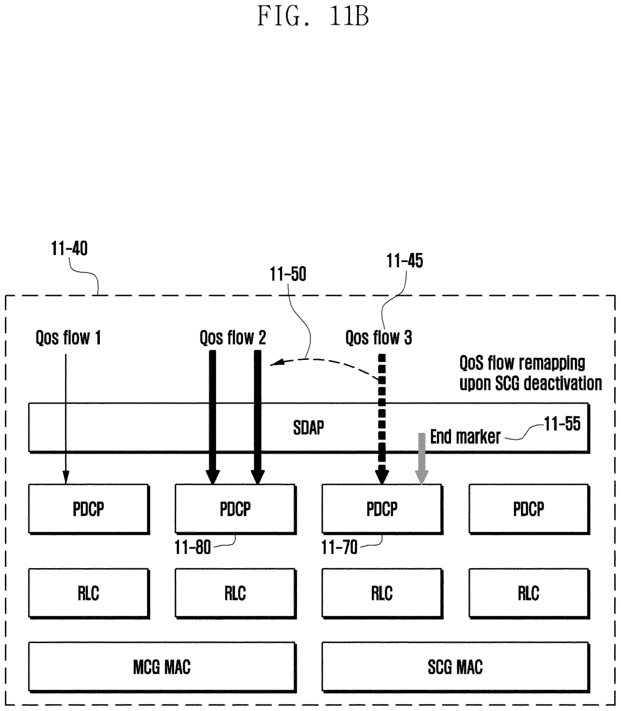

FIG. 11B shows a problem that may occur in the UE when a first RRC message or a second RRC message including configuration information (e.g., to configure a state of a cell group as an inactive state) indicating deactivation of the cell group (or an SCG) of the UE and including configuration information of a SDAP layer for configuring QoS flow remapping is transmitted to the UE. Also, a problem may occur when the BS configures QoS flow remapping with respect to a deactivated (or inactive) cell group by indicating reflective mapping by configuring a value (e.g., configuring a value of 1) of Reflective QoS flow to DRB mapping Indication (RDI) or Reflective QoS Indication (RQI) of a SDAP header of DL data.

With reference to FIG. 11B, in 11-40, when the UE for which dual connectivity is configured receives the first RRC message or the second RRC message which includes the configuration information (e.g., to configure a state of the cell group as an inactive state) indicating deactivation of the cell group (or the SCG), the UE may perform a procedure for deactivating the cell group. The UE is not able to transmit or receive data with respect to the deactivated cell group (or via bearers of the deactivated cell group). However, when the first RRC message or the second RRC message includes the configuration information (e.g., to configure a state of the cell group as an inactive state) indicating deactivation of the cell group (or the SCG) of the UE, and includes the configuration information of the SDAP layer for configuring QoS flow remapping with respect to the deactivated cell group, the UE may perform QoS flow remapping with respect to the deactivated cell group. For example, when configuration information for adding QoS flow mapping information (mappedQoS-FlowsToAdd) of SDAP layer configuration information indicates a list of QoS Flow Identifiers (QFIs) of UL QoS flows of a PDU session that is additionally mapped to a new bearer (or a bearer to be newly mapped (PDCP 11-80)), the configuration information may include a QFI 11-45 of QoS flow to be remapped for QoS flow remapping (11-50). That is, a first QoS flow (QoS flow 3) 11-45 that was mapped to a first bearer 11-70 (an old DRB) belonging to the deactivated cell group (SCG) may be configured (or indicated) to be remapped (11-50) to a second bearer (PDCP 11-80) (a new DRB) of an activated cell group (MCG). The BS may indicate QoS flow remapping (11-50) as reflective mapping by configuring a value (e.g., configuring a value of 1) of Reflective QoS flow to DRB mapping Indication (RDI) or Reflective QoS Indication (RQI) of a SDAP header of DL data.

As described above, when QoS flow remapping (11-50) is configured for the UE, in order to prevent out-of-order delivery at a receiver which may occur due to QoS flow remapping, the SDAP layer may generate an end marker 11-55 including a QFI corresponding to the QoS flow (QoS flow 3) 11-45 to be remapped to SDAP control data (SDAP control PDU) and may transmit the end marker 11-55 to the first bearer 11-70 (the old DRB). However, as described, because the UE is not able to transmit or receive data with respect to the deactivated cell group (or via bearers of the deactivated cell group), if the end marker is generated and has to be transmitted via a bearer of the deactivated cell group, a problem may occur. For example, due to generation of the end marker, the UE may unnecessarily perform, to the BS, a request of re-activation of the cell group for which deactivation is indicated by the BS, or unnecessary signaling may occur (e.g., a UE's request RRC message for activation of the cell group or an activation indication RRC message of re-activation by the BS or a deactivation indication RRC message for indicating re-deactivation by the BS). Also, as the cell group is deactivated, the end marker cannot be transmitted.

Therefore, in the disclosure below, provided are methods for solving a problem that is occurrable when QoS flow remapping is configured or indicated with respect to a cell group to be deactivated. One or a plurality of methods among methods below may be applied, or one new method may be applied by combining a plurality of methods.

First method: When QoS flow remapping for the UE is necessary (or is to be configured) or QoS flow remapping is necessary for a bearer belonging to a cell group to be deactivated, an NR BS or E-UTRA BS connected to a 5GC may configure the UE with QoS flow remapping (e.g., QoS flow remapping in a manner that an RRC message including configuration information of a SDAP layer is transmitted to the UE or QoS flow remapping via reflective mapping by configuring an RDI field or RQI field of a SDAP header) before the cell group (or SCG) is deactivated (or before an RRC message including an indicator for deactivation of the cell group is transmitted). That is, when QoS flow remapping for the UE is necessary (or is to be configured) or QoS flow remapping is necessary for a bearer belonging to a cell group to be deactivated, an indication or configuration of deactivation of the cell group may not be configured together in an RRC message (e.g., for the cell group to be deactivated or a bearer belonging to the cell group, QoS flow remapping may not be configured or may not be allowed).

For example, when an RRC message (e.g., RRCReconfiguration) includes an indicator of deactivation of the cell group (or when a state of the cell group is configured to be inactive), the NR BS or the E-UTRA BS connected to the 5GC may allow that SDAP layer configuration information (a PDU session identifier or an indicator indicating existence or non-existence of DL SDAP header (sdap-HeaderDL) or an indicator indicating existence or non-existence of UL SDAP header (sdap-HeaderUL) or an indicator indicating a default bearer (defaultDRB) or configuration information for adding QoS flow mapping information (mappedQoS-FlowsToAdd) or configuration information for releasing QoS flow mapping information (mappedQoS-FlowsToRelease)) or configuration (e.g., configuration of 1) of an RDI field (or RQI field) of the SDAP header does not exist or is not included together or is not configured together or QoS flow remapping is restricted to allowance.

In addition, for example, when an RRC message (e.g., RRCReconfiguration) does not include an indicator of deactivation of the cell group (or when a state of the cell group is not configured to be inactive), the NR BS or the E-UTRA BS connected to the 5GC may allow that SDAP layer configuration information (a PDU session identifier or an indicator indicating existence or non-existence of DL SDAP header (sdap-HeaderDL) or an indicator indicating existence or non-existence of UL SDAP header (sdap-HeaderUL) or an indicator indicating a default bearer (defaultDRB) or configuration information for adding QoS flow mapping information (mappedQoS-FlowsToAdd) or configuration information for releasing QoS flow mapping information (mappedQoS-FlowsToRelease)) or configuration (e.g., configuration of 1) of an RDI field (or RQI field) of the SDAP header exists or is included or is configured or QoS flow remapping is configured.

In addition, for example, when SDAP layer configuration information (a PDU session identifier or an indicator indicating existence or non-existence of DL SDAP header (sdap-HeaderDL) or an indicator indicating existence or non-existence of UL SDAP header (sdap-HeaderUL) or an indicator indicating a default bearer (defaultDRB) or configuration information for adding QoS flow mapping information (mappedQoS-FlowsToAdd) or configuration information for releasing QoS flow mapping information (mappedQoS-FlowsToRelease)) or configuration (e.g., configuration of 1) of an RDI field (or RQI field) of the SDAP header exists or is included or is configured or QoS flow remapping is configured, the NR BS or the E-UTRA BS connected to the 5GC may allow that the RRC message (e.g., RRCReconfiguration) does not include the indicator of deactivation of the cell group (or a state of the cell group is not configured to be inactive). When SDAP layer configuration information (a PDU session identifier or an indicator indicating existence or non-existence of DL SDAP header (sdap-HeaderDL) or an indicator indicating existence or non-existence of UL SDAP header (sdap-HeaderUL) or an indicator indicating a default bearer (defaultDRB) or configuration information for adding QoS flow mapping information (mappedQoS-FlowsToAdd) or configuration information for releasing QoS flow mapping information (mappedQoS-FlowsToRelease)) or configuration (e.g., configuration of 1) of an RDI field (or RQI field) of the SDAP header does not exist or is not included or is not configured or QoS flow remapping is not configured, the NR BS or the E-UTRA BS connected to the 5GC may allow that the RRC message (e.g., RRCReconfiguration) includes the indicator of deactivation of the cell group (or a state of the cell group is configured to be inactive).

Second method: Even when QoS flow remapping for the UE is necessary (or is to be configured) or QoS flow remapping is necessary for a bearer belonging to a cell group to be deactivated, an NR BS or E-UTRA BS connected to a 5GC may configure the UE with QoS flow remapping (e.g., QoS flow remapping in a manner that an RRC message including configuration information of a SDAP layer is transmitted to the UE or QoS flow remapping via reflective mapping by configuring an RDI field or RQI field of a SDAP header) when the cell group (or SCG) is deactivated (or when an RRC message including an indicator for deactivation of the cell group is transmitted), a SDAP layer of the UE may not generate an end marker for a bearer of the cell group to be deactivated, according to a first condition. That is, according to the first condition, the SDAP layer of the UE may generate an end marker for a bearer that does not belong to the cell group to be deactivated or a bearer for QoS flow remapping when a cell group including the bearer is not deactivated.

The first condition may include a condition by which an end marker is generated and transmitted via a default bearer in a case where, when QoS flow remapping (UL QoS flow to bearer mapping) is configured for a certain QoS flow (or, when an RDI field (or RQI field) of a DL SDAP header of received data is set to 1), a SDAP layer is already configured, QoS flow to bearer mapping stored for the QoS flow is not present, and a default bearer is configured, or a case where a cell group including a QoS flow (or bearer) is not deactivated, or the first condition may include a condition by which an end marker is generated and transmitted via a bearer corresponding to QoS flow to bearer mapping that is previously stored, in a case where, when QoS flow remapping (UL QoS flow to bearer mapping) is configured for a certain QoS flow (or, when an RDI field (or RQI field) of a DL SDAP header of received data is set to 1), QoS flow to bearer mapping stored for the QoS flow is different from QoS flow to bearer mapping newly configured by an RRC message, a case where a UL SDAP header is present or a case where a cell group including a QoS flow (or bearer) is not deactivated.

Also, the default bearer of configuration information of the SDAP layer is used as a bearer for transmission of data with respect to a UL QoS flow for which QoS flow to bearer mapping is not present (or is not configured). Therefore, if a bearer belonging to a deactivated cell group is set as the default bearer, data cannot be transmitted or a procedure for requesting cell group activation may be unnecessarily performed.

Therefore, the disclosure provides that a bearer belonging to a deactivated cell group cannot be set as the default bearer configured in the configuration information of the SDAP layer. Alternatively, provided is that a bearer belonging to a non-deactivated cell group is set as the default bearer configured in the configuration information of the SDAP layer. Alternatively, before the NR BS or the E-UTRA BS connected to the 5GC transmits an RRC message for deactivating the cell group to the UE, the NR BS or the E-UTRA BS may transmit another RRC message including SDAP layer configuration information to the UE, thereby changing or reconfiguring the default bearer as a bearer belonging to a non-deactivated cell group. Alternatively, when the NR BS or the E-UTRA BS connected to the 5GC transmits an RRC message for deactivating the cell group to the UE, the NR BS or the E-UTRA BS may transmit the RRC message including SDAP layer configuration information to the UE, thereby changing or reconfiguring the default bearer as a bearer belonging to a non-deactivated cell group.

Hereinafter, the disclosure proposes a first embodiment of UE operation for which dual connectivity configuration information is considered when an RRC message (e.g., RRCReconfiguration message) is received. The embodiment of the disclosure proposes a procedure in which, when the UE activates a cell group or adds a cell group or modifies a cell group, the UE can activate a cell group without a random access procedure (RACH less activation).
- If the UE receives an RRCReconfiguration message, the UE may perform a procedure below.
- 1> If the UE is configured with LTE (E-UTRA) as an MCG (or MN) and configured with NR as an SCG (or SN) (i.e., E-UTRA nr-SecondaryCellGroupConfig is configured) or the UE is configured with (NG)EN-DC (Next Generation E-UTRA NR-Dual connectivity connected to 5GC);
   ■ 2> if an RRCReconfiguration message is received in an E-UTRA RRC message in a MobilityFromNRCommand message (message indicating handover from NR to (NG)EN-DC);
      ◆ 3> if reconfigurationWithSync configuration information in the message is included in spCellConfig of the SCG or a cell group state of the SCG is not configured as an inactive state;
         ● 4> the UE may perform (or trigger or start) a random access procedure with respect to an SpCell (or the SCG or a PSCell); and
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
      ◆ 3> Else if a cell group state of the SCG is not configured as an inactive state or a new indicator (e.g., RACH-less indication) is included in a message to indicate not to perform a random access procedure or reconfigurationWithSync configuration information of the message is not included in spCellConfig of the SCG, and
         ● 4> the UE may not perform (or trigger or start) a random access procedure with respect to the SpCell (or the SCG or the PSCell).
         ● 4> The UE may activate the SpCell without the random access procedure. Alternatively, the UE may start PDCCH monitoring with respect to the SpCell or may start PDSCH reception.
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or a Primary Timing Advance Group (PTAG) (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
      ◆ 3> Else;
         ● 4> the UE ends a performing procedure.
- 1> If the UE is configured with NR as an MCG (or MN) and configured with NR as an SCG (or SN) (e.g., E-UTRA nr-SecondaryCellGroupConfig is configured) or the UE is configured with NR-DC (NR-Dual connectivity connected to 5GC) or an RRCReconfiguration message is received in nr-SCG of mrdc-SecondaryCellGroup configuration information via SRB 1 or mrdc-SecondaryCellGroup configuration information is received in an RRCReconfiguration or RRCResume message via SRB 1;
   ■ 2> if reconfigurationWithSync configuration information in the message is included in spCellConfig of nr-SCG or a cell group state of the SCG is not configured as an inactive state; and
      ◆ 3> the UE may perform (or trigger or start) a random access procedure with respect to an SpCell (or the SCG or a PSCell).
      ◆ 3> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
   ■ 2> Else if a cell group state of the SCG is not configured as an inactive state or a new indicator (e.g., RACH-less indication) is included in a message to indicate not to perform a random access procedure or reconfigurationWithSync configuration information of the message is not included in spCellConfig of the SCG, and
      ◆ 3> the UE may not perform (or trigger or start) a random access procedure with respect to the SpCell (or the SCG or the PSCell).
      ◆ 3> The UE may activate the SpCell without the random access procedure. Alternatively, the UE may start PDCCH monitoring with respect to the SpCell or may start PDSCH reception.
      ◆ 3> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
   ■ 2> Else;
      ◆ 3> the UE ends a performing procedure.
- 1> If reconfigurationWithSync configuration information in a message is included in an MCG or spCellConfig of an SCG, and a MAC layer of an NR cell group successfully completes a triggered random access procedure, and
   ■ 2> a first timer (T304) for the cell group may be stopped (if the timer is running).
   ■ 2> A second timer (T310) for the cell group or a source SpCell may be stopped (if the timer is running).

When the message includes reconfigurationWithSync, and the UE performs a reconfiguration procedure for synchronization (reconfiguration with Sync), a procedure below may be performed.
- 1> When a Dual Active Protocol Stack (DAPS) bearer is not configured or a state of a cell group (or SCG) is not configured as an inactive state or RLM-associated configuration or BFD-associated configuration information for a deactivated cell group is not configured (when a state of the cell group is configured as an inactive state, a second timer keeps running and an RLM procedure is performed to support rapid activation of the cell group) or this procedure is not performed for the deactivated cell group (or SCG); and
   ■ 2> the second timer (T310) for the cell group or the SpCell may be stopped (if the timer is running).
- 1> A third timer (T312) for the cell group or the SpCell may be stopped (if the timer is running).
- 1> If the state of the cell group (or SCG) is not configured as an inactive state or the procedure is not performed with respect to a deactivated cell group (or SCG), and
   ■ 2> it is configured as a value of the first timer (T304) included in the reconfigurationWithSync configuration information of the message, such that the first timer (T304) with respect to an SpCell (PCell of an MCG or PSCell of an SCG) may start.

As proposed in the disclosure, when RLM-associated configuration information or BFD-associated configuration information is configured for a deactivated cell group (or SCG) in an RRC message (e.g., an RRCReconfiguration message), the UE may perform a radio link failure detection procedure as below.
- 1> If a state of the cell group is configured as an inactive state (or a BFD procedure or a RLM procedure is configured for the deactivated cell group) or an indication of desynchronization with respect to an SpCell is received from a lower layer by a preset number of times (e.g., N310 value),
   ■ the second timer (T310) for the SpCell may start. (If the second timer is running when the state of the cell group is activated or is configured as an active state or is not configured as an inactive state or when a random access procedure for the SpCell is started or performed, the second timer may be stopped. Also, when the second timer is expired, occurrence of a radio link failure for the cell group may be declared).
- 1> If a certain DAPS bearer is set or an indication of desynchronization with respect to a source SpCell is received from a lower layer by a preset number of times (e.g., N310 value) or the first timer is running,
   ■ the second timer (T310) for the source SpCell may start.
- 1> If an indication of desynchronization with respect to an SpCell is received from a lower layer by a preset number of times (e.g., N310 value) or the first timer (T304) or a fourth timer is not running,
   ■ the second timer (T310) for the source SpCell may start.

Hereinafter, the disclosure proposes a second embodiment of UE operation for which dual connectivity configuration information is considered when an RRC message (e.g., RRCReconfiguration message) is received. The embodiment of the disclosure proposes a procedure in which, when the UE activates a cell group or adds a cell group or modifies a cell group, the UE can activate a cell group without a random access procedure (RACH less activation).

If the UE receives an RRCReconfiguration message, the UE may perform a procedure below.
- 1> If the UE is configured with LTE (E-UTRA) as an MCG (or MN) and configured with NR as an SCG (or SN) (i.e., E-UTRA nr-SecondaryCellGroupConfig is configured) or the UE is configured with (NG)EN-DC (Next Generation E-UTRA NR-Dual connectivity connected to 5GC).
   ■ 2> if an RRCReconfiguration message is received in an E-UTRA RRC message in a MobilityFromNRCommand message (message indicating handover from NR to (NG)EN-DC).
      ◆ 3> if reconfigurationWithSync configuration information in the message is included in spCellConfig of the SCG or a cell group state of the SCG is not configured as an inactive state or a TAT (a timer for determining validity of a TA value for synchronization between the UE and the BS) to run in the MAC layer is not running (or is expired or an indication of expiry is received from a lower layer) or an indication of occurrence of BFD is received from a lower layer (or beam failure occurs) or a BFD procedure or an RLM procedure for the deactivated cell group is not configured or a radio link failure procedure is detected in the RLM procedure (or the second timer (T310) is expired or radio link to the SCG is not valid).
         ● 4> the UE may perform (or trigger or start) a random access procedure with respect to an SpCell (or the SCG or a PSCell).
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
      ◆ 3> Else if a cell group state of the SCG is not configured as an inactive state or a new indicator (e.g., RACH-less indication) is included in a message to indicate not to perform a random access procedure or a TAT (a timer for determining validity of a TA value for synchronization between the UE and the BS) to run in the MAC layer is running (or is not expired or an indication of expiry is not received from a lower layer) or an indication of occurrence of BFD is not received from a lower layer (or beam failure does not occur) or a BFD procedure or an RLM procedure for the deactivated cell group is configured or a radio link failure procedure is not detected in the RLM procedure (or the second timer (T310) is not expired or radio link to the SCG is valid) or reconfigurationWithSync configuration information of the message is not included in spCellConfig of the SCG.
         ● 4> the UE may not perform (or trigger or start) a random access procedure with respect to the SpCell (or the SCG or the PSCell).
         ● 4> The UE may activate the SpCell without the random access procedure. Alternatively, the UE may start PDCCH monitoring with respect to the SpCell or may start PDSCH reception.
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
      ◆ 3> Else if a cell group state of the SCG is not configured as an inactive state or a new indicator (e.g., RACH-less indication) is included in a message to indicate not to perform a random access procedure or a TAT (a timer for determining validity of a TA value for synchronization between the UE and the BS) to run in the MAC layer is not running (or is expired or an indication of expiry is received from a lower layer) or an indication of occurrence of BFD is received from a lower layer or beam failure occurs or a BFD procedure or an RLM procedure for the deactivated cell group is not configured or a radio link failure procedure is detected in the RLM procedure (or the second timer (T310) is expired or radio link to the SCG is not valid) or reconfigurationWithSync configuration information of the message is not included in spCellConfig of the SCG.
         ● 4> the UE may perform (or trigger or start) a random access procedure with respect to an SpCell (or the SCG or a PSCell).
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
      ◆ 3> Else;
         ● 4> the UE ends a performing procedure.
- 1> If the UE is configured with NR as an MCG (or MN) and configured with NR as an SCG (or SN) (e.g., E-UTRA nr-SecondaryCellGroupConfig is configured) or the UE is configured with NR-DC (NR-Dual connectivity connected to 5GC) or an RRCReconfiguration message is received in nr-SCG of mrdc-SecondaryCellGroup configuration information via SRB 1 or mrdc-SecondaryCellGroup configuration information is received in an RRCReconfiguration or RRCResume message via SRB 1.
   ■ 2> if reconfigurationWithSync configuration information in the message is included in spCellConfig of nr-SCG or a cell group state of the SCG is not configured as an inactive state or a TAT (a timer for determining validity of a TA value for synchronization between the UE and the BS) to run in the MAC layer is not running (or is expired or an indication of expiry is received from a lower layer) or an indication of occurrence of BFD is received from a lower layer (or beam failure occurs) or a BFD procedure or an RLM procedure for the deactivated cell group is not configured or a radio link failure procedure is detected in the RLM procedure (or the second timer (T310) is expired or radio link to the SCG is not valid).
      ◆ 3> the UE may perform (or trigger or start) a random access procedure with respect to an SpCell (or the SCG or a PSCell).
      ◆ 3> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
   ■ 2> Else if a cell group state of the SCG is not configured as an inactive state or a new indicator (e.g., RACH-less indication) is included in a message to indicate not to perform a random access procedure or a TAT (a timer for determining validity of a TA value for synchronization between the UE and the BS) to run in the MAC layer is running (or is not expired or an indication of expiry is not received from a lower layer) or an indication of occurrence of BFD is not received from a lower layer (or beam failure does not occur) or a BFD procedure or an RLM procedure for the deactivated cell group is configured or reconfigurationWithSync configuration information of the message is not included in spCellConfig of the SCG or a radio link failure procedure is not detected in the RLM procedure (or the second timer (T310) is not expired or radio link to the SCG is valid).
      ◆ 3> the UE may not perform (or trigger or start) a random access procedure with respect to the SpCell (or the SCG or the PSCell).
      ◆ 3> The UE may activate the SpCell without the random access procedure. Alternatively, the UE may start PDCCH monitoring with respect to the SpCell or may start PDSCH reception.
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
   ■ 2> Else if a cell group state of the SCG is not configured as an inactive state or a new indicator (e.g., RACH-less indication) is included in a message to indicate not to perform a random access procedure or a TAT (a timer for determining validity of a TA value for synchronization between the UE and the BS) to run in the MAC layer is not running (or is expired or an indication of expiry is received from a lower layer) or an indication of occurrence of BFD is received from a lower layer (or beam failure occurs) or a BFD procedure or an RLM procedure for the deactivated cell group is not configured or a radio link failure procedure is detected in the RLM procedure or the second timer (T310) is expired or radio link to the SCG is not valid or reconfigurationWithSync configuration information of the message is not included in spCellConfig of the SCG.
      ◆ 3> the UE may perform (or trigger or start) a random access procedure with respect to an SpCell (or the SCG or a PSCell).
      ◆ 3> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
   ■ 2> Else;
      ◆ 3> the UE ends a performing procedure.
- 1> If reconfigurationWithSync configuration information in a message is included in an MCG or spCellConfig of an SCG, and a MAC layer of an NR cell group successfully completes a triggered random access procedure,
   ■ 2> a first timer (T304) for the cell group may be stopped (if the timer is running).
   ■ 2> A second timer (T310) for the cell group or a source SpCell may be stopped (if the timer is running).

When the message includes reconfigurationWithSync, and the UE performs a reconfiguration procedure for synchronization (reconfiguration with Sync), a procedure below may be performed.
- 1> When a DAPS bearer is not configured or a state of a cell group (or SCG) is not configured as an inactive state or RLM-associated configuration or BFD-associated configuration information for a deactivated cell group is not configured (when a state of the cell group is configured as an inactive state, a second timer keeps running and an RLM procedure is performed to support rapid activation of the cell group) or this procedure is not performed for the deactivated cell group (or SCG).
   ■ 2> the second timer (T310) for the cell group or the SpCell may be stopped (if the timer is running).
- 1> A third timer (T312) for the cell group or the SpCell may be stopped (if the timer is running).
- 1> If the state of the cell group (or SCG) is not configured as an inactive state or the procedure is not performed with respect to a deactivated cell group (or SCG),
   ■ 2> it is configured as a value of the first timer (T304) included in the reconfigurationWithSync configuration information of the message, such that the first timer (T304) with respect to an SpCell (PCell of an MCG or PSCell of an SCG) may start.

As proposed in the disclosure, when RLM-associated configuration information or BFD-associated configuration information is configured for a deactivated cell group (or SCG) in an RRC message (e.g., an RRCReconfiguration message), the UE may perform a radio link failure detection procedure as below.
- 1> If a state of the cell group is configured as an inactive state (or a BFD procedure or a RLM procedure is configured for the deactivated cell group) or an indication of desynchronization with respect to an SpCell is received from a lower layer by a preset number of times (e.g., N310 value),
   ■ the second timer (T310) for the SpCell may start. (If the second timer is running when the state of the cell group is activated or is configured as an active state or is not configured as an inactive state or when a random access procedure for the SpCell is started or performed or the random access procedure is successfully completed, the second timer may be stopped. Also, when the second timer is expired, occurrence of a radio link failure for the cell group may be declared).
- 1> If a certain DAPS bearer is set or an indication of desynchronization with respect to a source SpCell is received from a lower layer by a preset number of times (e.g., N310 value) or the first timer is running,
   ■ the second timer (T310) for the source SpCell may start.
- 1> If an indication of desynchronization with respect to an SpCell is received from a lower layer by a preset number of times (e.g., N310 value) or the first timer (T304) or a fourth timer is not running,

■ the second timer (T310) for the source SpCell may start.

Hereinafter, the disclosure proposes a third embodiment of UE operation for which dual connectivity configuration information is considered when an RRC message (e.g., RRCReconfiguration message) is received. The embodiment of the disclosure proposes a procedure in which, when the UE activates a cell group or adds a cell group or modifies a cell group, the UE can activate a cell group without a random access procedure (RACH less activation).

If the UE receives an RRCReconfiguration message, the UE may perform a procedure below.
- 1> If the UE is configured with LTE (E-UTRA) as an MCG (or MN) and configured with NR as an SCG (or SN) (i.e., E-UTRA nr-SecondaryCellGroupConfig is configured) or the UE is configured with (NG)EN-DC (Next Generation E-UTRA NR-Dual connectivity connected to 5GC).
   ■ 2> if an RRCReconfiguration message is received in an E-UTRA RRC message in a MobilityFromNRCommand message (message indicating handover from NR to (NG)EN-DC).
      ◆ 3> if reconfigurationWithSync configuration information in the message is included in spCellConfig of the SCG or a cell group state of the SCG is not configured as an inactive state or a TAT (a timer for determining validity of a TA value for synchronization between the UE and the BS) to run in the MAC layer is not running (or is expired or an indication of expiry is received from a lower layer) or an indication of occurrence of BFD is received from a lower layer (or beam failure occurs) or a BFD procedure or an RLM procedure for the deactivated cell group is not configured or a radio link failure procedure is detected in the RLM procedure (or the second timer (T310) is expired or radio link to the SCG is not valid).
         ● 4> the UE may perform (or trigger or start) a random access procedure with respect to an SpCell (or the SCG or a PSCell).
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
      ◆ 3> Else if a cell group state of the SCG is not configured as an inactive state or a new indicator (e.g., RACH-less indication or second reconfigurationWithcSync) is included in a message to indicate not to perform a random access procedure or a TAT (a timer for determining validity of a TA value for synchronization between the UE and the BS) to run in the MAC layer is running (or is not expired or an indication of expiry is not received from a lower layer) or an indication of occurrence of BFD is not received from a lower layer (or beam failure does not occur) or a BFD procedure or an RLM procedure for the deactivated cell group is configured or a radio link failure procedure is not detected in the RLM procedure (or the second timer (T310) is not expired or radio link to the SCG is valid) or reconfigurationWithSync configuration information of the message is not included in spCellConfig of the SCG.
         ● 4> the UE may not perform (or trigger or start) a random access procedure with respect to the SpCell (or the SCG or the PSCell).
         ● 4> The UE may activate the SpCell without the random access procedure. Alternatively, the UE may start PDCCH monitoring with respect to the SpCell or may start PDSCH reception.
         ● 4> The UE may introduce a new fourth timer so as to identify whether the SpCell is successfully activated without the random access procedure. For example, when a condition is satisfied, the fourth timer may start. The fourth timer may be stopped when a PDCCH or a PDSCH is successfully received from the SpCell. If the fourth timer is expired, the UE may trigger an SCG failure report procedure and may report SCG failure via the MCG. Alternatively, when the fourth timer is expired, the UE may perform a random access procedure (contention based random access (CBRA) or contention free random access (CFRA) or two-step random access procedure (two-step RACH)), based on separate configuration information (e.g., second reconfigurationWithSync or preamble information or smtc information or new UE identifier (RNTI value) or Need code is configured as S and is stored and used) for random access procedure which is configured by an RRC message or is broadcast via system information (i.e., the UE may fall back to the random access procedure). Alternatively, when the UE fails to activate a cell group without a random access procedure (e.g., when the UE fails to successfully receive a PDCCH or a PDSCH for a certain time), the UE may perform a random access procedure (contention based random access (CBRA) or contention free random access (CFRA) or two-step random access procedure (two-step RACH)), based on separate configuration information for random access procedure which is configured by an RRC message or is broadcast via system information (i.e., the UE may fall back to the random access procedure). The separate configuration information for random access procedure may be configured when an indication of deactivation of a cell group is transmitted to the UE via an RRC message or may be configured when an indication (or reconfigurationWithSync) of activation of a cell group is transmitted to the UE via an RRC message. The UE may determine whether a cell group is successfully activated without a random access procedure, by successfully receiving a PDCCH from the BS or receiving a transport resource (UL grant or DL assignment) from the BS or receiving an RRC message from the BS.
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
      ◆ 3> Else if a cell group state of the SCG is not configured as an inactive state or a new indicator (e.g., RACH-less indication) is included in a message to indicate not to perform a random access procedure or a TAT (a timer for determining validity of a TA value for synchronization between the UE and the BS) to run in the MAC layer is not running (or is expired or an indication of expiry is received from a lower layer) or an indication of occurrence of BFD is received from a lower layer or beam failure occurs or a BFD procedure or an RLM procedure for the deactivated cell group is not configured or a radio link failure procedure is detected in the RLM procedure (or the second timer (T310) is expired or radio link to the SCG is not valid) or reconfigurationWithSync configuration information of the message is not included in spCellConfig of the SCG.
         ● 4> the UE may perform (or trigger or start) a random access procedure with respect to an SpCell (or the SCG or a PSCell).
         ● 4> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
      ◆ 3> Else;
         - 4> the UE ends a performing procedure.
- 1> If the UE is configured with NR as an MCG (or MN) and configured with NR as an SCG (or SN) (e.g., E-UTRA nr-SecondaryCellGroupConfig is configured) or the UE is configured with NR-DC (NR-Dual connectivity connected to 5GC) or an RRCReconfiguration message is received in nr-SCG of mrdc-SecondaryCellGroup configuration information via SRB 1 or mrdc-SecondaryCellGroup configuration information is received in an RRCReconfiguration or RRCResume message via SRB 1.
   ■ 2> if reconfigurationWithSync configuration information in the message is included in spCellConfig of nr-SCG or a cell group state of the SCG is not configured as an inactive state or a TAT (a timer for determining validity of a TA value for synchronization between the UE and the BS) to run in the MAC layer is not running (or is expired or an indication of expiry is received from a lower layer) or an indication of occurrence of BFD is received from a lower layer (or beam failure occurs) or a BFD procedure or an RLM procedure for the deactivated cell group is not configured or a radio link failure procedure is detected in the RLM procedure (or the second timer (T310) is expired or radio link to the SCG is not valid).
      ◆ 3> the UE may perform (or trigger or start) a random access procedure with respect to an SpCell (or the SCG or a PSCell).
      ◆ 3> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
   ■ 2> Else if a cell group state of the SCG is not configured as an inactive state or a new indicator (e.g., RACH-less indication or second reconfigurationWithcSync) is included in a message to indicate not to perform a random access procedure or a TAT (a timer for determining validity of a TA value for synchronization between the UE and the BS) to run in the MAC layer is running (or is not expired or an indication of expiry is not received from a lower layer) or an indication of occurrence of BFD is not received from a lower layer (or beam failure does not occur) or a BFD procedure or an RLM procedure for the deactivated cell group is configured or a radio link failure procedure is not detected in the RLM procedure (or the second timer (T310) is not expired or radio link to the SCG is valid) or reconfigurationWithSync configuration information of the message is not included in spCellConfig of the SCG.
      ◆ 3> the UE may not perform (or trigger or start) a random access procedure with respect to the SpCell (or the SCG or the PSCell).
      ◆ 3> The UE may activate the SpCell without the random access procedure. Alternatively, the UE may start PDCCH monitoring with respect to the SpCell or may start PDSCH reception.
      ◆ 3> The UE may introduce a new fourth timer so as to identify whether the SpCell is successfully activated without the random access procedure. For example, when a condition is satisfied, the fourth timer may start. The fourth timer may be stopped when a PDCCH or a PDSCH is successfully received from the SpCell. If the fourth timer is expired, the UE may trigger an SCG failure report procedure and may report SCG failure via the MCG. Alternatively, when the fourth timer is expired, the UE may perform a random access procedure (contention based random access (CBRA) or contention free random access (CFRA) or two-step random access procedure (two-step RACH)), based on separate configuration information (e.g., second reconfigurationWithSync or preamble information or smtc information or new UE identifier (RNTI value) is configured or Need code is configured as S and is stored and used) for random access procedure which is configured by an RRC message or is broadcast via system information (i.e., the UE may fall back to the random access procedure). Alternatively, when the UE fails to activate a cell group without a random access procedure (e.g., when the UE fails to successfully receive a PDCCH or a PDSCH for a certain time), the UE may perform a random access procedure (contention based random access (CBRA) or contention free random access (CFRA) or two-step random access procedure (two-step RACH)), based on separate configuration information for random access procedure which is configured by an RRC message or is broadcast via system information (i.e., the UE may fall back to the random access procedure). The separate configuration information for random access procedure may be configured when an indication of deactivation of a cell group is transmitted to the UE via an RRC message or may be configured when an indication (or reconfigurationWithSync) of activation of a cell group is transmitted to the UE via an RRC message.
      ◆ 3> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
   ■ 2> Else if a cell group state of the SCG is not configured as an inactive state or a new indicator (e.g., RACH-less indication) is included in a message to indicate not to perform a random access procedure or a TAT (a timer for determining validity of a TA value for synchronization between the UE and the BS) to run in the MAC layer is not running (or is expired or an indication of expiry is received from a lower layer) or an indication of occurrence of BFD is received from a lower layer or beam failure occurs or a BFD procedure or an RLM procedure for the deactivated cell group is not configured or a radio link failure procedure is detected in the RLM procedure (or the second timer (T310) is expired or radio link to the SCG is not valid) or reconfigurationWithSync configuration information of the message is not included in spCellConfig of the SCG.
      ◆ 3> the UE may perform (or trigger or start) a random access procedure with respect to an SpCell (or the SCG or a PSCell).
      ◆ 3> When it is configured (or indicated) to activate a cell group (e.g., an SCG) (or a state of the cell group is not configured as an inactive state) or a previous state of the cell group is an inactive state or the UE is in a connected mode, the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. Hereinafter, the disclosure provides detailed descriptions of the MAC layer reset procedure or the MAC layer partial reset procedure.
   ■ 2> Else;
      ◆ 3> the UE ends a performing procedure.
- 1> If reconfigurationWithSync configuration information in a message is included in an MCG or spCellConfig of an SCG, and a MAC layer of an NR cell group successfully completes a triggered random access procedure,
   ■ 2> a first timer (T304) for the cell group may be stopped (if the timer is running).
   ■ 2> A second timer (T310) for the cell group or a source SpCell may be stopped (if the timer is running).

When the message includes reconfigurationWithSync, and the UE performs a reconfiguration procedure for synchronization (reconfiguration with Sync), a procedure below may be performed.
- 1> When a DAPS bearer is not configured or a state of a cell group (or SCG) is not configured as an inactive state or RLM-associated configuration or BFD-associated configuration information for a deactivated cell group is not configured (when a state of the cell group is configured as an inactive state, a second timer keeps running and an RLM procedure is performed to support rapid activation of the cell group) or this procedure is not performed for the deactivated cell group (or SCG).
   ■ 2> the second timer (T310) for the cell group or the SpCell may be stopped (if the timer is running).
- 1> A third timer (T312) for the cell group or the SpCell may be stopped (if the timer is running).
- 1> If the state of the cell group (or SCG) is not configured as an inactive state or the procedure is not performed with respect to a deactivated cell group (or SCG),
   ■ 2> it is configured as a value of the first timer (T304) included in the reconfigurationWithSync configuration information of the message, such that the first timer (T304) with respect to an SpCell (PCell of an MCG or PSCell of an SCG) may start.

As proposed in the disclosure, when RLM-associated configuration information or BFD-associated configuration information is configured for a deactivated cell group (or SCG) in an RRC message (e.g., an RRCReconfiguration message), the UE may perform a radio link failure detection procedure as below.
- 1> If a state of the cell group is configured as an inactive state (or a BFD procedure or a RLM procedure is configured for the deactivated cell group) or an indication of desynchronization with respect to an SpCell is received from a lower layer by a preset number of times (e.g., N310 value),
   ■ the second timer (T310) for the SpCell may start. (If the second timer is running when the state of the cell group is activated or is configured as an active state or is not configured as an inactive state or when a random access procedure for the SpCell is started or performed or the random access procedure is successfully completed, the second timer may be stopped. Also, when the second timer is expired, occurrence of a radio link failure for the cell group may be declared).
- 1> If a certain DAPS bearer is set or an indication of desynchronization with respect to a source SpCell is received from a lower layer by a preset number of times (e.g., N310 value) or the first timer is running,
   ■ the second timer (T310) for the source SpCell may start.
- 1> If an indication of desynchronization with respect to an SpCell is received from a lower layer by a preset number of times (e.g., N310 value) or the first timer (T304) or a fourth timer is not running,
   ■ the second timer (T310) for the source SpCell may start.

In the disclosure, when the UE performs a random access procedure according to a condition proposed in the disclosure as the UE receives an RRC message (e.g., an RRCReconfiguration message or an RRCResume message) including an indicator for cell group activation (or in which a cell group state is configured as an active state), if the UE performs a CFRA random access procedure, the UE may start (or restart) a TAT timer configured for (or associated with) a cell group or may newly apply a TA value (Timing Advance Command (TAC)).

However, when the UE performs a random access procedure according to a condition proposed in the disclosure as the UE receives an RRC message (e.g., an RRCReconfiguration message or an RRCResume message) including an indicator for cell group activation (or in which a cell group state is configured as an active state), if the UE performs a CBRA random access procedure, the BS cannot identify a cell identifier of the UE (as the CBRA procedure does not include the cell identifier of the UE), and thus, the UE does not start (or restart) a TAT timer configured for (or associated with) a cell group (or PSCell) or cannot newly apply a TA value (Timing Advance Command (TAC)). Therefore, in order to solve this problem, when the BS transmits, to the UE, an RRC message (e.g., an RRCReconfiguration message or an RRCResume message) including an indicator for cell group activation (or in which a cell group state is configured as an active state), or includes an indicator indicating to perform a random access procedure in the RRC message, the UE may always configure, in the RRC message, a CFRA transport resource (e.g., a dedicated preamble transport resource) for the random access procedure, such that the UE may perform a CFRA random access procedure when the UE performs a random access procedure according to a condition proposed in the disclosure. Alternatively, in order to solve this problem, when the UE performs a random access procedure (or a CBRA random access procedure) according to a condition proposed in the disclosure as the UE receives an RRC message (e.g., an RRCReconfiguration message or an RRCResume message) including an indicator for cell group activation (or in which a cell group state is configured as an active state), if a TAT timer configured for (or associated with) a cell group (or PSCell) is running, the UE may stop the TAT timer or may consider the TAT timer as expired. When the TAT timer is stopped, even when the UE performs a CBRA random access procedure, the UE may start (or restart) the TAT timer or may newly apply a TA value (Timing Advance Command (TAC)), such that the problem may be solved.

The UE may receive a second RRC message 11-20 or may apply received configuration information and generate a third RRC message (11-25) or a fourth RRC message, thereby transmitting the third RRC message or the fourth RRC message to the BS (11-25). The third RRC message may include at least some of a plurality of pieces of information below.
- Second RRC message identifier having the same value as a second RRC message identifier included in the second RRC message;
- Indicator or an identifier indicating that the second RRC message is successfully received; and
- Fourth RRC message including a response that a first RRC message generated and transmitted by a secondary BS is successfully received.

The fourth RRC message may include at least some of a plurality of pieces of information below.
■ First RRC message identifier having the same value as a first RRC message identifier included in the first RRC message;
■ Indicator or an identifier indicating that the first RRC message is successfully received; and
■ Response indicator indicating successful application of the first RRC message.

When the BS (e.g., master BS) receives the third RRC message, the BS may determine whether the third RRC message is a response message to the second RRC message via the second identifier. When the BS identifies the fourth RRC message included in the third RRC message, the BS may transmit, to the secondary BS, the fourth RRC message included in a configuration completion message for indicating completion of configuration through an Xn interface (e.g., interface between BSs) or an Sn interface (interface between a BS and an AMF or a UMF, or interface between BSs) (11-30). The configuration completion message may include at least some of a plurality of pieces of information below.
- Fourth RRC message included in the third RRC message;
- Request acceptance message or an indicator or identifier of completion with respect to configuration (addition or modification or release of cell group) or indication (activation or deactivation or suspension or resumption of cell group) which is indicated by the first RRC message.

When the BS (e.g., the secondary BS) receives the configuration completion message, the BS may read or identify the fourth RRC message included in the configuration completion message, and may determine, via the first identifier, whether it is a response message to the first RRC message. Then, the BS may identify whether the configuration or the indication indicated by the BS has been successfully completed. When the secondary BS receives the configuration completion message or the fourth RRC message, the secondary BS may transmit, as a response thereto, a response message of successful reception of the configuration completion message or the fourth RRC message to the master BS.

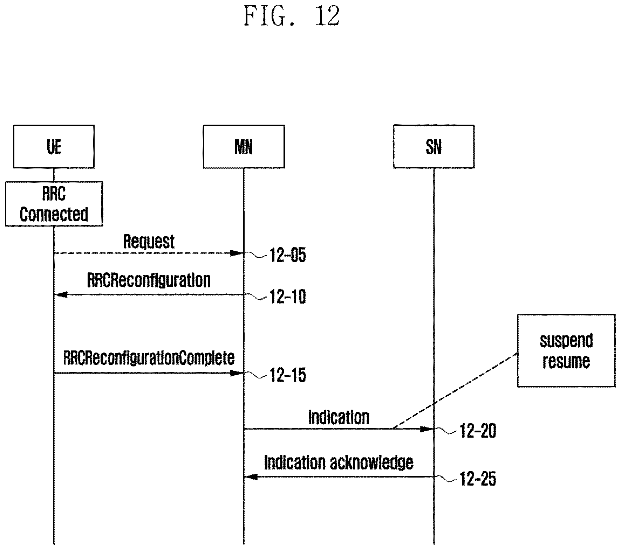

FIG. 12 is a diagram illustrating a second signaling procedure for configuring or releasing dual connectivity, or configuring or releasing or activating or resuming or suspending or deactivating an SCG configured with dual connectivity, according to an embodiment of the disclosure.

In FIG. 12, a UE may configure an RRC connection with a network or a BS as shown in FIG. 6 of the disclosure, and may perform data transmission or reception with the BS (e.g., MCG, MN, or cells (PCells or SCells) of MCG).

The BS may configure dual connectivity for the UE for a certain reason (e.g., when a high data rate is required, at a request of the UE (request 12-05), or when a high QoS requirement should be satisfied). For example, the UE may transmit, to the BS, a request to configure or release, or activate or deactivate, or resume or suspend dual connectivity, a cell group (e.g., SCG), or a cell, and a message of the request may include a frequency (or channel) measurement result report or a cell group identifier or cell identifiers or measurement results (request 12-05). Alternatively, the BS may determine whether to configure or release or add or deactivate or activate or resume or modify or reconfigure or suspend dual connectivity, a cell group (e.g., SCG), or a cell, by considering the amount of DL (or UL) data or the amount of buffer.

The master BS (MN) or an MCG may receive a frequency or channel measurement report for a frequency or a channel received from the UE, and may determine a secondary BS (secondary node (SN)) or an SCG for configuration of dual connectivity, based on the measurement report. Alternatively, the master BS may determine whether to configure or release or add or deactivate or activate or resume or modify or reconfigure or suspend dual connectivity or a cell group (e.g., SCG) or a cell, by considering the amount of DL (or UL) data or the amount of buffer. The master BS may transmit a first RRC message to the UE so as to configure or release or add or deactivate or activate or resume or modify or reconfigure or suspend dual connectivity, a cell group (e.g., SCG), or a cell with respect to the determined secondary BS (12-10). In order to configure or release or add or deactivate or activate or resume or modify or reconfigure or suspend dual connectivity or a cell group (e.g., SCG) or a cell for the UE, each separate new request message may be defined and used in the first RRC message, or alternatively, a new indicator may be defined in an existing message (e.g., RRCReconfiguration message or RRCResume message) to indicate (or request) to configure or release or add or deactivate or activate or resume or modify or reconfigure or suspend a cell group (e.g., SCG) or a cell. The first RRC message may include at least some of a plurality of pieces of information below.
- First RRC message identifier (e.g., rrc-Transaction identifier) for identifying the first RRC message. Because the UE and the BS (e.g., secondary BS) transmit or receive a plurality of RRC messages therebetween, an identifier for identifying each RRC message may be included in the RRC message. For example, the same first RRC identifier may be included in an RRC message (e.g., RRCReconfiguration) transmitted by a transmitting end, or an RRC message (e.g., RRCReconfigurationComplete) corresponding to the RRC message (e.g., RRCReconfiguration) transmitted by a receiving end, or an RRC message corresponding to the RRC message transmitted by the transmitting end.
- Configuration information or an indicator (e.g., configuration information or an indicator for the UE) for configuring or releasing or adding or deactivating or activating or resuming or modifying or reconfiguring or suspending dual connectivity or a cell group (e.g., SCG) or a cell.
- Indicator indicating a state of a cell group (e.g., active or inactive or suspended or resumed).
- Cell group identifier for identifying cell groups. The cell group identifier may be allocated by the master BS, or one identifier from among already preset identifiers may be allocated by the secondary BS.
- Cell group or cell configuration information.
- Bearer configuration information. For example, indicator information indicating an operation of a protocol layer (e.g., SDAP layer or PDCP layer or RLC layer or MAC layer) of each bearer (e.g., PDCP suspension indicator or PDCP reestablishment indicator or PDCP data recovery indicator or RLC reestablishment indicator or MAC partial reset indicator or MAC reset indicator or indicator triggering new operation).
- If configuration information or an indicator for configuring or adding or activating or resuming or modifying or reconfiguring dual connectivity or a cell group (e.g., SCG) or a cell is included, a first indicator (e.g., mobilityControlInfor or ReconfigurationWithSync) may also be included. However, when configuration information or an indicator for releasing or deactivating or reconfiguring or suspending dual connectivity or a cell group (e.g., SCG) or a cell is included, the first indicator (e.g., mobilityControlInfor or ReconfigurationWithSync) may not be included. The first indicator may be an indicator to trigger a random access procedure in the cell group or the cell, or an indicator to perform signal synchronization with a new cell, or an indicator indicating to perform frequency shift of the UE, or an indicator indicating to modify the cell group (or cell). Alternatively, the UE may perform PDCCH monitoring in the indicated or configured cell group or cell, and may trigger and perform a random access procedure according to an indication indicated in the PDCCH. For example, an upper layer (e.g., RRC layer) may transmit an indicator to trigger a random access procedure to a lower layer (e.g., MAC layer).
- If configuration information or an indicator for configuring or adding or activating or resuming or modifying or reconfiguring dual connectivity or a cell group (e.g., SCG) or a cell is included, random access configuration information may also be included. When configuration information or an indicator for releasing, deactivating, reconfiguring, or suspending dual connectivity, a cell group (e.g., SCG), or a cell is included, the random access configuration information may not be included. The random access configuration information may include random access transport resource information (time or frequency transport resource) for preamble transmission or designated preamble information for the cell group or cell.
- Time information indicating when to activate or resume or deactivate or suspend dual connectivity or a cell group (e.g., SCG) or a cell (PSCell or SCG SCell) (e.g., information indicating a timing (e.g., X), a time unit, a subframe, a time slot, or a symbol unit, (for example, when the message is received in an nth time unit, time information indicating whether to activate or resume or deactivate or suspend a cell in an n+Xth time unit));
- First channel measurement configuration information for each cell or each BWP;
- Second channel measurement configuration information for each cell or each BWP;
- Indicator indicating addition of cell group configuration or an indicator (ReconfigurationWithSync) indicating cell group modification or an indicator (ReconfigurationWithSync or newly defined indicator) indicating a random access procedure;
- Indicator (ReconfigurationWithSync or newly defined indicator) indicating whether to activate a cell group by performing a random access procedure or to activate the cell group without the random access procedure, when activation of the cell group;
- Radio Resource Management (RRM) configuration information or frequency measurement configuration information or configuration information of separate RRM to be applied or performed to deactivate a cell group or frequency measurement configuration information (e.g., frequency measurement configuration information (Reduced or Relaxed RRM configuration information simplified for reduction of battery power consumption); and
- Configuration information for RLM or configuration information for RLM to be applied or performed to deactivate a cell group. For example, the configuration information for RLM or the configuration information for RLM to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for RLM or the configuration information for RLM to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for RLM or the configuration information for RLM to be applied or performed to deactivate a cell group may include configuration information of an SSB or CSI-RS or RS to be measured, or when a beam failure occurs, transport resource information (e.g., PUCCH configuration information (e.g., SR information or specific transport resource) or frequency transport resource or time transport resource) on which a result can be reported. Also, the configuration information may include BWP configuration information (e.g., may be indicated as a BWP identifier) indicating on which BWP the RLM procedure is to be performed). Alternatively, when a cell group is in an inactivate state, the UE may perform the RLM procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the RLM procedure on a BWP that was last (or previously) activated before the cell group is deactivated, so that a connected state with respect to the cell group may be continuously maintained (e.g., a case where BWP configuration information indicating on which BWP the RLM procedure is to be performed is not configured), or when the UE activates the cell group, the UE may perform an activation procedure on an initial active BWP (or an initial active DL BWP, firstActiveDownlinkBWP-ID) configured by the RRC message. When the cell group is activated, if the BWP configuration information indicating on which BWP the RLM procedure is to be performed is not configured, the UE may perform the RLM procedure on the BWP that was last (or previously) activated. Also, the configuration information may include beam-associated configuration information (which may be indicated as a BWP identifier or TCI state or QCL configuration information) indicating on which beam the RLM procedure is to be performed. Alternatively, when the cell group is in an inactivate state, the UE may perform the RLC procedure on a beam (e.g., TCI state or QCL configuration information) configured by the RRC message or may perform the RLC procedure by activating the beam, and may early monitor the beam to be activated to activate the cell group, so that latency in activation of the cell group may be minimized. Alternatively, when a state of the cell group is configured as an inactive state (or an active state), the UE may perform the RLM procedure on a beam that was last (or previously) activated before the cell group is deactivated, so that a connected state with respect to the cell group may be continuously maintained (e.g., a case where beam-associated configuration information indicating on which beam the RLM procedure is to be performed is not configured), or when the UE activates the cell group, the UE may perform an activation procedure on a beam configured by the RRC message. When the cell group is activated, if the beam-associated configuration information indicating on which beam the RLM procedure is to be performed is not configured, the UE may perform the RLM procedure on the beam that was last (or previously) activated.
- Configuration information for a BFD procedure or BFD or configuration information for BFD to be applied or performed to deactivate a cell group. For example, the configuration information for a BFD procedure or BFD or the configuration information for BFD to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for a BFD procedure or BFD or the configuration information for BFD to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for a BFD procedure or BFD or the configuration information for BFD to be applied or performed to deactivate a cell group may include configuration information of an SSB or CSI-RS or RS to be measured, or when a beam failure occurs, transport resource information (e.g., PUCCH configuration information (e.g., SR information or specific transport resource) or frequency transport resource or time transport resource) on which a result can be reported. Also, the configuration information may include BWP configuration information (e.g., may be indicated as a BWP identifier) indicating on which BWP the BFD procedure is to be performed). Alternatively, when a cell group is in an inactivate state, the UE may perform the BFD procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the BFD procedure on a BWP that was last (or previously) activated before the cell group is deactivated, so that a connected state with respect to the cell group may be continuously maintained (e.g., a case where BWP configuration information indicating on which BWP the BFD procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the BFD procedure is to be performed is not configured when activation of the cell group, the UE may perform the BFD procedure on the BWP that was last (or previously) activated. Also, the configuration information may include beam-associated configuration information (which may be indicated as a BWP identifier or TCI state or QCL configuration information) indicating on which beam the BFD procedure is to be performed. Alternatively, when the cell group is in an inactivate state, the UE may perform the BFD procedure on a beam (e.g., TCI state or QCL configuration information) configured by the RRC message, so that the beam to be activated to activate the cell group may be early monitored, and thus, latency in activation of the cell group may be minimized. Alternatively, when a state of the cell group is configured as an inactive state (or an active state), the UE may perform the BFD procedure on a beam that was last (or previously) activated before the cell group is deactivated, so that a connected state with respect to the cell group may be continuously maintained (e.g., a case where beam-associated configuration information indicating on which beam the BFD procedure is to be performed is not configured), or when the UE activates the cell group, the UE may perform an activation procedure on a beam configured by the RRC message. If the beam-associated configuration information indicating on which beam the BFD procedure is to be performed is not configured when activation of the cell group, the UE may perform the BFD procedure on the beam that was last (or previously) activated.

When the UE receives a first RRC message 12-15, the UE may read and identify the first RRC message and may configure or add or modify or resume or suspend or deactivate dual connectivity or a cell group (e.g., SCG). Also, when a first indicator to trigger a random access procedure is included in the first RRC message, the UE may trigger the random access procedure for the configured or indicated cell group or cell. When the random access procedure is performed, if there is random access information in the RRC message or if there is stored random access information, the UE may perform a random access procedure (e.g., CFRA procedure (e.g., 4-step random access or 2-step random access)), based on the stored random access information, or the random access information received in the RRC message, or system information. When there is no random access information in the RRC message, the UE may perform a random access procedure (e.g., CBRA procedure (e.g., 4-step random access or 2-step random access)). Alternatively, the UE may perform PDCCH monitoring in the indicated or configured cell group or cell, and may trigger and perform a random access procedure according to an indication indicated in the PDCCH. For example, an upper layer (e.g., RRC layer) may transmit an indicator to trigger a random access procedure to a lower layer (e.g., MAC layer).

The UE may receive a first RRC message 12-10 or may apply received configuration information and generate a second RRC message, thereby transmitting the second RRC message to the BS (12-15). The second RRC message may include at least some of a plurality of pieces of information below.
- First RRC message identifier having the same value as a first RRC message identifier included in the first RRC message;
- Indicator or an identifier indicating that the first RRC message is successfully received;

When the BS (e.g., master BS) receives the second RRC message, the BS may determine, via the first identifier, whether the second RRC message is a response message to the first RRC message. When the BS identifies the first RRC message, the BS may transmit, to the secondary BS, an indication message including an indication indicating that a cell group has been configured or added or released or activated or resumed or suspended or deactivated through an Xn interface (e.g., interface between BSs) or an Sn interface (interface between a BS and an AMF or a UMF, or interface between BSs) (12-20). The indication message may include at least some of a plurality of pieces of information below.
- Identifier for identifying the indication message.
- Configuration information or an indicator (e.g., configuration information or an indicator for the SCG) indicating that dual connectivity or a cell group or a cell has been configured or released or added or deactivated or activated or resumed or modified or reconfigured or suspended.

When the BS (e.g., secondary BS) receives the indication message, the BS may read or identify configuration information or a message included in the indication message, may generate an indication acknowledgement message as a response message to the indication message, and may transmit the indication acknowledgement message to the master BS (12-25). The indication acknowledgement message may include at least one of the following information:
- Identifier having the same value as an identifier included in the indication message.
- Indicator or an identifier indicating that the indication message is successfully received.
- Response indicator indicating that the indication message is successfully applied.

The signaling procedures according to the disclosure may be combined and modified, and thus may be extended to new signaling procedures. For example, when the master BS receives the request 12-05 from the UE, the master BS may ask or request the UE as in 12-20 or 11-10 of FIG. 11, and in response thereto, may receive a response message as in 12-25 of 11-15 of FIG. 11, and then may configure an RRC message corresponding to 12-10, according to the response message and may transmit the RRC message to the UE, and the UE may configure a cell group according to an indication of the RRC message and may transmit, to the master BS, the message 12-15 in response to the indication.

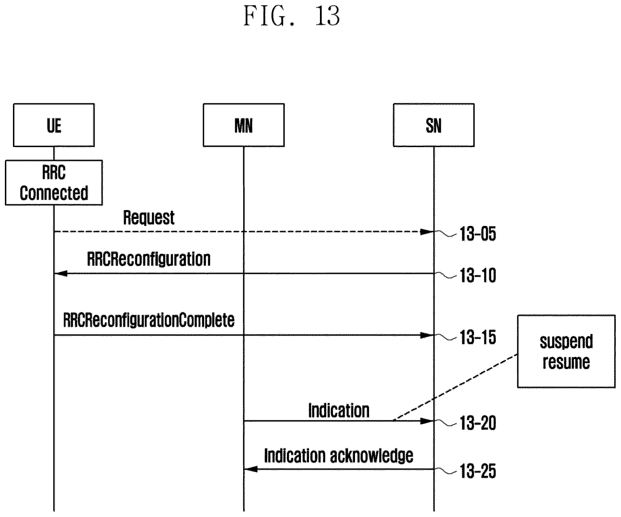

FIG. 13 is a diagram illustrating a third signaling procedure for configuring or releasing dual connectivity, or activating or resuming or suspending or deactivating an SCG configured with dual connectivity according to an embodiment of the disclosure.

In FIG. 13, a UE may configure an RRC connection with a network or a BS as shown in FIG. 6 of the disclosure, and may perform data transmission or reception with the BS (e.g., MCG, master node (MN), or cells (PCells or SCells) of MCG).

In FIG. 13, according to a configuration procedure of FIG. 6, the BS may configure the UE with SRB (e.g., SRB3) via which the UE and a secondary BS may directly transmit or receive a control message or an RRC message.

The BS (or a secondary BS or a master BS) may configure dual connectivity for the UE for a certain reason (e.g., when a high data rate is required, at a request of the UE (request 13-05), or when a high QoS requirement should be satisfied). For example, the UE may transmit, to the BS, a request to configure or release, or activate or deactivate, or resume or suspend dual connectivity, a cell group (e.g., SCG), or a cell, or may transmit, to the second BS, the request via the SRB3, and a message of the request may include a frequency (or channel) measurement result report or a cell group identifier or cell identifiers or measurement results (request 13-05). Alternatively, the secondary BS may determine whether to configure or release or add or deactivate or activate or resume or modify or reconfigure or suspend dual connectivity, a cell group (e.g., SCG), or a cell, by considering the amount of DL (or UL) data or the amount of buffer.

The secondary BS (SN) or an MCG may receive a frequency or channel measurement report for a frequency or a channel received from the UE, and may determine whether to configure or release or add or deactivate or activate or resume or modify or reconfigure or suspend dual connectivity, a cell group (e.g., SCG), or a cell. Alternatively, the secondary BS may determine whether to configure or release or add or deactivate or activate or resume or modify or reconfigure or suspend dual connectivity or a cell group (e.g., SCG) or a cell, by considering the amount of DL (or UL) data or the amount of buffer.

The secondary BS may transmit a first RRC message to the UE via the SRB3 so as to configure or release or add or deactivate or activate or resume or modify or reconfigure or suspend dual connectivity, a cell group (e.g., SCG), or a cell (RRCReconfiguration 13-10). In order to configure or release or add or deactivate or activate or resume or modify or reconfigure or suspend dual connectivity or a cell group (e.g., SCG) or a cell for the UE, each separate new request message may be defined and used in the first RRC message, or alternatively, a new indicator may be defined in an existing message (e.g., RRCReconfiguration message or RRCResume message) to indicate (or request) to configure or release or add or deactivate or activate or resume or modify or reconfigure or suspend a cell group (e.g., SCG) or a cell. The first RRC message may include at least some of a plurality of pieces of information below.
- First RRC message identifier (e.g., rrc-Transaction identifier) for identifying the first RRC message. Because the UE and the BS (e.g., secondary BS) transmit or receive a plurality of RRC messages therebetween, an identifier for identifying each RRC message may be included in the RRC message. For example, the same first RRC identifier may be included in an RRC message (e.g., RRCReconfiguration) transmitted by a transmitting end, or an RRC message (e.g., RRCReconfigurationComplete) corresponding to the RRC message (e.g., RRCReconfiguration) transmitted by a receiving end, or an RRC message corresponding to the RRC message transmitted by the transmitting end.
- Configuration information or an indicator (e.g., configuration information or an indicator for the UE) for configuring or releasing or adding or deactivating or activating or resuming or modifying or reconfiguring or suspending dual connectivity or a cell group (e.g., SCG) or a cell.
- Indicator indicating a state of a cell group (e.g., active or inactive or suspended or resumed).
- Cell group identifier for identifying cell groups: the cell group identifier may be allocated by the master BS, or one identifier from among already preset identifiers may be allocated by the secondary BS.
- Cell group or cell configuration information.
- Bearer configuration information. For example, indicator information indicating an operation of a protocol layer (e.g., SDAP layer or PDCP layer or RLC layer or MAC layer) of each bearer (e.g., PDCP suspension indicator or PDCP reestablishment indicator or PDCP data recovery indicator or RLC reestablishment indicator or MAC partial reset indicator or MAC reset indicator or indicator triggering new operation).
- If configuration information or an indicator for configuring or adding or activating or resuming or modifying or reconfiguring dual connectivity or a cell group (e.g., SCG) or a cell is included, a first indicator (e.g., mobilityControlInfor or ReconfigurationWithSync) may also be included. However, when configuration information or an indicator for releasing or deactivating or reconfiguring or suspending dual connectivity or a cell group (e.g., SCG) or a cell is included, the first indicator (e.g., mobilityControlInfor or ReconfigurationWithSync) may not be included. The first indicator may be an indicator to trigger a random access procedure in the cell group or the cell, or an indicator to perform signal synchronization with a new cell, or an indicator indicating to perform frequency shift of the UE, or an indicator indicating to modify the cell group (or cell). Alternatively, the UE may perform PDCCH monitoring in the indicated or configured cell group or cell, and may trigger and perform a random access procedure according to an indication indicated in the PDCCH. For example, an upper layer (e.g., RRC layer) may transmit an indicator to trigger a random access procedure to a lower layer (e.g., MAC layer).
- If configuration information or an indicator for configuring or adding or activating or resuming or modifying or reconfiguring dual connectivity or a cell group (e.g., SCG) or a cell is included, random access configuration information may also be included. When configuration information or an indicator for releasing, deactivating, reconfiguring, or suspending dual connectivity, a cell group (e.g., SCG), or a cell is included, the random access configuration information may not be included. The random access configuration information may include random access transport resource information (time or frequency transport resource) for preamble transmission for the cell group or the cell or designated preamble information for the cell group or cell.
- Time information indicating when to activate or resume or deactivate or suspend dual connectivity or a cell group (e.g., SCG) or a cell (PSCell or SCG SCell) (e.g., information indicating a timing (e.g., X), a time unit, a subframe, a time slot, or a symbol unit, for example, when the message is received in an nth time unit, time information indicating whether to activate or resume or deactivate or suspend a cell in an n+Xth time unit);
- First channel measurement configuration information for each cell or each BWP;
- Second channel measurement configuration information for each cell or each BWP;
- Indicator indicating addition of cell group configuration or an indicator (ReconfigurationWithSync) indicating cell group modification or an indicator (ReconfigurationWithSync or newly defined indicator) indicating a random access procedure;
- Indicator (ReconfigurationWithSync or newly defined indicator) indicating whether to activate a cell group by performing a random access procedure or to activate the cell group without the random access procedure, when activation of the cell group;
- Radio Resource Management (RRM) configuration information or frequency measurement configuration information or configuration information of separate RRM to be applied or performed to deactivate a cell group or frequency measurement configuration information (e.g., frequency measurement configuration information (Reduced or Relaxed RRM configuration information simplified for reduction of battery power consumption); and
- Configuration information for RLM or configuration information for RLM to be applied or performed to deactivate a cell group. For example, the configuration information for RLM or the configuration information for RLM to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for RLM or the configuration information for RLM to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for RLM or the configuration information for RLM to be applied or performed to deactivate a cell group may include configuration information of an SSB or CSI-RS or RS to be measured, transport resource information (e.g., PUCCH configuration information (e.g., SR information or specific transport resource) or frequency transport resource or time transport resource) on which a result can be reported when a beam failure occurs. Also, the configuration information may include BWP configuration information (e.g., may be indicated as a BWP identifier) indicating on which BWP the RLM procedure is to be performed). Alternatively, when a cell group is in an inactivate state, the UE may perform the RLM procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the RLM procedure on a BWP that was last (or previously) activated before the cell group is deactivated, so that a connected state with respect to the cell group may be continuously maintained (e.g., a case where BWP configuration information indicating on which BWP the RLM procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the RLM procedure is to be performed is not configured when activation of the cell group, the UE may perform the RLM procedure on the BWP that was last (or previously) activated. Also, the configuration information may include beam-associated configuration information (which may be indicated as a BWP identifier or TCI state or QCL configuration information) indicating on which beam the RLM procedure is to be performed. Alternatively, when the cell group is in an inactivate state, the UE may perform the RLM procedure on a beam (e.g., TCI state or QCL configuration information) configured by the RRC message or may perform the RLM procedure by activating the beam, and may early monitor the beam to be activated to activate the cell group, so that latency in activation of the cell group may be minimized. Alternatively, when a state of the cell group is configured as an inactive state (or an active state), the UE may perform the RLM procedure on a beam that was last (or previously) activated before the cell group is deactivated, so that a connected state with respect to the cell group may be continuously maintained (e.g., a case where beam-associated configuration information indicating on which beam the RLM procedure is to be performed is not configured), or when the UE activates the cell group, the UE may perform an activation procedure on a beam configured by the RRC message. If the beam-associated configuration information indicating on which beam the RLM procedure is to be performed is not configured when activation of the cell group, the UE may perform the RLM procedure on the beam that was last (or previously) activated.
- Configuration information for a BFD procedure or BFD or configuration information for BFD to be applied or performed to deactivate a cell group. For example, the configuration information for a BFD procedure or BFD or the configuration information for BFD to be applied or performed to deactivate a cell group may correspond to configuration information of a beam for each cell or each BWP, wherein the beam is to be measured by the UE when the cell group is deactivated, and may include beam-associated configuration information (TCI state or QCL). Alternatively, the configuration information for a BFD procedure or BFD or the configuration information for BFD to be applied or performed to deactivate a cell group may include a TA value (or offset value) for synchronization of a DL signal of the BS or synchronization of a UL signal of the BS, a timer (TAT) indicating validity of the TA value, or a TAT value. Alternatively, the configuration information for a BFD procedure or BFD or the configuration information for BFD to be applied or performed to deactivate a cell group may include configuration information of an SSB or CSI-RS or RS to be measured, or when a beam failure occurs, transport resource information (e.g., PUCCH configuration information (e.g., SR information or specific transport resource) or frequency transport resource or time transport resource) on which a result can be reported. Also, the configuration information may include BWP configuration information (e.g., may be indicated as a BWP identifier) indicating on which BWP the BFD procedure is to be performed). Alternatively, when a cell group is in an inactivate state, the UE may perform the BFD procedure on an initial active BWP (or an initial active DL BWP, firstActiveDownlinkBWP-ID) configured by the RRC message, so that the initial active BWP to be activated to activate the cell group is early monitored and thus latency in activation of the cell group may be minimized. Alternatively, when a state of the cell group is configured as an inactive state (or an active state), the UE may perform the BFD procedure on a BWP that was last (or previously) activated before the cell group is deactivated, so that a connected state with respect to the cell group may be continuously maintained (e.g., a case where BWP configuration information indicating on which BWP the BFD procedure is to be performed is not configured), or when the UE activates the cell group, the UE may perform an activation procedure on an initial active BWP (or an initial active DL BWP, firstActiveDownlinkBWP-ID) configured by the RRC message. If the BWP configuration information indicating on which BWP the BFD procedure is to be performed is not configured when activation of the cell group, the UE may perform the BFD procedure on the BWP that was last (or previously) activated. Also, the configuration information may include beam-associated configuration information (which may be indicated as a BWP identifier or TCI state or QCL configuration information) indicating on which beam the BFD procedure is to be performed. Alternatively, when the cell group is in an inactivate state, the UE may perform the BFD procedure on a beam (e.g., TCI state or QCL configuration information) configured by the RRC message, so that the beam to be activated to activate the cell group may be early monitored, and thus, latency in activation of the cell group may be minimized. Alternatively, when a state of the cell group is configured as an inactive state (or an active state), the UE may perform the BFD procedure on a beam that was last (or previously) activated before the cell group is deactivated, so that a connected state with respect to the cell group may be continuously maintained (e.g., a case where beam-associated configuration information indicating on which beam the BFD procedure is to be performed is not configured), or when the UE activates the cell group, the UE may perform an activation procedure on a beam configured by the RRC message. If the beam-associated configuration information indicating on which beam the BFD procedure is to be performed is not configured when activation of the cell group, the UE may perform the BFD procedure on the beam that was last (or previously) activated.

When the UE receives a first RRC message 13-15 via SRB3, the UE may read and identify the first RRC message and may configure or add or modify or resume or suspend or deactivate dual connectivity or a cell group (e.g., SCG). Also, when a first indicator to trigger a random access procedure is included in the first RRC message, the UE may trigger the random access procedure for the configured or indicated cell group or cell. When the random access procedure is performed, if there is random access information in the RRC message or if there is stored random access information, the UE may perform a random access procedure (e.g., CFRA procedure (e.g., 4-step random access or 2-step random access)), based on the stored random access information, or the random access information received in the RRC message, or system information. When there is no random access information in the RRC message, the UE may perform a random access procedure (e.g., CBRA procedure (e.g., 4-step random access or 2-step random access)). Alternatively, the UE may perform PDCCH monitoring in the indicated or configured cell group or cell, and may trigger and perform a random access procedure according to an indication indicated in the PDCCH. For example, an upper layer (e.g., RRC layer) may transmit an indicator to trigger a random access procedure to a lower layer (e.g., MAC layer).

The UE may receive a first RRC message (RRCReconfiguration 13-10) or may apply received configuration information and generate a second RRC message, thereby transmitting the second RRC message to the secondary BS via SRB3 (13-15). The second RRC message may include at least some of a plurality of pieces of information below.
- First RRC message identifier having the same value as a first RRC message identifier included in the first RRC message;
- Indicator or an identifier indicating that the first RRC message is successfully received; and

When the BS (e.g., secondary BS) receives the second RRC message, the BS may determine whether the second RRC message is a response message to the first RRC message via a first identifier. When the BS identifies the first RRC message, the BS may transmit, to the master BS or an MCG BS, an indication message including an indication indicating that a cell group has been configured or added or released or activated or resumed or suspended or deactivated through an Xn interface (e.g., interface between BSs) or an Sn interface (interface between a BS and an AMF or a UMF, or interface between BSs) (13-20). The indication message may include at least some of a plurality of pieces of information below.
- Identifier for identifying the indication message;
- Configuration information or an indicator (e.g., configuration information or an indicator for the SCG) indicating that dual connectivity or a cell group or a cell has been configured or released or added or deactivated or activated or resumed or modified or reconfigured or suspended; and

When the BS (e.g., master BS) receives the indication message, the BS may read or identify configuration information or a message included in the indication message, may generate an indication acknowledgement message as a response message to the indication message, and may transmit the indication acknowledgement message to the secondary BS (13-25). The indication acknowledgement message may include at least one of the following information:
- Identifier having the same value as an identifier included in the indication message;
- Indicator or an identifier indicating that the indication message is successfully received;
- Response indicator indicating that the indication message is successfully applied; and

In the disclosure, when the BS transmits a message to the UE so as to configure or indicate, to the UE, cell group or cell configuration information proposed in the disclosure, for example, when configuration information or an indication is included in the message so as to configure or add or activate or resume or modify or reconfigure dual connectivity or cell group (or SCG) or a cell, SDAP configuration information may be included in the message or may be reconfigured or mapping configuration information about a bearer of a SDAP layer and QoS flow may be included in the message or may be configured or reconfigured. However, when configuration information or an indication to release or deactivate or reconfigure or suspend dual connectivity or cell group (or SCG) or a cell is included, SDAP configuration information may not be included in the message or may not be reconfigured or mapping configuration information about a bearer of a SDAP layer and QoS flow may not be included in the message or may not be configured or reconfigured or application may be suspended.

The signaling procedures according to the disclosure may be combined and modified, and thus may be extended to new signaling procedures.

The signaling procedures according to the disclosure may be extended to multiple access technology. For example, configuration information of a plurality of cell groups may be configured for a UE via an RRC message, and one or more cell groups (or cells) from among the configured cell groups may be activated or resumed via an indicator of a PDCCH, or MAC control information or an RRC message or one or more cell groups may be suspended or deactivated.

In the disclosure, when dual connectivity or a cell group (e.g., SCG) or a cell (PSCell or SCG SCell) is activated or resumed or added or deactivated or released or suspended, UE operations for each cell (PSCell or SCG SCell) or UE operations for each protocol layer (e.g., SDAP layer or PDCP layer or RLC layer or MAC layer or PHY layer) will now be described.
- 1> If a UE receives configuration information or an indicator (e.g., via DCI of a PDCCH or MAC control information or an RRC message) for configuring or adding or activating or resuming or modifying or reconfiguring dual connectivity or a cell group (e.g., SCG) or a cell or a previous state of the cell group was in an inactive state or the UE was in a connected mode, the UE may perform at least some of procedures below.
   ■ 2> An upper layer (e.g., RRC layer) may indicate the configuration information or the indicator to a lower layer (e.g., PDCP layer or RLC layer or MAC layer or PHY layer).
   ■ 2> UE operation for PSCell: When the UE receives the configuration information or the indicator, the UE may maintain a PSCell in an active state, may activate a DL BWP of the PSCell to a normal BWP (e.g., first active BWP or BWP other than a dormant BWP) or a last activated BWP configured by the RRC message, and may perform a UE operation on the activated BWP. Alternatively, when the UE receives the configuration information or the indicator, the UE may maintain a PSCell in an active state, may reconfigure or switch a PDCCH monitoring period or a DRX configuration period of the PSCell to a short period based on first DRX configuration information, and may perform PDCCH monitoring and perform a UE operation of the active cell. By using the method, the UE may perform a UE operation for the PSCell, thereby rapidly receiving a scheduling indication from a cell group or a cell and starting data transmission or reception. Also, in the above case, in order to further rapidly receive a scheduling indication from a cell group or a cell and start data transmission or reception, the UE may measure many or frequent channel signals based on first channel measurement configuration information configured by the RRC message and may rapidly report a channel measurement result to a BS. When a certain condition is satisfied, the UE may measure a channel signal again based on second channel measurement configuration information and may report a measurement result to the BS.
   ■ 2> UE operation for SCell of SCG: When the UE receives the configuration information or the indicator, the UE may activate an SCell of an SCG, may activate a DL BWP or a UL BWP to a BWP (e.g., first active BWP) configured by the RRC message, and may perform a UE operation of the activated SCell or BWP. Alternatively, when the UE receives the configuration information or the indicator, if a dormant BWP is configured for the SCell of the SCG, the UE may maintain the SCell in an active state, may activate a DL BWP of the SCell to a BWP (e.g., first active BWP) configured by the RRC message, and may perform a UE operation on the activated BWP, and alternatively, if a dormant BWP is not configured for the SCell of the SCG, the UE may switch the SCell to an active state, may activate a DL BWP or a UL BWP to a BWP (e.g., first active BWP) configured by the RRC message, and may perform a UE operation of the activated SCell or BWP. Alternatively, when the UE receives the configuration information or the indicator, the UE may determine switching or activation or deactivation of a BWP or a state of the SCell according to SCell configuration information or an indicator configured in a message including the configuration information or the indicator and may perform a UE operation.
   ■ 2> UE operation of MAC layer for SCG: When the UE receives the configuration information or the indicator, the UE may perform a MAC reset procedure on a MAC layer (e.g., may initialize or release configuration information configured in the MAC layer, and may stop or initialize configured timers or may suspend or initialize an HARQ procedure). For example, a timing advance timer (TAT) indicating the validity of signal synchronization between the UE and the BS may be considered as stopped or expired. Alternatively, when the UE receives the configuration information or the indicator, the UE may perform a MAC partial reset procedure (or when an indicator indicating a MAC partial reset procedure is included in a message including the configuration information or the indicator, the UE may perform a MAC partial reset procedure). For example, the TAT indicating the validity of signal synchronization between the UE and the BS may be continuously maintained, or HARQ retransmission in retransmission may be continuously performed. Alternatively, the UE may not perform any procedure on the MAC layer and may maintain a current configuration. Also, when an indication to trigger a random access procedure is indicated from an upper layer (e.g., RRC layer), or the TAT is stopped or expired, the UE may trigger a random access procedure. Alternatively, when the TAT is not stopped or expired, the UE may not trigger nor perform a random access procedure. This is because, when the TAT is running, signal synchronization with the SCG is matched or maintained, and thus, an unnecessary random access procedure may be performed. Alternatively, when the BS triggers a random access procedure, according to an indication of a PDCCH, the UE may trigger the random access procedure, and may set or adjust a TA value or may start a TA timer. After the UE completes the random access procedure, the UE may resume or activate an SCG and may restart data transmission or reception. The UE may perform a CBRA procedure as the random access procedure. Alternatively, if dedicated random access configuration information (dedicated RACH config or dedicated preamble) is configured (or included) in a message (or a pre-received message) indicating cell group activation or resumption, the UE may perform a CFRA procedure when the UE performs the random access procedure, or if dedicated random access configuration information (dedicated RACH config or dedicated preamble) is not configured (or not included) in a message (or a pre-received message) indicating cell group activation or resumption, the UE may perform a CBRA procedure or may not perform the random access procedure. When it is configured (or indicated) to activate the cell group (e.g., the SCG) (or a state of the cell group is not configured as an inactive state), the UE may reset a MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). When the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. If the MAC layer is not reset or is not partially reset, data stored in a DL buffer of the UE is not flushed such that an error may occur in soft combining when data is received at a later time (e.g., when a cell group is activated or thereafter), or data in a UL buffer (e.g., messages buffer or message buffer) is not flushed such that an error may occur as old data is transmitted when data is transmitted at a later time (e.g., when a cell group is activated or thereafter).
   ■ 2> Operation for data radio bearer (DRB) configured for SCG: When the UE receives the configuration information or the indicator, the UE may resume DRBs (or SCG (SN) terminated DRBs or DRBs with a PDCP layer configured for the SCG or a bearer using a RLC UM mode or a bearer using an RLC AM mode) included in the SCG. For example, for a split bearer with a PDCP layer configured for an MCG (bearer for which one RLC layer is configured for the MCG and another RLC layer is configured for the SCG), an indicator (reestablishRLC) to trigger a procedure of reestablishing the RLC layer configured for the SCG may also be included in the RRC message including the configuration information or the indicator, and alternatively, the UE may perform a reestablishment procedure on the RLC layer configured for the SCG. For example, for a split bearer with a PDCP layer configured for the SCG (bearer for which one RLC layer is configured for the MCG and another RLC layer is configured for the SCG), an indicator (reestablishRLC) to trigger a procedure of reestablishing the RLC layer configured for the MCG may also be included, or an indicator to trigger a PDCP reestablishment procedure (reestablishPDCP) or a PDCP resume procedure (PDCP resume) in the PDCP layer configured for the SCG may also be included, in the RRC message including the configuration information or the indicator, and alternatively, the UE may perform a reestablishment procedure on the RLC layer configured for the MCG, or may perform a PDCP reestablishment procedure or a PDCP resume procedure in the PDCP layer configured for the SCG. For example, for a bearer configured for the SCG, the UE may resume bearers, or may indicate an RRC layer to trigger a PDCP reestablishment procedure or a PDCP resume procedure in a PDCP layer, or may perform the PDCP reestablishment procedure or the PDCP resume procedure in the PDCP layer. The UE may trigger a first PDCP resume procedure for bearers (or, a bearer using a RLC UM mode or a bearer using a RLC AM mode) configured for the SCG, or may perform the first PDCP resume procedure in a PDCP layer. Alternatively, in order to solve a security issue problem which occurs when different data are transmitted with the same security key when the SCG is activated or resumed, the UE may trigger a second PDCP resume procedure for bearers (or, a bearer using a RLC UM mode or a bearer using a RLC AM mode) configured for the SCG, or a second PDCP resume procedure may be performed in a PDCP layer. Alternatively, when a PDCP layer resume procedure is triggered in an upper layer, a first PDCP resume procedure may be triggered and performed, and when a PDCP layer resume procedure is triggered in an upper layer or an indicator to activate or resume a cell group (or cell) is indicated, a second PDCP resume procedure may be triggered and performed. Alternatively, in order to solve a security issue problem occurring when different data are transmitted with the same security key, when the BS indicates an indicator to activate or resume a cell group (or cell), the BS may configure a new security key including security key configuration information (e.g., sk-counter) in an RRC message including an indicator to activate or resume a cell group (or cell) and may modify or update the security key, or may include a PDCP reestablishment procedure indicator in the RRC message to modify or update a security key of bearers (or, a bearer using a RLC UM mode or a bearer using a RLC AM mode) configured for the SCG, or the UE may perform a PDCP reestablishment procedure on the bearers. Alternatively, if security configuration information is included in a message including an indication of resumption or activation of a cell group, or modification (or update) of the security configuration information is indicated or an indicator indicating a first PDCP resume procedure is included, the UE may trigger the first PDCP resume procedure with respect to bearers (or, a bearer using a RLC UM mode or a bearer using a RLC AM mode) configured for the SCG or may perform the first PDCP resume procedure in a PDCP layer. However, if security configuration information is not included in a message including an indication of resumption or activation of a cell group, or modification (or update) of the security configuration information is not indicated or an indicator indicating a second PDCP resume procedure is included, in order to solve a security issue problem occurring when different data are transmitted with the same security key when the SCG is activated or resumed, the UE may trigger the second PDCP resume procedure with respect to bearers (or, a bearer using a RLC UM mode or a bearer using a RLC AM mode) configured for the SCG or may perform the second PDCP resume procedure in the PDCP layer. The proposed methods may be performed when a message including an indication of suspension or deactivation of the cell group is received. Also, the proposed methods may be applied to SCG bearers (bearers with PDCP layer configured for the SCG or SCG terminated bearers).
   ■ 2> Operation for SRB configured for SCG: When the UE receives the configuration information or the indicator and activates a PSCell, or when an activated DL BWP of the PSCell is a normal BWP other than a dormant BWP or an activated PSCell monitors the PDCCH with a long period based on first DRX configuration information, SRBs (or SN (SCG) terminated SRBs or SRBs or SRB3s with a PDCP layer configured for the SCG) included in the SCG may be continuously maintained (e.g., the UE may continuously transmit or receive a control message to or from a secondary BS). Alternatively, in order to discard a plurality of pieces of invalid data (PDCP SDU or PDCP PDU) stored in the SRBs configured for the SCG, the UE may perform a data discard procedure (e.g., a discard indication to a PDCP layer or a RLC layer reestablishment procedure) Alternatively, when the UE receives the configuration information or the indicator, the UE may resume SRBs (or SN (SCG) terminated SRBs or SRBs or SRB3s with a PDCP layer configured for the SCG) included in the SCG. Alternatively, in order to discard a plurality of pieces of old data (PDCP SDU or PDCP PDU) stored in the SRBs configured for the SCG, the UE may perform a data discard procedure (e.g., a discard indication to a PDCP layer) or a RLC layer reestablishment procedure. For example, for a split bearer (bearer via which one RLC layer is configured for the MCG and another RLC layer is configured for the SCG) with a PDCP layer configured for the MCG, an indicator (reestablishRLC) to trigger a procedure of reestablishing the RLC layer configured for the SCG may also be included in the RRC message including the configuration information or the indicator, or alternatively, the UE may perform a reestablishment procedure on the RLC layer configured for the SCG. For example, for a split bearer (bearer via which one RLC layer is configured for an MCG and another RLC layer is configured for an SCG) with a PDCP layer configured for the SCG, an indicator (reestablishRLC) to trigger a procedure of reestablishing the RLC layer configured for an MCG may also be included, or an indicator to trigger a PDCP reestablishment procedure (reestablishPDCP) or a PDCP resume procedure (PDCP resume) in the PDCP layer configured for the SCG may also be included in the RRC message including the configuration information or the indicator, or alternatively, the UE may perform a reestablishment procedure on the RLC layer configured for the MCG, or may perform a PDCP reestablishment procedure or a PDCP resume procedure in the PDCP layer configured for the SCG. For example, for a bearer configured for the SCG, the UE may resume bearers, or may indicate an RRC layer to trigger a PDCP reestablishment procedure or a PDCP resume procedure in a PDCP layer, or may perform the PDCP reestablishment procedure or the PDCP resume procedure in the PDCP layer. The UE may trigger a first PDCP resume procedure for bearers configured for the SCG, or may perform the first PDCP resume procedure in a PDCP layer. Alternatively, in order to solve a security issue problem occurring when different data are transmitted with the same security key when the SCG is activated or resumed, the UE may trigger a second PDCP resume procedure for bearers configured for the SCG, or may perform a second PDCP resume procedure in a PDCP layer. Alternatively, when a PDCP layer resume procedure is triggered in an upper layer, a first PDCP resume procedure may be triggered and performed, and when a PDCP layer resume procedure is triggered in an upper layer or an indicator to activate or resume a cell group (or cell) is indicated, a second PDCP resume procedure may be triggered and performed. Alternatively, in order to solve a security issue problem occurring when different data are transmitted with the same security key, when the BS indicates an indicator to activate or resume a cell group (or cell), the BS may configure a new security key including security key configuration information (e.g., sk-counter) in an RRC message including an indicator to activate or resume a cell group (or cell) and may change or update the security key, or may include a PDCP reestablishment procedure indicator in the RRC message to modify or update a security key of bearers configured for the SCG, or the UE may perform a PDCP reestablishment procedure on the bearers. Alternatively, if security configuration information is included in a message including an indication of resumption or activation of a cell group, or modification (or update) of the security configuration information is indicated or an indicator indicating a first PDCP resume procedure is included, the UE may trigger the first PDCP resume procedure with respect to bearers configured for the SCG or may perform the first PDCP resume procedure in a PDCP layer. However, if security configuration information is not included in a message including an indication of resumption or activation of a cell group, or modification (or update) of the security configuration information is not indicated or an indicator indicating a second PDCP resume procedure is included, in order to solve a security issue problem occurring when different data are transmitted with the same security key when the SCG is activated or resumed, the UE may trigger the second PDCP resume procedure with respect to bearers configured for the SCG or may perform the second PDCP resume procedure in the PDCP layer. The proposed methods may be performed when a message including an indication of suspension or deactivation of the cell group is received. Also, the proposed methods may be applied to SCG bearers (bearers with PDCP layer configured for the SCG or SCG terminated bearers).
   ■ 2> UE operation for PDCCH SCell of SCG: When the UE receives the configuration information or the indicator, the UE may activate a PDCCH SCell of an SCG, may activate a DL BWP or a UL BWP to a BWP (e.g., first active BWP) configured by the RRC message, and may perform a UE operation of the activated SCell or BWP. Alternatively, when the UE receives the configuration information or the indicator, if a dormant BWP is configured for the PDCCH SCell of the SCG, the UE may maintain the SCell in an active state, may activate a DL BWP of the SCell to a BWP (e.g., first active BWP) configured by the RRC message, and may perform a UE operation on the activated BWP, and alternatively, when a dormant BWP is not configured for the SCell of the SCG, the UE may switch the SCell to an active state, may activate a DL BWP or a UL BWP to a BWP (e.g., first active BWP) configured by the RRC message, and may perform a UE operation of the activated SCell or BWP. Alternatively, when the UE receives the configuration information or the indicator, the UE may determine switching or activation or deactivation of a BWP or a state of the SCell according to SCell configuration information or an indicator configured in a message including the configuration information or the indicator and may perform a UE operation. Alternatively, when the UE receives the configuration information or the indicator, the UE may apply, to the PUCCH SCell, first DRX configuration information (e.g., second DRX configuration information is suspended and the first DRX configuration information is reconfigured) configured by an RRC message, and may perform a UE operation on an activated SCell when PDCCH monitoring is possible.
   ■ 2> The UE may transmit, to the MCG or the SCG, an indicator indicating configuration or addition or activation or resumption or modification or reconfiguration of the cell group (e.g., the SCG) or the cell, and the indicator may be transmitted from the UE to the SCG (or BS) or the MCG (or BS) as a physical signal (e.g., HARQ ACK or NACK or new transport resource) or MAC control information or an RRC message.
   ■ 2> When the UE receives an indication indicating resumption or activation or addition of the cell group (e.g., the SCG) or the cell or a previous state of the cell group is an inactive state or the UE is in a connected mode, the UE may trigger, in a PDCP layer, a PDCP status report on configured SCG bearers or bearers connected to an SCG RLC layer or SCG split bearers or MCG bearers or MCG split bearers and may report it to the BS. By transmitting the PDCP status report, loss data between the UE and the BS or a state of window variables may be monitored such that synchronization between a transmission window and a reception window may be achieved.
- 1> If the UE receives configuration information or an indicator (e.g., as DCI of PDCCH or MAC control information or RRC message) for releasing or deactivating or reconfiguring or suspending dual connectivity or the cell group (e.g., the SCG) or the cell, or a previous state of the cell group is an active state or the UE is in a connected mode, the UE may perform some of procedures below.
   ■ 2> An upper layer (e.g., an RRC layer) may indicate the configuration information or the indicator to a lower layer (e.g., a PDCP layer or an RLC layer or a MAC layer or a PHY layer).
   ■ 2> UE operation for PSCell: When the UE receives the configuration information or the indicator, the UE may maintain a PSCell in an active state, may activate a DL BWP of the PSCell to a dormant BWP configured by the RRC message, and may perform a UE operation on the dormant BWP. Alternatively, when the UE receives the configuration information or the indicator, the UE may maintain a PSCell in an active state, may reconfigure or switch a PDCCH monitoring period or a DRX configuration period of the PS Cell to a very long period based on second DRX configuration information, and may perform PDCCH monitoring and perform a UE operation of the active cell. Alternatively, when the UE receives the configuration information or the indicator, the UE may deactivate a PS Cell and may perform a UE operation of the inactive cell. With the methods above, the UE performs the UE operation for the PSCell, thereby reducing battery power consumption of the UE.
   ■ 2> UE operation for SCell of SCG: When the UE receives the configuration information or the indicator, the UE may deactivate an SCell of an SCG, and may perform a UE operation of the deactivated SCell. Alternatively, when the UE receives the configuration information or the indicator, if a dormant BWP is configured for the SCell of the SCG, the UE may maintain the SCell in an active state, may activate a DL BWP of the SCell to a dormant BWP, and may perform a UE operation on the dormant BWP, and alternatively, if a dormant BWP is not configured for the SCell of the SCG, the UE may switch the SCell to an inactive state, and may perform a UE operation of the deactivated SCell or BWP. Alternatively, when the UE receives the configuration information or the indicator, the UE may determine switching or activation or deactivation of a BWP or a state of the SCell according to SCell configuration information or an indicator configured in a message including the configuration information or the indicator and may perform a UE operation.
   ■ 2> UE operation of MAC layer for SCG: When the UE receives the configuration information or the indicator, the UE may perform a MAC reset procedure on a MAC layer (e.g., may initialize or release configuration information configured in the MAC layer, and may stop or initialize configured timers or may suspend or initialize an HARQ procedure). For example, a timing advance timer (TAT) indicating the validity of signal synchronization between the UE and the BS may be considered as stopped or expired. Alternatively, in order to prevent data loss due to a reset procedure of the MAC layer, when the UE receives the configuration information or the indicator, the UE may perform a MAC partial reset procedure (or when an indicator indicating a MAC partial reset procedure is included in a message including the configuration information or the indicator, the UE may perform a MAC partial reset procedure). For example, the TAT indicating the validity of signal synchronization between the UE and the BS may be continuously maintained, or HARQ retransmission in retransmission may be continuously performed. Alternatively, the UE may not perform any procedure on the MAC layer and may maintain a current configuration. When the TAT is continuously maintained, if the TAT is expired, the UE may perform a random access procedure to re-adjust or set timing advance (TA) even when the SCG is suspended or deactivated. When the UE performs the random access procedure, the UE may indicate by an indicator (e.g., the UE may transmit the indicator including a buffer status report (MAC control information) and may indicate that there is no data to be transmitted or a new indicator may be introduced), to the BS, that this is the random access procedure to adjust the TA, or after the random access procedure is completed, the BS may transmit, to the UE, a message including an indication of resuspension or re-deactivation of a cell group, or after the random access procedure is completed, the UE may maintain the cell group as a suspended or deactivated state (or, without an indication from the BS, the UE may autonomously maintain the cell group as a suspended or deactivated state). Alternatively, when the TAT keeps running, if the TAT is expired, as the BS runs the same TAT, the BS may trigger a random access procedure (for TA adjustment or reset) to the UE via a cell (PCell or SCell or PSCell) of the MCG or the SCG, or may transmit, to the UE, a message including an indicator of resumption or activation of the cell group. When it is configured (or indicated) to activate a cell group (e.g., an SCG) (or a state of the cell group is not configured as an inactive state), the UE may reset the MAC layer (MAC reset). The MAC layer reset (MAC reset) procedure may be performed after the UE determines whether to perform a random access procedure or after the UE triggers the random access procedure or when the UE successfully completes the random access procedure (or after the UE completes the random access procedure) or when the UE activates the cell group without the random access procedure or when the UE successfully activates the cell group without the random access procedure (e.g., when a PDCCH is successfully received or a transport resource is received). This is because when the cell group is activated, if the MAC layer is first reset, a Time Alignment Timer (TAT) associated with the cell group or PTAG (or PSCell) is considered as expired, and thus, a procedure for activating the cell group without a random access procedure (RACH less activation) proposed in the disclosure cannot be performed (i.e., the cell group may be activated without a random access procedure only when the TAT is running). Alternatively, instead of the MAC layer reset procedure, a MAC layer partial reset (partial MAC reset) procedure may be performed. If the MAC layer is not reset or is not partially reset, data stored in a DL buffer of the UE is not flushed such that an error may occur in soft combining when data is received at a later time (e.g., when a cell group is activated or thereafter), or data in a UL buffer (e.g., messages buffer or message buffer) is not flushed such that an error may occur as old data is transmitted when data is transmitted at a later time (e.g., when a cell group is activated or thereafter).
   ■ 2> Operation for data radio bearer (DRB) (a bearer using a RLC UM mode or a bearer using an RLC AM mode) configured for SCG: When the UE receives the configuration information or the indicator, the UE may suspend DRBs (or SCG (SN) terminated DRBs or DRBs with a PDCP layer configured for the SCG or a bearer using a RLC UM mode or a bearer using an RLC AM mode) included in the SCG. For example, for a split bearer (bearer via which one RLC layer is configured for the MCG and another RLC layer is configured for the SCG) with a PDCP layer configured for the MCG, an indicator (reestablishRLC) to trigger a procedure of reestablishing the RLC layer configured for the SCG may also be included, or an indicator to trigger a PDCP data recovery procedure in the PDCP layer configured for the MCG may also be included, in the RRC message including the configuration information or the indicator, or the UE may perform a reestablishment procedure on the RLC layer configured for the SCG, or may perform a PDCP data recovery procedure in the PDCP layer configured for the MCG. For example, for a split bearer with a PDCP layer configured for the SCG (bearer for which one RLC layer is configured for the MCG and another RLC layer is configured for the SCG), an indicator (reestablishRLC) to trigger a procedure of reestablishing the RLC layer configured for the MCG may also be included, or an indicator to trigger a PDCP reestablishment procedure (reestablishPDCP) or a PDCP suspend procedure (PDCP suspend in the PDCP layer configured for the SCG may also be included, in the RRC message including the configuration information or the indicator, and alternatively, the UE may perform a reestablishment procedure on the RLC layer configured for the MCG, or may perform a PDCP reestablishment procedure or a PDCP suspend procedure in the PDCP layer configured for the SCG. For example, for a bearer (or, a bearer using a RLC UM mode or a bearer using a RLC AM mode) configured for the SCG, the UE may suspend bearers, or may indicate an RRC layer to trigger a PDCP reestablishment procedure or a PDCP suspend procedure in a PDCP layer, or may perform the PDCP reestablishment procedure or the PDCP suspend procedure in the PDCP layer. The UE may trigger a first DPCP suspend procedure for bearers (or, a bearer using a RLC UM mode or a bearer using a RLC AM mode) configured for an SCG, or may perform a first PDCP suspend procedure in the PDCP layer. Alternatively, in order to solve a security issue problem occurring when different data are transmitted with the same security key when the SCG is activated or resumed, the UE may trigger a second PDCP suspend procedure for bearers (or, a bearer using a RLC UM mode or a bearer using a RLC AM mode) configured for the SCG, or may perform a second PDCP suspend procedure in the PDCP layer. Alternatively, when a PDCP layer suspend procedure is triggered in a higher layer, a first PDCP suspend procedure may be triggered and performed, and when a PDCP layer suspend procedure is triggered in a higher layer or an indicator to deactivate or suspend a cell group (or cell) is indicated, a second PDCP suspend procedure may be triggered and performed. Alternatively, if security configuration information is included in a message including an indication of suspension or deactivation of a cell group, or modification (or update) of the security configuration information is indicated or an indicator indicating a first PDCP suspend procedure is included, the UE may trigger the first PDCP suspend procedure with respect to bearers (or, a bearer using a RLC UM mode or a bearer using a RLC AM mode) configured for the SCG or may perform the first PDCP suspend procedure in a PDCP layer. However, if security configuration information is not included in a message including an indication of suspension or deactivation of a cell group, or modification (or update) of the security configuration information is not indicated or an indicator indicating a second PDCP suspend procedure is included, in order to solve a security issue problem occurring when different data are transmitted with the same security key when the SCG is activated or resumed, the UE may trigger the second PDCP suspend procedure with respect to bearers (or, a bearer using a RLC UM mode or a bearer using a RLC AM mode) configured for the SCG or may perform the second PDCP suspend procedure in the PDCP layer. The proposed methods may be performed when a message including an indication of resumption or activation of the cell group is received. Also, the proposed methods may be applied to SCG bearers (bearers with PDCP layer configured for the SCG or SCG terminated bearers).
   ■ 2> Operation for SRB configured for SCG: When the UE receives the configuration information or the indicator and activates a PSCell, or when an activated DL BWP of the PSCell is a normal BWP other than a dormant BWP or an activated PSCell monitors the PDCCH with a long period based on second DRX configuration information, SRBs (or SN (SCG) terminated SRBs or SRBs or SRB3s with a PDCP layer configured for the SCG) included in the SCG may not be suspended but may be continuously maintained (e.g., the UE may continuously transmit or receive a control message to or from a secondary BS). Alternatively, in order to discard a plurality of pieces of invalid data (PDCP SDU or PDCP PDU) stored in the SRBs configured for the SCG, the UE may perform a data discard procedure (e.g., a discard indication to a PDCP layer) or a RLC layer reestablishment procedure Alternatively, when the UE receives the configuration information or the indicator, the UE may suspend SRBs (or SN (SCG) terminated SRBs or SRBs or SRB3s with a PDCP layer configured for the SCG) included in the SCG. Alternatively, in order to discard a plurality of pieces of old data (PDCP SDU or PDCP PDU) stored in the SRBs configured for the SCG, the UE may perform a data discard procedure (e.g., a discard indication to a PDCP layer) or a RLC layer reestablishment procedure. For example, for a split SRB bearer (bearer via which one RLC layer is configured for the MCG and another RLC layer is configured for the SCG) with a PDCP layer configured for the MCG, an indicator (reestablishRLC) to trigger a procedure of reestablishing the RLC layer configured for the SCG may also be included, or an indicator to trigger a PDCP data recovery procedure in the PDCP layer configured for the MCG may also be included, in the RRC message including the configuration information or the indicator, or the UE may perform a reestablishment procedure on the RLC layer configured for the SCG, or may perform a PDCP data recovery procedure in the PDCP layer configured for the MCG. For example, for a split bearer with a PDCP layer configured for the SCG (bearer for which one RLC layer is configured for the MCG and another RLC layer is configured for the SCG), an indicator (reestablishRLC) to trigger a procedure of reestablishing the RLC layer configured for the MCG may also be included, or an indicator to trigger a PDCP reestablishment procedure (reestablishPDCP) or a PDCP suspend procedure (PDCP suspend in the PDCP layer configured for the SCG may also be included, in the RRC message including the configuration information or the indicator, and alternatively, the UE may perform a reestablishment procedure on the RLC layer configured for the MCG, or may perform a PDCP reestablishment procedure or a PDCP suspend procedure in the PDCP layer configured for the SCG. For example, for a bearer configured for the SCG, the UE may suspend bearers, or may indicate an RRC layer to trigger a PDCP reestablishment procedure or a PDCP suspend procedure in a PDCP layer, or may perform the PDCP reestablishment procedure or the PDCP suspend procedure in the PDCP layer. The UE may trigger a first DPCP suspend procedure for bearers configured for an SCG, or may perform the first PDCP suspend procedure in the PDCP layer. Alternatively, in order to solve a security issue problem occurring when different data are transmitted with the same security key when the SCG is activated or resumed, the UE may trigger a second PDCP suspend procedure for bearers configured for the SCG, or may perform a second PDCP suspend procedure in the PDCP layer. Alternatively, when a PDCP layer suspend procedure is triggered in a higher layer, a first PDCP suspend procedure may be triggered and performed, and when a PDCP layer suspend procedure is triggered in a higher layer or an indicator to deactivate or suspend a cell group (or cell) is indicated, a second PDCP suspend procedure may be triggered and performed. Alternatively, if security configuration information is included in a message including an indication of suspension or deactivation of a cell group, or modification (or update) of the security configuration information is indicated or an indicator indicating a first PDCP suspend procedure is included, the UE may trigger the first PDCP suspend procedure with respect to bearers configured for the SCG or may perform the first PDCP suspend procedure in a PDCP layer. However, if security configuration information is not included in a message including an indication of suspension or deactivation of a cell group, or modification (or update) of the security configuration information is not indicated or an indicator indicating a second PDCP suspend procedure is included, in order to solve a security issue problem occurring when different data are transmitted with the same security key when the SCG is activated or resumed, the UE may trigger the second PDCP suspend procedure with respect to bearers configured for the SCG or may perform the second PDCP suspend procedure in the PDCP layer. The proposed methods may be performed when a message including an indication of resumption or activation of the cell group is received. Also, the proposed methods may be applied to SCG bearers (bearers with PDCP layer configured for the SCG or SCG terminated bearers).
   ■ 2> UE operation for PDCCH SCell of SCG: When the UE receives the configuration information or the indicator, the UE may deactivate a PDCCH SCell of an SCG, and may perform a UE operation of the deactivated SCell or BWP. Alternatively, when the UE receives the configuration information or the indicator, if a dormant BWP is configured for the PDCCH SCell of the SCG, the UE may maintain the SCell in an active state, may activate a DL BWP of the SCell to the dormant BWP, and may perform a UE operation in the dormant BWP, or alternatively, when a dormant BWP is not configured for the PDCCH SCell of the SCG, the UE may switch the SCell to an inactive state, and may perform a UE operation in the deactivated cell or BWP. Alternatively, when the UE receives the configuration information or the indicator, the UE may determine switching or activation or deactivation of a BWP or a state of the SCell according to SCell configuration information or an indicator configured in a message including the configuration information or the indicator and may perform a UE operation. Alternatively, when the UE receives the configuration information or the indicator, the UE may apply, to the PUCCH SCell, second DRX configuration information configured in an RRC message, and may perform a UE operation in an activated SCell when it is possible to perform PDCCH monitoring based on a long period.
   ■ 2> The UE may transmit, to the MCG or the SCG, an indicator indicating suspension or deactivation or release or modification of the cell group (e.g., the SCG) or the cell, and the indicator may be transmitted from the UE to the SCG (or BS) or the MCG (or BS) as a physical signal (e.g., HARQ ACK or NACK or new transport resource) or MAC control information or an RRC message.
   ■ 2> When the UE receives an indication indicating suspension or deactivation or release of the cell group (e.g., the SCG) or the cell, the UE may trigger, in a PDCP layer, a PDCP status report on configured SCG bearers or bearers connected to an SCG RLC layer or SCG split bearers or MCG bearers or MCG split bearers and may report it to the BS. This is because, by transmitting the PDCP status report, loss data between the UE and the BS or a state of window variables may be monitored such that synchronization between a transmission window and a reception window may be achieved.

A MAC reset procedure proposed in the disclosure may include procedures below as UE operation. For example, when an indication of resetting a MAC layer is received from an upper layer (or when a reset indication is requested), the MAC layer of the UE may perform procedures below as UE operation. However, a partial MAC reset procedure proposed in the disclosure may include one or more UE operations which are a part of or are modified from the procedures below. For example, when a partial reset indication with respect to the MAC layer is received (or a partial reset indication is received) from the upper layer, the MAC layer of the UE may perform one or more UE operations which are a part of or are modified from the procedures below. The MAC reset procedure or the partial MAC reset procedure may be indicated or performed for each cell group (e.g., MCG or SCG). For example, when an RRC message including an indicator of deactivation of a cell group (or a state of the cell group is configured as an inactive state) is received or a previous state of the cell group is an active state or the UE has been in an RRC connected mode, a part of the procedures below may be performed as the partial MAC reset procedure, or when an RRC message including an indicator of activation of a cell group (or a state of the cell group is configured as an active state) is received or a previous state of the cell group is an inactive state or the UE has been in an RRC connected mode, the other part of the procedures below may be performed as the partial MAC reset procedure.
- A value of Bj configured for each logical channel may be reset to zero. The value of Bj may be a value that remains by increasing, in advance of each Logical Channel Prioritization (LCP) procedure, by a value obtained by multiplying a prioritized Bit Rate (PBR) by T (where, PBR is configured for each logical channel by an RRC message and T is a time elapsed after last increase of Bj). If an RRC message including an indicator of deactivation of a cell group (or a state of the cell group is configured as an inactive state) is received or a previous state of the cell group is an active state or the UE has been in an RRC connected mode, when the RRC layer indicates to perform the partial MAC reset procedure, a procedure for initializing the value of Bj to zero, the value of Bj being configured for each logical channel, may be performed as an operation of the partial MAC reset procedure (this is to consider priority of data transmission by allowing the value of Bj to increase even when the cell group is in the inactive state). Alternatively, if an RRC message including an indicator of activation of a cell group (or a state of the cell group is configured as an active state) is received or a previous state of the cell group is an inactive state or the UE has been in an RRC connected mode, when the RRC layer indicates to perform the partial MAC reset procedure, a procedure for initializing the value of Bj to zero, the value of Bj being configured for each logical channel, may be performed as an operation of the partial MAC reset procedure (this is to further fairly consider priority of data transmission by allowing the value of Bj to increase when the cell group is activated).
- When there is a timer running in the MAC layer, all running timers may be stopped. The timer may include a data inactivity timer (DataInactivity Timer that may perform an operation of switching to an RRC idle mode when the timer is expired and may be restarted every transmission or reception of data) or a BWP inactivity timer or a TAT timer associated with a cell group (MCG or PCell or SCG or PSCell) or may be stopped. However, if an RRC message including an indicator of deactivation of a cell group (or a state of the cell group is configured as an inactive state) is received or a previous state of the cell group is an active state or the UE has been in an RRC connected mode, when the RRC layer indicates to perform the partial MAC reset procedure, a procedure (when there is any timer running in the MAC layer, all running timers are stopped) may not be performed but a procedure in which, if there is a timer running in the MAC layer, all timers are stopped other than a TAT timer associated with a cell group (SCG or PSCell) may be performed as an operation of the partial MAC reset procedure. In the partial MAC reset procedure, the timer may include a data inactivity timer (DataInactivity Timer that may perform an operation of switching to an RRC idle mode when the timer is expired and may be restarted every transmission or reception of data) or a BWP inactivity timer or may be stopped.
- All TAT timers may be considered as expired. When the TAT timer is expired, a HARQ buffer for all serving cells connected to or configured for the timer may be flushed or the RRC layer may be indicated to release a PUCCH resource or an SRS resource for the serving cells or a DL transport resource (any configured downlink assignment) or UL transmission (any configured uplink grants) configured for the MAC layer may be released. However, if an RRC message including an indicator of deactivation of a cell group (or a state of the cell group is configured as an inactive state) is received or a previous state of the cell group is an active state or the UE has been in an RRC connected mode, when the RRC layer indicates to perform the partial MAC reset procedure, a procedure (in which all TAT timers are considered as expired) may not be performed but a procedure for continuously maintaining all TAT timers associated with a cell group (SCG or PSCell) may be performed as an operation of the partial MAC reset procedure.
- New Data Indicator (NDI) values of all UL HARQ processes may be set to zero.
- If there is an ongoing random access procedure, the random access procedure may be suspended.
- If there are contention-free random access (CFRA) transport resources for a 4-step Random access (RA) type or a 2-step RA type explicitly signaled by an RRC message proposed in the disclosure, the CFRA transport resources may be discarded. However, if an RRC message including an indicator of deactivation of the cell group (or a state of the cell group is configured as an inactive state) is or was received or a previous state of the cell group is an active state or the UE has been in an RRC connected mode or the CFRA transport resource for a 4-step RA type or a 2-step RA type is configured (or included) in an RRC message, when the RRC layer indicates to perform the partial MAC reset procedure, a procedure for discarding the CFRA transport resource may not be performed but a procedure for continuously maintaining or storing a CFRA transport resource (or a CFRA random access procedure may be performed based on a CFRA transport resource when a cell group is activated) may be performed as an operation of the partial MAC reset procedure. However, if an RRC message including an indicator of deactivation of the cell group (or a state of the cell group is configured as an inactive state) is or was received by the UE or a previous state of the cell group is an active state or the UE has been in an RRC connected mode or the CFRA transport resource for a 4-step RA type or a 2-step RA type is not configured (or is not included) in an RRC message, when the RRC layer indicates to perform the partial MAC reset procedure, a procedure for discarding a CFRA transport resource may be performed as an operation of the partial MAC reset procedure. Alternatively, if there are CFRA transport resources for an explicitly signaled 4-step RA type or 2-step RA type proposed in the disclosure as an operation of the partial MAC reset procedure, the CFRA transport resources may be discarded.
- A message 3(Msg3) buffer may be flushed.
- A message A(MSGA) buffer may be flushed.
- If there is a triggered Scheduling Request (SR) procedure, the triggered SR procedure may be cancelled.
- If there is a triggered Buffer Status Report (BSR) procedure, the triggered BSR procedure may be cancelled.
- If there is a triggered Listen Before Talk (LBT) procedure, the triggered LBT procedure may be cancelled.
- If there is a triggered Beam Failure Recovery (BFR) procedure, the triggered BFR procedure may be cancelled.
- If there is triggered configured UL transport resource confirmation (configured uplink grant confirmation), the triggered configured UL transport resource confirmation may be cancelled.
- Soft buffers for all DL HARQ processes may be flushed.
- In each HARQ process, transmission (or a transport resource) to be received next for a certain Transmission Block (TB) may be considered as first transmission (or transport resource).
- If there is a temporary cell identifier (Temporary C-RNTI), the temporary cell identifier may be released.
- All beam failure counter variables (BFI_COUNTER) are initialized (e.g., values are set to zero). However, if an RRC message including an indicator of deactivation of a cell group (or a state of the cell group is configured as an inactive state) is received or a previous state of the cell group is an active state or the UE has been in an RRC connected mode or an RRC message has configuration information indicating to perform an RLM procedure or a BFD procedure or it is configured, in the configuration information associated with the RLM procedure or the BFD procedure, to continuously perform the RLM procedure or the BFD procedure on a current (or previous) active beam (TCI state) or a current (or previous) active BWP or it is not configured (or is not modified) from a previous beam or BWP to a new beam or new BWP, when the RRC layer indicates to perform the partial MAC reset procedure, a procedure (in which all beam failure counter variables (BFI_COUNTER) are initialized) may not be performed and a procedure for maintaining or continuously using beam failure counter variables (BFI_COUNTER) may be performed as an operation of the partial MAC reset procedure (this is because, if a reset procedure is performed when a beam or BWP is continuously used, beam failure or RLM detection may be delayed due to initialization of the counter variables). However, if an RRC message including an indicator of deactivation of a cell group (or a state of the cell group is configured as an inactive state) is received or a previous state of the cell group is an active state or the UE has been in an RRC connected mode or an RRC message does not have configuration information indicating to perform an RLM procedure or a BFD procedure or the RRC message has the configuration information indicating to perform the RLM procedure or the BFD procedure, and it is not configured, in the configuration information associated with the RLM procedure or the BFD procedure, to continuously perform the RLM procedure or the BFD procedure on a current (or previous) active beam (TCI state) or a current (or previous) active BWP or it is configured (or reconfigured or modified) from a previous beam or BWP to a new beam or new BWP, when the RRC layer indicates to perform the partial MAC reset procedure, a procedure (in which all beam failure counter variables (BFI_COUNTER) are initialized) may be performed as an operation of the partial MAC reset procedure (this is because, if a reset procedure is not performed when a beam or BWP is modified, beam failure or RLM detection may occur too early to maintain the counter variables). Alternatively, as an operation of the partial MAC reset procedure, all beam failure counter variables (BFI_COUNTER) may be always initialized.
- All LBT counter variables (LBT_COUNTER) may be initialized.

A partial MAC reset procedure of a MAC layer proposed in the disclosure may include one or more UE operation among procedures below. For example, when an indication of partial reset of the MAC layer is received from an upper layer (or when a partial reset indication is requested), the MAC layer of the UE may perform one or more UE operation among procedures below. A first embodiment of the partial MAC reset procedure proposed in the disclosure is as below.
- If an RRC message including an indicator of deactivation of a cell group (or a state of the cell group is configured as an inactive state) is received or a previous state of the cell group is an active state or the UE has been in an RRC connected mode, when the RRC layer indicates to perform the partial MAC reset procedure, a procedure for initializing the value of Bj to zero, the value of Bj being configured for each logical channel, may be performed as an operation of the partial MAC reset procedure (this is to consider priority of data transmission by allowing the value of Bj to increase even when the cell group is in the inactive state). Alternatively, if an RRC message including an indicator of activation of a cell group (or a state of the cell group is configured as an active state) is received or a previous state of the cell group is an inactive state or the UE has been in an RRC connected mode, when the RRC layer indicates to perform the partial MAC reset procedure, a procedure for initializing the value of Bj to zero, the value of Bj being configured for each logical channel, may be performed as an operation of the partial MAC reset procedure (this is to further fairly consider priority of data transmission by allowing the value of Bj to increase when the cell group is activated).
- If an RRC message including an indicator of deactivation of a cell group (or a state of the cell group is configured as an inactive state) is received or a previous state of the cell group is an active state or the UE has been in an RRC connected mode, when the RRC layer indicates to perform the partial MAC reset procedure, a procedure in which, if there is a timer running in the MAC layer, all timers are stopped other than a TAT timer associated with a cell group (SCG or PSCell) may be performed as an operation of the partial MAC reset procedure. In the partial MAC reset procedure, the timer may include a data inactivity timer (DataInactivity Timer that may perform an operation of switching to an RRC idle mode when the timer is expired and may be restarted every transmission or reception of data) or a BWP inactivity timer or may be stopped.
- If an RRC message including an indicator of deactivation of a cell group (or a state of the cell group is configured as an inactive state) is received or a previous state of the cell group is an active state or the UE has been in an RRC connected mode, when the RRC layer indicates to perform the partial MAC reset procedure, a procedure in which all TAT timers are considered as expired may not be performed but a procedure for continuously maintaining all TAT timers associated with a cell group (SCG or PSCell) may be performed as an operation of the partial MAC reset procedure.
- New Data Indicator (NDI) values of all UL HARQ processes may be set to zero.
- If there is an ongoing random access procedure, the random access procedure may be suspended.
- If an RRC message including an indicator of deactivation of the cell group (or a state of the cell group is configured as an inactive state) is or was received or a previous state of the cell group is an active state or the UE has been in an RRC connected mode or the CFRA transport resource for a 4-step RA type or a 2-step RA type is configured (or included) in an RRC message, when the RRC layer indicates to perform the partial MAC reset procedure, a procedure for continuously maintaining or storing a CFRA transport resource, not discarding the CFRA transport resource, (or a CFRA random access procedure may be performed based on a CFRA transport resource when a cell group is activated) may be performed as an operation of the partial MAC reset procedure. However, if an RRC message including an indicator of deactivation of the cell group (or a state of the cell group is configured as an inactive state) is or was received or a previous state of the cell group is an active state or the UE has been in an RRC connected mode or the CFRA transport resource for a 4-step RA type or a 2-step RA type is not configured (or is not included) in an RRC message, when the RRC layer indicates to perform the partial MAC reset procedure, a procedure for discarding a CFRA transport resource may be performed as an operation of the partial MAC reset procedure. Alternatively, if there are CFRA transport resources for an explicitly signaled 4-step RA type or 2-step RA type proposed in the disclosure as an operation of the partial MAC reset procedure, the CFRA transport resources may be discarded.
- A message 3(Msg3) buffer may be flushed.
- A message A(MSGA) buffer may be flushed.
- If there is a triggered Scheduling Request (SR) procedure, the triggered SR procedure may be cancelled.
- If there is a triggered Buffer Status Report (BSR) procedure, the triggered BSR procedure may be cancelled.
- If there is a triggered Listen Before Talk (LBT) procedure, the triggered LBT procedure may be cancelled.
- If there is a triggered BFR procedure, the triggered BFR procedure may be cancelled.
- If there is triggered configured UL transport resource confirmation (configured uplink grant confirmation), the triggered configured UL transport resource confirmation may be cancelled.
- Soft buffers for all DL HARQ processes may be flushed.
- In each HARQ process, transmission (or a transport resource) to be received next for a certain Transmission Block (TB) may be considered as first transmission (or transport resource).
- If there is a temporary cell identifier (Temporary C-RNTI), the temporary cell identifier may be released.
- If an RRC message including an indicator of deactivation of a cell group (or a state of the cell group is configured as an inactive state) is received or a previous state of the cell group is an active state or the UE has been in an RRC connected mode or an RRC message has configuration information indicating to perform an RLM procedure or a BFD procedure or it is configured, in the configuration information associated with the RLM procedure or the BFD procedure, to continuously perform the RLM procedure or the BFD procedure on a current (or previous) active beam (TCI state) or a current (or previous) active BWP or it is not configured (or is not modified) from a previous beam or BWP to a new beam or new BWP, when the RRC layer indicates to perform the partial MAC reset procedure, a procedure in which all beam failure counter variables (BFI_COUNTER) are initialized may not be performed but a procedure for maintaining or continuously using beam failure counter variables (BFI_COUNTER) may be performed as an operation of the partial MAC reset procedure (this is because, if a reset procedure is performed when a beam or BWP is continuously used, beam failure or RLM detection may be delayed due to initialization of the counter variables). However, if an RRC message including an indicator of deactivation of a cell group (or a state of the cell group is configured as an inactive state) is received or a previous state of the cell group is an active state or the UE has been in an RRC connected mode or an RRC message does not have configuration information indicating to perform an RLM procedure or a BFD procedure or the RRC message has the configuration information indicating to perform the RLM procedure or the BFD procedure, and it is not configured, in the configuration information associated with the RLM procedure or the BFD procedure, to continuously perform the RLM procedure or the BFD procedure on a current (or previous) active beam (TCI state) or a current (or previous) active BWP or it is configured (or reconfigured or modified) from a previous beam or BWP to a new beam or new BWP, when the RRC layer indicates to perform the partial MAC reset procedure, a procedure in which all beam failure counter variables (BFI_COUNTER) are initialized may be performed as an operation of the partial MAC reset procedure (this is because, if a reset procedure is not performed when a beam or BWP is modified, beam failure or RLM detection may occur too early to maintain the counter variables). Alternatively, as an operation of the partial MAC reset procedure, all beam failure counter variables (BFI_COUNTER) may be always initialized.
- All LBT counter variables (LBT_COUNTER) may be initialized.

When the MAC reset procedure is performed or an indicator of the partial MAC reset procedure is not included or the partial MAC reset procedure is not indicated or the partial MAC reset procedure is not performed, the UE may perform the entire MAC reset procedure, and thus the UE may flush all of the configured general HARQ process, HARQ process for MBS, and HARQ process for system information.

In the disclosure, hereinafter, proposed are MAC layer procedures to be performed by the UE when a cell group (or SCG) is configured as an inactive state or a BFD procedure is configured or an RLM procedure is configured, by an RRC message, for the UE for which dual connectivity is configured. For example, proposed is that, according to whether a state of the cell group which is configured by the RRC message is an inactive state or an active state, the UE performs different BFD procedures or different BFR procedures.
- 1> If the UE receives the RRC message and a BFD procedure or a first BFR procedure or a second BFR procedure is configured in the RRC message or a cell (PSCell or Scell) or a cell group for which the BFD procedure is configured is not configured as an inactive state (or is configured as an active state);
   ■ 2> the UE may perform the BFD procedure.
   ■ 2> If a beam failure is detected with respect to the cell (PSCell or Scell) or the cell group;
      ◆ 3> the first BFR procedure or the second BFR procedure proposed in the disclosure may be performed.
   ■ 2> If a random access procedure problem due to the beam failure is detected;
      ◆ 3> the UE may report, to the BS, the random access procedure problem due to the beam failure.
- 1> Otherwise, if the UE receives the RRC message and a BFD procedure or a first BFR procedure or a second BFR procedure is configured in the RRC message or a cell (PSCell or SCell) or a cell group (or SCG) is configured as an inactive state in the RRC message, and the BFD procedure or the first BFR procedure or the second BFR procedure is configured for the cell group or a cell or a cell group for which the BFD procedure is configured is configured as an inactive state.
   ■ 2> the UE may perform the BFD procedure.
   ■ 2> If a beam failure is detected with respect to the cell (PSCell or Scell) or the cell group;
      ◆ 3> the first BFR procedure or the second BFR procedure proposed in the disclosure may not be performed. This is because a random access procedure may be unnecessarily triggered for the deactivated cell group. The MAC layer may indicate or report, to its upper layer (or an RRC layer), that the beam failure is detected.
   ■ 2> If beam failure is detected with respect to the deactivated cell group (SCG) or cell (PSCell) or MAC layer;
      ◆ 3> the UE may report the beam failure to the BS (or MCG). For example, the UE may report the beam failure by including the beam failure in an SCG failure report message (SCGFailureInformation) and transmitting it to the BS.
   ■ 2> If a random access procedure problem due to the beam failure is detected;
      ◆ 3> the UE may report, to the BS, the random access procedure problem due to the beam failure.

The disclosure proposes a detailed procedure for a BFD procedure of the MAC layer of the UE which is performed when a BFD procedure is configured by an RRC message.
- 1> If an indication of beam failure occurrence is received from a lower layer;
   ■ 2> a timer for BFD (BeamFailureDetectionTimer) may be started or restarted. (The timer may be configured by an RRC message.)
   ■ 2> A value of a variable for counting the number of beam failures (BFI_COUNTER) may be increased by 1.
   ■ 2> If the variable for counting the number of beam failures is equal to or greater than a maximum number of beam failures (beamFailureInstanceMaxCount) (where, the maximum number of beam failures may be configured by an RRC message);
      ◆ 3> If a serving cell (where the beam failure occurs) is Scell;
         ● 4> a BFR procedure may be triggered or performed with respect to the cell.
      ◆ 3> Else if the serving cell (where the beam failure occurs) is PSCell or the cell group (or PSCell) is deactivated (or is not activated or is in an inactive state) (i.e., a following procedure is a procedure applicable only to the PSCell (the procedure is not applied to PCell));
         ● 4> occurrence of the beam failure with respect to the cell may be indicated to an upper layer (e.g., the RRC layer).
         ● 4> A TAT timer corresponding to (or associated with) the cell group or the PSCell or a Primary Timing Advance Group (PTAG) may be considered as expired. Alternatively, the TAT timer associated with the cell group or the PSCell or the PTAG may be stopped. This is because, if the beam failure with respect to the deactivated cell group or cell occurred, it may be determined that a TA value is no longer valid, such that there is no need to unnecessarily run the TAT timer. Alternatively, an RLM procedure may be suspended or a radio link failure may be declared. This is because, if the beam failure with respect to the deactivated cell group or cell occurred, it may be determined that a radio link is no longer valid.
      ◆ 3> Else (or else if) the serving cell (where the beam failure occurs) is SpCell (PCell or PSCell) or the cell group (or SpCell (PCell or PSCell)) is not deactivated (or is activated or is in an active state)(i.e., a following procedure may be applied to each of PCell and PSCell);
         ● 4> a random access procedure may start or may be performed on the SpCell.
- 1> If the timer for BFD is expired;
- 1> or the timer for BFD or a BFD count or a certain reference signal used for BFD connected to (or configured for) the cell (or the cell group) is reconfigured by an upper layer (an RRC layer) or if an RRC message including an indicator of deactivation of a cell group (or a state of the cell group is configured as an inactive state) is received or a previous state of the cell group is an active state or the UE has been in an RRC connected mode or an RRC message has configuration information indicating to perform an RLM procedure or a BFD procedure or the RRC message has the configuration information indicating to perform the RLM procedure or the BFD procedure, and it is not configured, in the configuration information associated with the RLM procedure or the BFD procedure, to continuously perform the RLM procedure or the BFD procedure on a current (or previous) active beam (TCI state) or a current (or previous) active BWP (or it is configured (or modified) from a previous beam or BWP to a new beam or new BWP);
   ■ 2> beam failure counter variables (BFI_COUNTER) may be initialized (or their values may be set to zero).

BFR proposed in the disclosure is as below.

In the disclosure, the first BFR procedure (e.g., Rel-15 BFR) may be available only for PCell or SpCell. That is, when the UE in a connected mode has a beam failure, the UE may perform a random access procedure. The random access procedure may be dependent on whether a preamble for BFR is configured in an RRC message. The preamble may be configured for each beam. If the preamble for BFR is configured, a search space for the BFR may also be configured. When the preamble for BFR is configured, CFRA may be performed. That is, when a failure occurs in beam #1, the UE may search for a beam, and when the UE determines that beam #3 is available for the beam, the UE may check whether the preamble for BFR is configured for beam #3, and if configured, the UE may perform CFRA based on the preamble. Then, the UE may wait for a response and monitor a PDCCH in a configured search space. When the UE performs the random access based on the preamble, the BS may identify occurrence of a beam failure and then may provide scheduling (DL assignment or UL grant) on PDCCH to the UE. Then, the UE continuously transmits or receives data on the beam, such that the beam may be recovered. (In the CFRA, the BS precisely identifies the beam failure, and thus, there is no need to transmit RAR for TA reconfiguration.)

If the preamble for BFR is not configured in an RRC message, CBRA may be performed. That is, when a failure occurs in beam #1, the UE may search for a beam, and when the UE determines that beam #3 is available for the beam, the UE may check whether the preamble for BFR is configured for beam #3, and if not configured, the UE may perform CBRA. Then, the UE may wait for a response and an RAR. Even when the BS does not recognize why the UE suddenly performed a random access, the BS may transmit the RAR and may complete a random access procedure. Then, the UE receives an indication on a PDCCH and performs data transmission or reception on the beam, such that the beam may be recovered.

The first BFR procedure (e.g., Rel-15 BFR) or BeamFailureRecoveryConfig for SpCell is configured on a UL BWP. This is because, when BFR is triggered, a BFR dedicated preamble may be configured.

The second BFR procedure (Rel-16 BFR) of the disclosure may be available not only for SpCell but also available for SCell. By an RRC message, a BFR-dedicated scheduling request (or transport resource of PUCCH) may be configured for each cell and each BWP. If a beam failure occurs with respect to a certain BWP of SCell, a BFR MAC CE may be generated. Also, if the beam failure occurs with respect to the BWP, and a dedicated SR is configured (PCell or PUCCH SR), the BFR MAC CE may be transmitted on SRdl PUCCH. Also, if beam failure reporting fails on a dedicated SR, a random access procedure of CBRA may be performed. When SR count exceeds, only CBRA may be performed in a same manner that a BSR is transmitted in a legacy manner. The random access procedure may be performed on PCell. Therefore, when the MAC CE is transmitted on the PCell with respect to SCell, if the UE detects which SCell fails and a valid feature among TCI sets (or TCI states) configured by RRC, an available beam for each SCell may be optionally reported. If the UE transmits the MAC CE including the available beam with respect to the SCell, when HARQ ACK with respect to a MAC PDU including the MAC CE is received, the UE and the BS use the available beam for the SCell. If the MAC CE does not include the available beam with respect to the SCell, the BS may allocate a beam by DCI of a PDCCH or TCI state MAC CE, as a response thereto.

Also, a BFR procedure for SpCell may be improved in the second BFR procedure (Rel-16 BFR).

For example, the second BFR procedure (Rel-16 BFR) may be possible for PCell or SpCell, as in Rel-15. That is, when a beam failure occurs, the UE performs a random access procedure. The random access procedure may vary according to whether a preamble for BFR is configured. The preamble may be configured for each beam. If the preamble for BFR is configured, a search space for the BFR may also be configured. When the preamble for BFR is configured, CFRA may be performed. That is, when a failure occurs in beam #1, the UE may search for a beam, and when the UE determines that beam #3 is available for the beam, the UE may check whether the preamble for BFR is configured for beam #3, and if configured, the UE may perform CFRA. Then, the UE may wait for a beam response and monitor a PDCCH in a configured search space. When the UE performs the random access based on the preamble, the BS may identify occurrence of a beam failure and then may provide scheduling (DL assignment or UL grant) on PDCCH to the UE. Then, the UE continuously transmits or receives data on the beam, such that the beam may be recovered. (In the CFRA, the BS precisely identifies the beam failure, and thus, there is no need to transmit RAR for TA reconfiguration.)

If the preamble for BFR is not configured, CBRA may be performed. That is, when a failure occurs in beam #1, the UE may search for a beam, and when the UE determines that beam #3 is available for the beam, the UE may check whether the preamble for BFR is configured for beam #3, and if not configured, the UE may perform CBRA. Then, the UE may wait for a response and an RAR. Even when the BS does not recognize why the UE suddenly performed a random access, the BS may transmit the RAR, and the UE may receive the RAR and then may generate and transmit a BFR MAC CE in Msg3. However, the MAC CE cannot include an available beam for SpCell. This is because, unlike SCell, PCell transmits the BFR MAC CE with respect to BFR occurred in the PCell. That is, when the beam failure occurs in the PCell, the UE searches for an available beam and transmits a preamble with respect to the available beam, and thus, even in a random access procedure, the BS and the UE may know the available beam for the PCell. That is, the available beam is already included. Therefore, when the random access procedure is completed, the UE performs data transmission or reception on beam #3, such that the beam may be recovered.

That is, when BFR is triggered with respect to Rel-16 SpCell, a random access is triggered regardless of an SR, and the BFR MAC CE may be configured (if a preamble for BFR is not configured) and transmitted. BeamFailureRecoverySCellConfig may be configured on a DL BWP in an RRC message for Rel-16 BFR or SCell. This is to configure a candidate RS inclusive in a BFR MAC CE when BFR is triggered. A dedicated SR for SCell BFR may be included in MAC-CellGroupConfig in an RRC message (configured in schedulingRequestConfig).

Also, the BS may configure, in the RRC message, Beam failure RS for the UE to detect a beam failure. If failure occurs for all RSs, the UE may detect the beam failure and may perform a random access procedure.

When the BS pre-configures a preamble for BFR, CFRA may be performed as the random access procedure, and the BS may identify, based on the preamble, whether the UE performed the random access procedure for beam recovery.

However, if the BS did not pre-configure the preamble for BFR, the UE may perform CBRA. Triggering of BSR so as to transmit UL data in a state where a SR is not configured and triggering of a random access procedure may not be distinguished to the BS. However, when the UE suddenly performed the random access procedure, the BS may determine it as one of two cases, and if there is BSR, the BS may receive BSR information, and if not, the BS may recognize it as BFR, and even when two cases are simultaneously triggered, the BS may read BSR, and may implicitly determine it based on a preamble. When the UE reads SSB, the UE may identify the number of beams, and in which period, in which time, and on which frequency each beam is to be transmitted. Then, the UE may measure beam intensity, and may perform a random access procedure with respect to a beam that exceeds a certain reference. The UE may perform a random access on a beam, in consideration of a time, a frequency resource or a period when the UE selected the beam.

In the disclosure, hereinafter, proposed are procedures to be performed by the UE when a state of a cell group is configured as an active state or an inactive state, or PSCell of the cell group is configured as an active state or an inactive state. The UE may receive an indication of an active state or an inactive state with respect to a cell group or cell (PSCell) by an RRC message (RRCReconfiguration or RRCResume) or MAC control information or PDCCH DCI. For example, when the inactive state is configured in the RRC message (RRCReconfiguration or RRCResume) or the MAC control information or the PDCCH DCI, the cell group (or SCG) or the cell (or PSCell) may be deactivated, and when the inactive state is not configured (or the active state is configured) in the RRC message (RRCReconfiguration or RRCResume) or the MAC control information or the PDCCH DCI, the cell group or the cell may be activated.

In the disclosure, when an indication of activation of the cell group or the cell is received (or an indication of deactivation is not received) or a previous state of the cell group is in an inactive state or the UE is in an RRC connected mode, the UE may perform operations below.
- If an indication indicating to activate the cell group (or SCG) or the cell (or PSCell) of the UE is received by DCI (L1 control signal) of PDCCH or MAC CE or an RRC message (or an indication of deactivation is not received) or a previous state of the cell group is in an inactive state or the UE is in an RRC connected mode, the UE may perform an operation or a plurality of operations among operations below.
   ■ The UE may activate the cell group or the cell.
   ■ The UE may switch to or activate a UL BWP or DL BWP (e.g., first active DL BWP or first active UL BWP) configured by the RRC message. Alternatively, by performing the random access procedure, the UE may switch to or activate a UL BWP or DL BWP (e.g., first active DL BWP or first active UL BWP) configured by the RRC message, when reconfigurationWithSync is configured or a beam failure is detected or a radio link failure is detected or a TAT timer is not running (or is expired) or the cell group or the cell is activated. Also, when the random access procedure is performed, the random access procedure may be performed on a BWP. However, if the random access procedure is not performed (or it is configured not to perform the random access procedure or a beam failure is not detected or a radio link failure is not detected or a TAT timer is running (or is not expired)), the UE may activate a BWP that was previously (or most-recently) activated.
   ■ The UE may transmit a Sounding Reference Signal (SRS) for the BS to perform channel measurement on a UL on the activated BWP. For example, the UE may periodically transmit the SRS.
   ■ The UE may perform PUCCH transmission if a PUCCH is configured for the activated BWP.
   ■ If there is configured type-1 transport resource for which usage is suspended, the UE may reset the stored type-1 transport resource to its initial setting and use it. The configured type-1 transport resource may be a periodic transport resource (UL or DL) that is pre-allocated by an RRC message and may indicate a transport resource that is usable by being activated by an RRC message.
   ■ The UE may trigger power headroom report (PHR) with respect to the BWP. The PHR may be triggered for an MCG or an SCG. Also, the PHR may be reported on the MCG or the SCG.
   ■ The UE may report a channel measurement result (Channel Status Information (CSI) or Channel Quality Indication (CQI) or Precoding Matrix Index (PMI) or Rank Indicator (RI) or Precoding Type indicator (PTI) or CSI-RS Resource Indicator (CRI) or the like) for a DL on the activated BWP, according to configuration by the BS.
   ■ The UE may monitor a PDCCH so as to read an indication from the BS on the activated BWP.
   ■ The UE may monitor a PDCCH so as to read cross scheduling with respect to the activated BWP.
   ■ The UE may start or restart a BWP inactivity timer. Alternatively, the UE may start or restart the BWP inactivity timer only when the BWP inactivity timer is not configured. The BWP inactivity timer may be configured by an RRC message, and when the timer is expired, the UE may switch the BWP to hibernation or a dormant BWP. For example, the UE may start or restart the BWP inactivity timer only on a dormant BWP.

In the disclosure, UE operations in response to reception of an indication of deactivation of a cell group or cell are as below.
- If an indication indicating to deactivate the cell group (or SCG) or the cell (or PSCell) of the UE is received by DCI (L1 control signal) of PDCCH or MAC CE or an RRC message or a previous state of the cell group (or the cell) is in an active state or the UE is in an RRC connected mode, the UE may perform an operation or a plurality of operations among operations below.
   ■ The UE may deactivate the cell group or the cell or an indicated UL or DL BWP.
   ■ A TAT timer associated with the cell (PSCell) or the cell group (e.g., a TA timer connected with (configured for) a PTAG or a Secondary Timing Advance Group (STAG)) may be continuously maintained without being stopped, such that the cell or the cell group may be rapidly activated without a random access procedure when the UE re-activates the cell or the cell group. If a TAT timer associated with a cell group in a deactivated cell or cell group is expired, the MAC layer may indicate, to its upper layer (e.g., the RRC layer), that the TAT timer is expired. Alternatively, if the TAT timer associated with the cell group in the deactivated cell or cell group is expired, the UE may suspend a BFD procedure or an RLM procedure (or, the UE may consider that a beam failure has occurred or a radio link is not valid). Alternatively, if the UE detects the beam failure, the UE may stop the TAT timer associated with the cell group (or considers that the timer is expired) or may suspend the RLM procedure. Alternatively, if the UE detects a radio link failure, the UE may stop the TAT timer associated with the cell group (or considers that the timer is expired) or may suspend the BFD procedure (or may consider that the beam failure has occurred).
   ■ The UE may stop a BWP inactivity timer (e.g., an inactivity timer for a DL BWP) that is configured for the cell or a BWP and is running.
   ■ The UE may clear a periodic DL transport resource (DL SPS or configured downlink assignment) or a periodic UL transport resource (DL SPS or configured uplink grant Type 2) which is configured for the cell or the BWP. The meaning of "clear" is that configuration information such as period information or the like configured by an RRC message is stored in the UE but information about a periodic transport resource indicated or activated by L1 signaling (e.g., DCI) is discarded and is no longer used. The periodic transport resource may indicate type 2 configured transport resource. Also, an operation of clearing the periodic transport resource may be performed only when Scell is switched from an active state to an inactive state. As the periodic transport resource was not present in the dormant state, an operation of clearing is not necessary when switching from a dormant state to the active state. Alternatively, periodic transport resources may be cleared only when a periodic DL transport resource or periodic UL transport resource is configured or is configured and used.
   ■ The UE may suspend the periodic UL transport resource (configured uplink grant Type 1 configured by RRC) configured for the cell or the BWP. The meaning of "suspend" is that the UE stores transport resource configuration information configured by an RRC message but no longer uses it. The periodic transport resource may indicate type 1 configured transport resource. Also, an operation of clearing the periodic transport resource may be performed only when Scell is switched from an active state to an inactive state. As the periodic transport resource was not present in the dormant state, an operation of clearing is not necessary when switching from a dormant state to the active state. Alternatively, periodic transport resources may be cleared only when a periodic DL transport resource or periodic UL transport resource is configured or is configured and used.
   ■ The UE may flush all HARQ buffers configured for the cell or the BWP.
   ■ If there is a PUSCH transport resource configured for periodic channel measurement reporting (semi-persistent CSI reporting) with respect to the cell or the BWP, the UE may clear the transport resource.
   ■ The UE may not transmit an SRS with respect to the cell or the BWP.
   ■ The UE does not perform nor report channel measurement (CSI or CQI or PMI or RI or PTI or CRI or the like) for a DL on the cell or the BWP.
   ■ The UE may not transmit UL data on UL-SCH on the cell or the BWP.
   ■ The UE may not perform a random access procedure on the cell or the BWP.
   ■ The UE may not monitor a PDCCH on the cell or the BWP.
   ■ The UE may not monitor a PDCCH with respect to the cell or the BWP. Even for cross-scheduling, the UE may not monitor a PDCCH with respect to a scheduled cell.
   ■ The UE may not perform PUCCH or SPUCCH transmission on the cell or the BWP.

The first PDCP suspend (or resume) procedure proposed in the disclosure may include one or more UE operations among procedures below. The proposed procedure may be applied to or configured for a bearer using an RLC UM mode or a bearer using an RLC AM mode, or the UE may perform the proposed procedure on the bearer using an RLC UM mode or the bearer using an RLC AM mode.
- A transmission PDCP layer of the UE may initialize a transmission window variable or may configure the transmission window variable as an initial value, or may discard stored data (e.g., PDCP PDU or PDCP SDU). Alternatively, in order to prevent data loss, the transmission PDCP layer of the UE may discard only the PDCP PDU. This is a procedure for preventing invalid data from being transmitted or retransmitted when an SCG is activated or resumed at a later time.
- When a reordering timer (t-reordering) (timer for arranging data in an ascending order based on PDCP sequence numbers or count values) is running, a reception PDCP layer of the UE may stop or initialize the reordering timer. Alternatively, the reception PDCP layer of the UE may perform a header decompression procedure on stored data (e.g., PDCP SDU), and may transmit the data to an upper layer in an ascending order of count values. The reception PDCP layer of the UE may initialize a reception window variable or may configure the reception window variable as an initial value.

The second PDCP suspend (or resume) procedure proposed in the disclosure may include one or more UE operations among procedures below. The proposed procedure may be applied to or configured for a bearer using an RLC UM mode or a bearer using an RLC AM mode, or the UE may perform the proposed procedure on the bearer using an RLC UM mode or the bearer using an RLC AM mode.
- A transmission PDCP layer of the UE may not initialize a transmission window variable nor configure the transmission window variable as an initial value but may changelessly maintain a variable value. The reason why the variable value (e.g., count value) is maintained is to solve a security issue problem occurring when different data are transmitted with the same security key (e.g., count value) when an SCG is activated or resumed. The transmission PDCP layer of the UE may discard stored data (e.g., PDCP PDU or PDCP SDU). Alternatively, in order to prevent data loss, the transmission PDCP layer of the UE may discard only the PDCP PDU. This is a procedure for preventing invalid data from being transmitted or retransmitted when the SCG is activated or resumed at a later time. Alternatively, the transmission PDCP layer of the UE may store values of transmission window variables and may initialize the window variables (e.g., set to zero). When a cell group is resumed or activated, if security configuration information is modified or a message indicating to resume or activate the cell group includes security configuration information or indicates modification of a security key, the transmission PDCP layer of the UE may use the initialized window variables. Alternatively, when the cell group is resumed or activated, if security configuration information is not modified or a message indicating to resume or activate the cell group does not include security configuration information or does not indicate modification of a security key, the transmission PDCP layer of the UE may retrieve the stored values of the transmission window variables or may set or reset or initialize and use the stored values of the transmission window variables as values of the transmission window variables.
- When a reordering timer (t-reordering) (timer for arranging data in an ascending order based on PDCP sequence numbers or count values) is running, a reception PDCP layer of the UE may stop or initialize the reordering timer. Alternatively, the reception PDCP layer of the UE may perform a header decompression procedure on stored data (e.g., PDCP SDU), and may transmit the data to a higher layer in an ascending order of count values. The reception PDCP layer of the UE may maintain a variable value without initializing a reception window variable or without configure the reception window variable as an initial value. The reason why the variable value (e.g., count value) is maintained is to solve a security issue problem occurring when different data are transmitted with the same security key (e.g., count value) when the SCG is activated or resumed. Alternatively, in order not to directly trigger the reordering timer even without a count value or a PDCP sequence number gap when the SCG is activated or resumed or data is received, the UE may configure or update an RX_NEXT window variable (variable indicating a count value of data expected to be received next) to a value of an RX_DELIV window variable (variable indicating a count value corresponding to next data of data transmitted to a higher layer) or to a count value of data first received by the UE. Alternatively, when a reordering timer value is configured in the message or when an indicator is received from an upper layer, the reception PDCP layer of the UE may configure or update an RX_REORD window variable (variable indicating a count value of next data of data triggering the reordering timer) to a variable value of an RX_NEXT window variable value, or may stop or restart the reordering timer. Alternatively, the reception PDCP layer of the UE may store values of reception window variables and may initialize the window variables (e.g., set to zero). When a cell group is resumed or activated, if security configuration information is modified or a message indicating to resume or activate the cell group includes security configuration information or indicates modification of a security key, the reception PDCP layer of the UE may use the initialized window variables. Alternatively, when the cell group is resumed or activated, if security configuration information is not modified or a message indicating to resume or activate the cell group does not include security configuration information or does not indicate modification of a security key, the reception PDCP layer of the UE may retrieve the stored values of the reception window variables or may set or reset or initialize and use the stored values of the reception window variables as values of the reception window variables.

When the UE receives configuration information or an indicator for releasing or deactivating or reconfiguring or suspending dual connectivity or a cell group (e.g., SCG) or a cell (e.g., by DCI of a PDCCH or MAC control information or an RRC message) and the UE performs the above UE operations, if data to be transmitted via a UL occurs or is generated, the UE may transmit a scheduling request (SR) or MAC control information (or indicator or the amount of buffer or a buffer state report) on a transport resource of the PUCCH configured by the RRC message to a master BS or a secondary BS to request a UL transport resource or to request to configure or add or activate or resume or modify or reconfigure dual connectivity or a cell group (e.g., SCG) or a cell. Alternatively, when the UE receives configuration information or an indicator for releasing or deactivating or reconfiguring or suspending dual connectivity or a cell group (e.g., SCG) or a cell (e.g., by DCI of a PDCCH or MAC control information or an RRC message) and the UE performs the above UE operations, if data to be transmitted via a UL occurs or is generated, the UE may generate an RRC message and may transmit the RRC message to a master BS or a secondary BS to request a UL transport resource or to request to configure or add or activate or resume or modify or reconfigure dual connectivity or a cell group (e.g., SCG) or a cell.

Procedures proposed in the disclosure may be extended to a multiple access technology. For example, configuration information of a plurality of cell groups may be configured for the UE by an RRC message, and one or more cell groups (or cells) from among the configured plurality of cell groups may be activated or resumed via an indicator of a PDCCH or MAC control information or an RRC message, or one or more cell groups may be suspended or deactivated.

In the disclosure, hereinafter, when an SCG or a PSCell of the SCG is deactivated or suspended due to a deactivation or suspend procedure of a cell group or a cell, which is proposed in the disclosure, UE operations of the UE to activate or resume the cell group or the cell, in response to generation or occurrence of UL data with respect to the SCG (or bearers that belong to the SCG), will now be described.

As proposed in the disclosure, when the SCG or the cell is deactivated or suspended, the UE cannot transmit or receive data, and thus, if UL data of the UE is generated with respect to the SCG (or bearers that belong to the SCG), it is required to activate or resume the SCG or the cell again. A procedure, by the UE, of requesting the BS (a master BS or a secondary BS) to activate or resume the cell group or the cell again will be performed by one method or a method extended from a combination or application of methods below.
- First method: The UE may configure a message (e.g., an RRC message) of requesting to activate or resume the SCG or the cell again and may transmit the message to the master BS. When receiving the message, the master BS may request the secondary BS for a resume procedure as the first signaling procedure of FIG. 11 proposed in the disclosure, may receive a response, and may configure and transmit, to the UE, a message (e.g., an RRC message) of indicating activation or resumption of the SCG again. Alternatively, as in the second signaling procedure of FIG. 12, the master BS may configure and transmit, to the UE, a message (e.g., an RRC message) of indicating activation or resumption of the SCG again, and then may indicate the secondary BS with activation or resumption. Alternatively, as in the third signaling procedure of FIG. 13, the UE may configure and transmit, to the secondary BS via SRB3, a message (e.g., an RRC message) of requesting to activate or resume the SCG or the cell again, and the secondary BS may configure and transmit, to the UE, a message (e.g., an RRC message) of indicating activation or resumption of the SCG again, and then may indicate the master BS with activation or resumption.
- Second method: The UE may configure a message (e.g., MAC control information) of requesting to activate or resume the SCG or the cell again and may transmit the message to the master BS. When receiving the message, the master BS may request the secondary BS for a resume procedure as the first signaling procedure of FIG. 11 proposed in the disclosure, may receive a response, and may configure and transmit, to the UE, a message (e.g., an RRC message or MAC control information) of indicating activation or resumption of the SCG again. Alternatively, as in the second signaling procedure of FIG. 12, the master BS may configure and transmit, to the UE, a message (e.g., an RRC message or MAC control information) of indicating activation or resumption of the SCG again, and then may indicate the secondary BS with activation or resumption. Alternatively, as in the third signaling procedure of FIG. 13, the UE may configure and transmit, to the secondary BS via SRB3, a message (e.g., MAC control information) of requesting to activate or resume the SCG or the cell again, and the secondary BS may configure and transmit, to the UE, a message (e.g., an RRC message or MAC control information) of indicating activation or resumption of the SCG again, and then may indicate the master BS with activation or resumption. When activation or resumption of the cell group is requested or indicated by MAC control information, the MAC control information may be newly defined and designed, or alternatively, a new field (or indicator) may be defined or a new value (or field value or identifier value) may be defined in legacy MAC control information to indicate the activation or resumption of the cell group.
- Third method: The UE may configure a message (e.g., a physical signal of a PHY layer) of requesting to activate or resume the SCG or the cell again and may transmit the message to the master BS. When receiving the message, the master BS may request the secondary BS for a resume procedure as the first signaling procedure of FIG. 11 proposed in the disclosure, may receive a response, and may configure and transmit, to the UE, a message (e.g., an RRC message or a physical signal of a PHY layer) of indicating activation or resumption of the SCG again. Alternatively, as in the second signaling procedure of FIG. 12, the master BS may configure and transmit, to the UE, a message (e.g., an RRC message or a physical signal of a PHY layer) of indicating activation or resumption of the SCG again, and then may indicate the secondary BS with activation or resumption. Alternatively, as in the third signaling procedure of FIG. 13, the UE may configure and transmit, to the secondary BS via SRB3, a message (e.g., a physical signal of a PHY layer) of requesting to activate or resume the SCG or the cell again, and the secondary BS may configure and transmit, to the UE, a message (e.g., an RRC message or a physical signal of a PHY layer) of indicating activation or resumption of the SCG again, and then may indicate the master BS with activation or resumption. When activation or resumption of the cell group is requested or indicated via a physical signal of a PHY layer, the physical signal of the PHY layer may be newly defined and designed as a new transport resource (e.g., a new SR transport resource (e.g., a PUCCH transport resource of a PCell or PSCell) or a new field of DCI of a PDCCH (a PDCCH transport resource transmitted from a PSCell or transmitted from a PCell) which is for the SCG), or alternatively, a new field (or indicator) may be defined or a new value (or field value or identifier value) may be defined in a legacy physical signal of a PHY layer (e.g., a SR transport resource (e.g., a PUCCH transport resource of a PCell or PSCell) or a field of DCI of a PDCCH (a PDCCH transport resource transmitted from a PSCell or transmitted from a PCell)) to indicate the activation or resumption of the cell group. Alternatively, when the UE performs PDCCH monitoring with respect to a PSCell of the SCG with a long period by applying second DRX configuration information or when the SCG of the UE is in an inactive state or a suspended state, if the PSCell triggers a random access procedure to the UE via DCI of PDCCH, the UE may interpret a received indication as activation or resumption of the SCG. A physical transport resource may indicate a transport resource for a random access, and when UL data for the SCG is generated while the SCG is suspended or inactive, the UE may perform a random access procedure. Alternatively, when UL data for the SCG is generated while the SCG is suspended or inactive, if an SR transport resource is configured (or a TA timer is running), the SR transport resource may be transmitted to the MCG or the SCG, and if the SR transport resource is not configured (or the TA timer is expired), the random access procedure may be performed. A CBRA procedure may be performed as the random access procedure. Alternatively, if dedicated random access configuration information (dedicated RACH config or dedicated preamble) is configured (or is included) in a message (or a pre-received message) indicating cell group suspension or deactivation, the UE may perform a CFRA procedure, or if dedicated random access configuration information (dedicated RACH config or dedicated preamble) is not configured (or is not included) in a message (or a pre-received message) indicating cell group deactivation or suspension, the UE may perform a CBRA procedure. During the random access procedure or upon completion of the random access procedure, an indicator (e.g., BSR (MAC control information (MAC CE))) indicating generation of the UL data may be included and indicated to the BS, and when the BS (e.g., SCG or MCG) receives the indicator or completes the random access procedure, the BS may transmit, to the UE, a message indicating resumption or activation of the SCG, so that the UE may resume or activate the SCG so as to perform again data transmission or reception.

As proposed in the disclosure, when the UE activates or resumes the cell group (e.g., the SCG) or the cell (e.g., a PSCell), in response to an indicator of a PDCCH or MAC control information or an RRC message, the UE may complete activation or resumption of the cell group or the cell at a first point of time. The first point of time may be configured by an RRC message, as proposed in the disclosure. For example, the RRC message may include time information (e.g., information (e.g., X) to indicate timing, a time unit, a subframe or a time slot or a symbol unit) to indicate when to activate or resume or deactivate or suspend dual connectivity or a cell group (or an SCG) or a cell (a PSCell or an SCG SCell). For example, in the above case, when the UE has received PDCCH or MAC control information or an RRC message to indicate to activate or resume or deactivate or suspend the cell group (e.g., the SCG) or the cell (e.g., the PSCell) at an nth time unit, time information to complete activation or resumption or deactivation or suspension of the cell group or the cell may be configured at an n+Xth time unit. Alternatively, the time information (e.g., X) may not be configured by a BS but may be used as a value that is preset and defined and thus fixed. As another example, when a random access is started (a preamble is transmitted) or a random access is successfully completed at an nth time unit after the PDCCH or the MAC control information or the RRC message to indicate to activate or resume or deactivate or suspend the cell group (e.g., the SCG) or the cell (e.g., the PSCell) is received, time information to complete activation or resumption or deactivation or suspension of the cell group or the cell may be configured at an n+Xth time unit. Alternatively, the time information (e.g., X) may not be configured by a BS but may be used as a value that is preset and defined and thus fixed. When activation or suspension or deactivation or resumption of the cell group or the cell is completed, the UE may perform UE operations according to a state (e.g., activation or hibernation or deactivation) of each cell or BWP, which is proposed in the disclosure. Also, when activation or resumption of the cell group or the cell is completed, a DRX operation of the UE may be started or restarted, or when deactivation or suspension of the cell group or the cell is completed, the DRX operation of the UE may be suspended or deactivated.

Also, as proposed above in the disclosure, when the UE activates a cell (e.g., PSCell or SCell) of a cell group (e.g., MCG or SCG), in response to an indication of MAC control information, activation of the cell may be completed at a second point of time. The second point of time may be configured by an RRC message, as proposed above in the disclosure. For example, the RRC message may include time information (e.g., information (e.g., X) to indicate timing, a time unit, a subframe or a time slot or a symbol unit) to indicate when to activate or deactivate carrier aggregation or dual connectivity or a cell group (or MCG or SCG) or a cell (an MCG SCell or an SCG SCell). For example, when the UE has received MAC control information to indicate to activate or deactivate a cell (e.g., SCell) at an nth time unit, time information to complete activation or deactivation of the cell may be configured at an n+Xth time unit. Alternatively, the time information (e.g., X) may not be configured by a BS but may be used as a value that is preset and defined and thus fixed. As another example, when a random access is started (a preamble is transmitted) or a random access is successfully completed at an nth time unit after the MAC control information to indicate to activate or deactivate the cell (e.g., the SCell or the PSCell) is received, time information to complete activation or deactivation of the cell may be configured at an n+Xth time unit. Alternatively, the time information (e.g., X) may not be configured by a BS but may be used as a value that is preset and defined and thus fixed. When activation or suspension or deactivation or resumption of the cell group or the cell is completed, the UE may perform UE operations according to a state (e.g., activation or hibernation or deactivation) of each cell or BWP, which is proposed in the disclosure. Also, when activation or resumption of the cell group or the cell is completed, a DRX operation of the UE may be started or restarted, or when deactivation or suspension of the cell group or the cell is completed, the DRX operation of the UE may be suspended or deactivated.

Also, as proposed above in the disclosure, when the UE activates a cell (e.g., PSCell or SCell) of a cell group (e.g., MCG or SCG), in response to an indication of an RRC message, activation of the cell may be completed at a third point of time. The third point of time may be configured by an RRC message, as proposed above in the disclosure. For example, the RRC message may include time information (e.g., information (e.g., X) to indicate timing, a time unit, a subframe or a time slot or a symbol unit) to indicate when to activate or deactivate carrier aggregation or dual connectivity or a cell group (or MCG or SCG) or a cell (an MCG SCell or an SCG SCell or a PSCell). For example, when the UE has received an RRC message to indicate to activate or deactivate a cell (e.g., SCell) at an nth time unit, time information to complete activation or deactivation of the cell may be configured at an n+Xth time unit.

Alternatively, the time information (e.g., X) may not be configured by a BS but may be used as a value that is preset and defined and thus fixed. As another example, when a random access is started (a preamble is transmitted) or a random access is successfully completed at an nth time unit after the RRC message to indicate to activate or deactivate the cell (e.g., the SCell or the PSCell) is received, time information to complete activation or deactivation of the cell may be configured at an n+Xth time unit. Alternatively, the time information (e.g., X) may not be configured by a BS but may be used as a value that is preset and defined and thus fixed. X may be configured or preset, based on a slot number, or may be configured or preset, based on a shortest slot length from among preset PCells or PSCells or SCells.

When activation or suspension or deactivation or resumption of the cell group or the cell is completed, the UE may perform UE operations according to a state (e.g., activation or hibernation or deactivation) of each cell or BWP, which is proposed in the disclosure. Also, when activation or resumption of the cell group or the cell is completed, a DRX operation of the UE may be started or restarted, or in the above case, when deactivation or suspension of the cell group or the cell is completed, the DRX operation of the UE may be suspended or deactivated.

A concept of a cell group which is proposed in the disclosure may be extended to a subcell group. For example, in the disclosure, in order to configure dual connectivity for a UE, a first cell group and a second cell group are configured and applied as an MCG and an SCG, such that the dual connectivity may be configured and thus the UE can perform data transmission or reception to or from two BSs. However, if the concept of the cell group is extended to a subcell group, a plurality of subcell groups of the cell group may be configured for a UE connected with one BS, or subcell group identifiers may be respectively configured for the subcell groups. Then, the UE performs data transmission or reception with respect to one BS, but, the UE may extend and apply an activation or suspension or resumption or deactivation procedure to different frequencies or cells for each of subcell groups, in response to PDCCH or MAC control information or an RRC message, which is proposed in the disclosure. For example, when the UE performs communication with one BS and a plurality of frequencies or cells, the BS may configure the UE with a plurality of subcell groups with respect to a plurality of frequencies or cells of the BS, which correspond to the cell group (MCG), so as to allow the UE to apply carrier aggregation, and may define fields to indicate activation or deactivation or suspension or resumption of each subcell group, the fields respectively indicating the subcell groups in PDCCH or MAC control information or an RRC message. Then, the UE may apply an activation or suspension or resumption or deactivation procedure to different frequencies or cells for each of the subcell groups, in response to PDCCH or MAC control information or an RRC message, which is proposed in the disclosure.

Alternatively, a proposed subcell group may be implemented by introducing DL or UL logical channel restriction with respect to each cell. For example, an RRC message may include configuration information to restrict logical channels, which belong to one cell group, to transmit or receive data only for a particular frequency or cell and may be transmitted to the UE. Logical channels (e.g., logical channel identifiers) may be configured by mapping them to each cell or frequency, and thus may be grouped to be regarded as a subcell group proposed above, and fields to respectively indicate the cells may be defined in PDCCH or MAC control information or an RRC message, such that the fields may indicate activation or deactivation or suspension or resumption of the respective cells.

Also, in the disclosure, when the UE for which dual connectivity is configured performs data transmission or reception to or from an MCG or an SCG or when the SCG is suspended or deactivated, if the MCG detects a radio link failure, the UE may report the radio link failure to the SCG or to the MCG via the SCG. For example, the UE may configure an RRC message for reporting the radio link failure and may report the radio link failure by transmitting the RRC message via split SRB1 or SRB3. In a case where split SRB1 is configured, the UE may report the radio link failure always via split SRB 1. Alternatively, when the UE for which dual connectivity is configured performs data transmission or reception to or from an MCG or an SCG or when the SCG is suspended or deactivated, if the MCG detects a radio link failure, the UE may declare the radio link failure and may perform an RRC connection re-establishment procedure.

Also, in the disclosure, when the UE for which dual connectivity is configured performs data transmission or reception to or from an MCG or an SCG or when the SCG is suspended or deactivated, if the SCG detects a radio link failure, the UE may report the radio link failure to the MCG or to the SCG via the MCG. For example, the UE may configure an RRC message for reporting the radio link failure and may report the radio link failure by transmitting the RRC message via SRB1 or split SRB1 or SRB3. In a case where SRB1 or split SRB 1 is configured, the UE may report the radio link failure always via split SRB 1.

In the disclosure, when dual connectivity is configured for the UE, releasing the SCG denotes that connection (data transmission or reception) to the SCG is released or configuration information of the SCG (or bearer configuration information or protocol layer configuration information (PHY or MAC or RLC or PDCP or SDAP layer)) is discarded or released. On the other hand, suspending or deactivating the SCG may mean that connection (data transmission or reception) to the SCG is released or suspended but configuration information of the SCG (or bearer configuration information or protocol layer configuration information (PHY or MAC or RLC or PDCP or SDAP layer)) is maintained or suspended or stored or connection to the SCG may be rapidly resumed or activated based on the stored configuration information of the SCG at a later time.

In the following, the disclosure proposes that the UE reports the frequency measurement result via SRB3 with priority to SRB3 when a frequency measurement procedure or frequency measurement report procedure is configured for the UE with the RRC message (e.g., RRCReconfiguration) of the disclosure, when dual connectivity technology is configured for the UE, or when the frequency measurement procedure or frequency measurement report procedure is configured for the cell group (or SCG), and proposes to report the frequency measurement result via SRB1 (or SRB of MCG) only when SRB3 is not configured. Alternatively, the disclosure proposes that the UE does not perform measurement reporting through SRB3 when the cell group (SCG) is deactivated. For example, in the proposed procedure, the UE reports the frequency measurement result through SRB3 if SRB3 is configured only when the cell group is not deactivated (or when SRB3 is not suspended or when transmission of the cell group (SCG) is not suspended), or the UE reports the frequency measurement result through SRB 1 (or SRB of MCG) when the cell group is deactivated. This is because if the cell group (SCG) is deactivated and the frequency measurement result is transmitted via SRB3, a problem occurs in which the cell group must be activated unnecessarily.

Specifically, the proposed procedure of the UE to solve the above problem is as follows.
- 1> If the frequency measurement procedure or frequency measurement report procedure is configured in the UE,
   ■ 2> if the UE is configured with (NG)EN-DC (or if the frequency measurement procedure or frequency measurement report procedure is configured for the cell group (or SCG)),
      ◆ 3> if SRB3 is configured in the UE and the state of the cell group (SCG) is not configured with a deactivated state (or if the cell group (SCG) is not deactivated or if SRB3 is not suspended or if transmission of the cell group (SCG) is not suspended),
         ● 4> the UE may deliver the frequency measurement result report message (MeasurementReport) to the lower layer device to transmit it through SRB3.
      ◆ 3> Else,
         ● 4> the UE may deliver the frequency measurement result report message to the lower layer device to transmit it through SRB1 (or SRB of MCG (E-UTRA)). The UE may transmit the frequency measurement result report message by including it in the ULInformationTransferMRDC message, which is an E-UTRA RRC message.
   ■ 2> If the UE is configured with NR-DC or if the frequency measurement procedure or frequency measurement report procedure is configured for the cell group (or SCG),
      ◆ 3> if SRB3 is configured in the UE and the state of the cell group (SCG) is not configured with a deactivated state (or if the cell group (SCG) is not deactivated or if SRB3 is not suspended or if transmission of the cell group (SCG) is not suspended),
         ● 4> the UE may deliver the frequency measurement result report message to the lower layer device to transmit it through SRB3.
      ◆ 3> Else,
         ● 4> the UE may deliver the frequency measurement result report message to the lower layer device to transmit it through SRB1 (or SRB of MCG (E-UTRA)). The UE may transmit the frequency measurement result report message by including it in the ULInformationTransferMRDC message, which is an NR RRC message.
   ■ 2> Else (If NR-DC or (NG)EN-DC (E-UTRA(MCG) and NR(SCG) Dual connectivity connected to 5G core (5GC)) is not configured),
      ◆ 3> the UE may deliver the frequency measurement result report message to the lower layer device to transmit it through SRB 1 (or SRB of MCG (E-UTRA)).

Hereinafter, the disclosure proposes that the UE reports the UE assistance information via SRB3 with priority to SRB3 when a UE assistance information report procedure is configured for the UE with the RRC message (e.g., RRCReconfiguration) of the disclosure, when dual connectivity technology is configured for the UE, or when the UE assistance information is configured for the cell group (or SCG or MCG), and proposes to report the UE assistance information via SRB 1 (or SRB of MCG) only when SRB3 is not configured. Alternatively, the disclosure proposes that the UE does not perform UE assistance information reporting through SRB3 when the cell group (SCG) is deactivated. For example, in the proposed procedure, the UE reports the UE assistance information through SRB3 if SRB3 is configured only when the cell group is not deactivated (or when SRB3 is not suspended or when transmission of the cell group (SCG) is not suspended), or the UE reports the UE assistance information through SRB 1 (or SRB of MCG) when the cell group is deactivated. This is because if the cell group (SCG) is deactivated and the UE assistance information is transmitted via SRB3, a problem occurs in which the cell group must be activated unnecessarily.

The UE assistance information may include the following information. If the following information is configured to be reported, or if the procedure for reporting the following information is initiated (or if the conditions configured by the RRC message are satisfied), the UE may perform the procedure for reporting the following UE assistance information, and the UE may organize a message (UEAssistanceInformation) reporting the following UE assistance information and transmit it to the BS via SRB1 or SRB3 according to the procedure proposed below in the disclosure.
- Delay budget information including desired increase or decrease for the connected mode DRX cycle length in the RRC connected mode
- Overheating assistance information of the UE
- In-device coexistence (IDC) assistance information
- Information on preference for DRX parameters for power saving
- Information on preference for the maximum aggregated bandwidth for power saving
- Information on preference for the maximum number of secondary component carriers for power saving
- Information on preference for the maximum number of multiple input multiple output (MIMO) layers for power saving
- Information on preference for the minimum scheduling offset for cross-slot scheduling for power saving
- Information on preference for RRC mode (RRC IDLE mode or RRC INACTIVE mode or RRC Connected mode) or RRC state (RRC IDLE state or RRC INACTIVE state or RRC Connected state)

The BS may configure for the UE to report one or more of the above UE assistance information and also configure conditions for reporting each UE assistance information or performing a report procedure. The UE may organize a UE assistance information message (UEAssistanceInformation) to report one or more of the above UE assistance information and transmit it via SRB1 or SRB3 according to the procedure proposed below.

Specifically, the proposed procedure of the UE to solve the above problem is as follows.
- 1> If the UE assistance information (UEAssistanceInformation) or UE assistance information report procedure is configured in the UE,
   ■ 2> if the UE is configured with (NG)EN-DC (or if the UE assistance information (UEAssistanceInformation) or report procedure is configured for the cell group (or SCG)),
      ◆ 3> if SRB3 is configured in the UE and the state of the cell group (SCG) is not configured with a deactivated state (or if the cell group (SCG) is not deactivated or if SRB3 is not suspended or if transmission of the cell group (SCG) is not suspended),
         ● 4> the UE may deliver the UE assistance information (UEAssistanceInformation) message to the lower layer device to transmit it through SRB3.
      ◆ 3> Else,
         ● 4> the UE may deliver the UE assistance information (UEAssistanceInformation) message to the lower layer device to transmit it through SRB1 (or SRB of MCG (E-UTRA)). The UE may transmit the UE assistance information (UEAssistanceInformation) message by including it in the ULInformationTransferMRDC message, which is an E-UTRA RRC message.
   ■ 2> If the UE is configured with NR-DC or if the UE assistance information (UEAssistanceInformation) or report procedure is configured for the cell group (or SCG),
      ◆ 3> if SRB3 is configured in the UE and the state of the cell group (SCG) is not configured with a deactivated state (or if the cell group (SCG) is not deactivated or if SRB3 is not suspended or if transmission of the cell group (SCG) is not suspended),
         ● 4> the UE may deliver the UE assistance information (UEAssistanceInformation) message to the lower layer device to transmit it through SRB3.
      ◆ 3> Else,
         ● 4> the UE may deliver the UE assistance information (UEAssistanceInformation) message to the lower layer device to transmit it through SRB1 (or SRB of MCG (E-UTRA)). The UE may transmit the UE assistance information (UEAssistanceInformation) message by including it in the ULInformationTransferMRDC message, which is an NR RRC message.
   ■ 2> Else (If NR-DC or (NG)EN-DC (E-UTRA(MCG) and NR(SCG) Dual connectivity connected to 5G core (5GC)) is not configured),
      ◆ 3> the UE may deliver the UE assistance information (UEAssistanceInformation) message to the lower layer device to transmit it through SRB1 (or SRB of MCG (E-UTRA)).

Hereinafter, in the case where dual connectivity technology is configured in the UE (NR-DC or (NG)EN-DC), if the SCG is deactivated (or configured to be deactivated), or activated but a failure of radio connection to the MCG occurs (or if radio link failure (RLF) is detected for the MCG), the disclosure proposes the first embodiment for effectively restoring the radio connection of the UE, as follows.
- 1> If the state of the cell group (SCG) is not configured with a deactivated state (or if the cell group (SCG) is not deactivated or if SRB3 is not suspended or if transmission of the cell group (SCG) is not suspended),
   ■ 2> start the first timer. The first timer is a timer to prevent the UE from continuing to wait for the procedure to recover the MCG radio connection failure, and when the first timer expires, the UE may perform the RRC connection re-establishment procedure.
   ■ 2> If SRB1 is configured with split SRB,
      ◆ 3> the UE may orgarnize a report message that the MCG radio connection has failed, and transmit the message (e.g., MCGFailureInformation) to the lower layer device through the SRB 1.
   ■ 2> Else (i.e., if SRB3 is configured),
      ◆ 3> the UE may orgarnize a report message that the MCG radio connection has failed, include the message (e.g., MCGFailureInformation) in the ULInformationTransferMRDC message, and transmit it to the lower layer device through the SRB3.
- 1> Else (if the state of the cell group (SCG) is a deactivated state (or if the cell group (SCG) is deactivated or if SRB3 is suspended or if transmission of the cell group (SCG) is suspended),
   ■ 2> the UE may perform the RRC connection re-establishment procedure. That is, in order to re-establish the RRC connection of the UE, an RRC connection re-establishment request message (RRCReestablishmentRequest) may be transmitted to the BS, or a response message (RRCReestablishmentComplete) of the request message may be received from the BS to re-establish the RRC connection.

Hereinafter, in the case where dual connectivity technology is configured in the UE (NR-DC or (NG)EN-DC), if the SCG is deactivated (or configured to be deactivated), or activated but a failure of radio connection to the MCG occurs (or if radio link failure (RLF) is detected for the MCG), the disclosure proposes the second embodiment for effectively restoring the radio connection of the UE, as follows.
- 1> If the state of the cell group (SCG) is not configured with a deactivated state (or if the cell group (SCG) is not deactivated or if SRB3 is not suspended or if transmission of the cell group (SCG) is not suspended),
   ■ 2> start the first timer. The first timer is a timer to prevent the UE from continuing to wait for the procedure to recover the MCG radio connection failure, and when the first timer expires, the UE may perform the RRC connection re-establishment procedure.
   ■ 2> If SRB1 is configured with split SRB,
      ◆ 3> the UE may orgarnize a report message that the MCG radio connection has failed, and transmit the message (e.g., MCGFailureInformation) to the lower layer device through the SRB 1.
   ■ 2> Else (i.e., if SRB3 is configured),
      ◆ 3> the UE may orgarnize a report message that the MCG radio connection has failed, include the message (MCGFailureInformation) in the ULInformationTransferMRDC message, and transmit it to the lower layer device through the SRB3.
- 1> Else (if the state of the cell group (SCG) is a deactivated state (or if the cell group (SCG) is deactivated or if SRB3 is suspended or if transmission of the cell group (SCG) is suspended),
   ■ 2> in order to perform the cell group activation request procedure, the UE may organize a request message to activate the cell group (SCG) and transmit the request message to the SRB1 or to the RLC layer device for the MCG of the SRB1 (or the UE may perform the random access procedure with the cell group (or SCG or PSCell) to activate the cell group). When the cell group is activated, the UE may orgaznie a report message that the MCG radio connection has failed, and transmit the message (e.g., MCGFailureInformation) to the lower layer device through the split SRB 1 (if configured) or through the SRB3 (if the split SRB1 is not configured and the SRB3 is configured).

Hereinafter, in the case where dual connectivity technology is configured in the UE (NR-DC or (NG)EN-DC), if the SCG is deactivated (or configured to be deactivated), or activated but a failure of radio connection to the MCG occurs (or if radio link failure (RLF) is detected for the MCG or if a beam failure (or a random access problem or an exceeded number of retransmissions from an RLC layer device) is detected for the MCG), the disclosure proposes the third embodiment for effectively restoring the radio connection of the UE, as follows.
- 1> Start the first timer. The first timer is a timer to prevent the UE from continuing to wait for the procedure to recover the MCG radio connection failure, and when the first timer expires, the UE may perform the RRC connection re-establishment procedure. Alternatively, the first timer may be started if the state of the cell group (SCG) is not configured with a deactivated state (or if the cell group (SCG) is not deactivated, or if SRB3 is not suspended, or if transmission of the cell group (SCG) is not suspended).
- 1> If SRB 1 is configured with split SRB, or if the state of the cell group (SCG) is not configured with a deactivated state (or if the cell group (SCG) is not deactivated, or if SRB3 is not suspended, or if transmission of the cell group (SCG) is not suspended),
   ■ 2> the UE may orgarnize a report message that the MCG radio connection has failed, and transmit the message (e.g., MCGFailureInformation) to the lower layer device through the SRB1.
- 1> If SRB1 is configured with split SRB, or if SRB3 is configured, or if the state of the cell group (SCG) is configured with a deactivated state (or if the cell group (SCG) is deactivated, or if SRB3 is suspended, or if transmission of the cell group (SCG) is suspended),
   ■ 2> in order to perform the cell group activation request procedure, the UE may organize a request message to activate the cell group (SCG) and transmit the request message to the SRB 1 or to the RLC layer device for the MCG of the SRB 1 (or the UE may perform the random access procedure with the cell group (or SCG or PSCell) to activate the cell group). When the cell group is activated, the UE may orgaznie a report message that the MCG radio connection has failed, and (i) when the split SRB1 is configured, transmit the message (e.g., MCGFailureInformation) to the lower layer device through the split SRB1, or (ii) when the split SRB 1 is not configured and SRB3 is configured, transmit the message (e.g., MCGFailureInformation) through the SRB3.
- 1> Else (i.e., if SRB3 is configured), or if the state of the cell group (SCG) is configured with a deactivated state (or if the cell group (SCG) is deactivated, or if SRB3 is suspended, or if transmission of the cell group (SCG) is suspended),
   ■ 2> in order to perform the cell group activation request procedure, the UE may organize a request message to activate the cell group (SCG) and transmit the request message to the SRB1 or to the RLC layer device for the MCG of the SRB1 (or the UE may perform the random access procedure with the cell group (or SCG or PSCell) to activate the cell group). When the cell group is activated, the UE may orgaznie a report message that the MCG radio connection has failed, and transmit the message (e.g., MCGFailureInformation) through SRB3 if the SRB3 is configured.
- 1> Else (i.e., if SRB3 is configured), or if the state of the cell group (SCG) is not configured with a deactivated state (or if the cell group (SCG) is not deactivated, or if SRB3 is not suspended, or if transmission of the cell group (SCG) is not suspended),
   ■ 2> the UE may orgaznie a report message that the MCG radio connection has failed, include the message (e.g., MCGFailureInformation) in the ULInformationTransferMRDC message, and transmit it to the lower layer device through the SRB3.

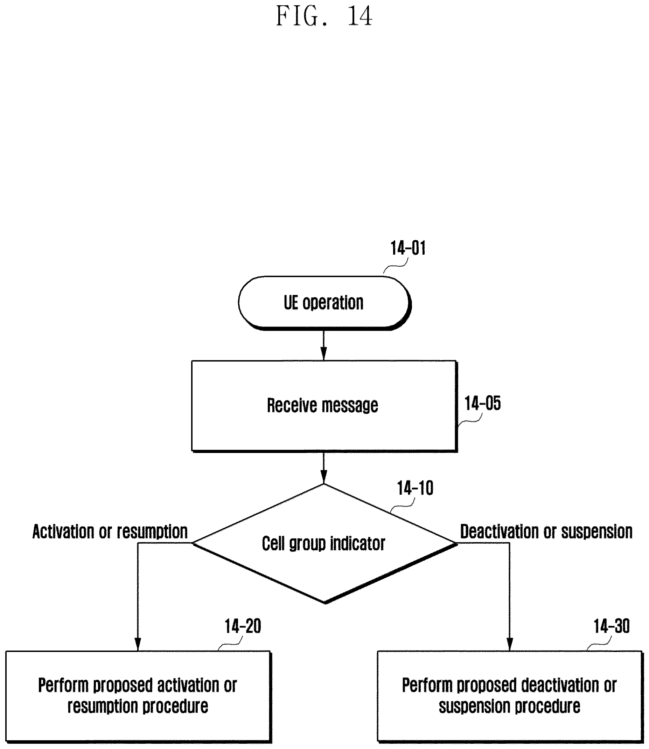

FIG. 14 is a diagram illustrating an operation of a UE according to an embodiment of the disclosure.

With reference to FIG. 14, a UE 14-01 may receive a message (e.g., DCI of a PDCCH or MAC control information or an RRC message) from a BS (14-05). When cell group configuration information or a cell group state or a cell group indicator is included in the message, the UE may determine whether a cell group is indicated to be configured or added or activated or resumed or whether the cell group is indicated to be released or deactivated or suspended in the message (14-10). If the cell group is indicated to be configured or added or activated or resumed in the message, a cell group configuration or addition or activation or resume procedure, which is proposed in the disclosure, may be performed (14-20), and if the cell group is indicated to be released or deactivated or suspended in the message, a cell group release or deactivation or suspend procedure, which is proposed in the disclosure, may be performed (14-30).

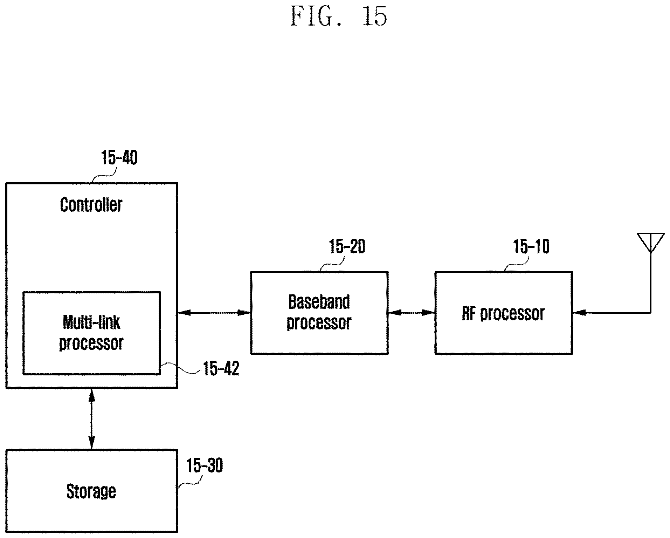

FIG. 15 illustrates an architecture of a UE according to an embodiment of the disclosure.

With reference to FIG. 15, the UE includes a RF processor 15-10, a baseband processor 15-20, a storage 15-30, and a controller 15-40.

The RF processor 15-10 performs functions of transmitting and receiving signals via radio channels, such as band conversion and amplification of the signals. That is, the RF processor 15-10 up-converts a baseband signal provided from the baseband processor 15-20, into an RF band signal and then transmits the RF band signal via an antenna, and down-converts an RF band signal received via the antenna, into a baseband signal. For example, the RF processor 15-10 may include a transmission filter, a reception filter, an amplifier, a mixer, an oscillator, a digital-to-analog convertor (DAC), an analog-to-digital convertor (ADC), or the like. Although only one antenna is illustrated in FIG. 15, the UE may include a plurality of antennas. Also, the RF processor 15-10 may include a plurality of RF chains. In addition, the RF processor 15-10 may perform beamforming. For beamforming, the RF processor 15-10 may respectively adjust phases and intensities of signals to be transmitted or received via a plurality of antennas or antenna elements. Also, the RF processor 15-10 may perform a MIMO operation and may receive a plurality of layers in the MIMO operation. In response to the control by the controller 15-40, the RF processor 15-10 may perform received beam sweeping by appropriately configuring a plurality of antennas or antenna elements, or may adjust a direction and a beam width of a received beam to coordinate with a transmit beam.

The baseband processor 15-20 converts between a baseband signal and a bitstream based on physical entity specifications of a system. For example, for data transmission, the baseband processor 15-20 generates complex symbols by encoding and modulating a transmission bitstream. For data reception, the baseband processor 15-20 reconstructs a received bitstream by demodulating and decoding a baseband signal provided from the RF processor 15-10. For example, according to an OFDM scheme, for data transmission, the baseband processor 15-20 generates complex symbols by encoding and modulating a transmit bitstream, maps the complex symbols to subcarriers, and then configures OFDM symbols by performing inverse fast Fourier transform (IFFT) and cyclic prefix (CP) insertion. For data reception, the baseband processor 15-20 segments a baseband signal provided from the RF processor 15-10, into OFDM symbol units, reconstructs signals mapped to subcarriers by performing fast Fourier transform (FFT), and then reconstructs a received bitstream by demodulating and decoding the signals.

The baseband processor 15-20 and the RF processor 15-10 transmit and receive signals as described above. Accordingly, the baseband processor 15-20 and the RF processor 15-10 may also be called a transmitter, a receiver, a transceiver, or a communicator. In addition, at least one of the baseband processor 15-20 or the RF processor 15-10 may include a plurality of communication modules to support a plurality of different radio access technologies. Also, at least one of the baseband processor 15-20 or the RF processor 15-10 may include different communication modules to process signals of different frequency bands. For example, the different radio access technologies may include an LTE network, an NR network, or the like. Also, the different frequency bands may include a super-high frequency (SHF) (e.g., 2.5 GHz, 5 GHz) band and a millimeter wave (mmWave) (e.g., 60 GHz) band.

The storage 15-30 stores basic programs, application programs, and data, e.g., configuration information, for operations of the UE. The storage 15-30 provides the stored data upon request by the controller 15-40.

The controller 15-40 controls overall operations of the UE. For example, the controller 15-40 transmits and receives signals through the baseband processor 15-20 and the RF processor 15-10. Also, the controller 15-40 records and reads data on or from the storage 15-30. To this end, the controller 15-40 may include at least one processor. For example, the controller 15-40 may include a communication processor (CP) for controlling communications and an application processor (AP) for controlling an upper layer such as an application program.

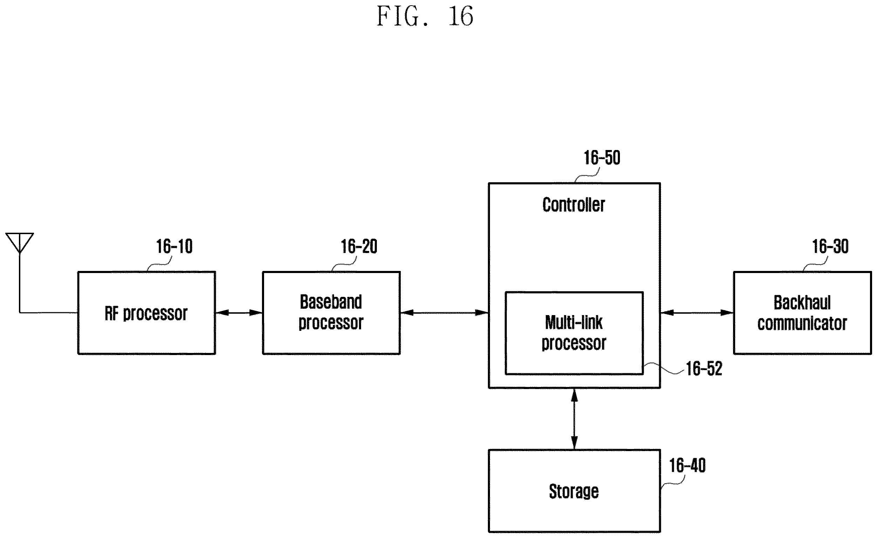

FIG. 16 is a block diagram of a BS in a wireless communication system according to an embodiment of the disclosure.

With reference to FIG. 16, the BS may include a RF processor 16-10, a baseband processor 16-20, a communicator 16-30, a storage 16-40, and a controller 16-50.

The RF processor 16-10 performs functions of transmitting and receiving signals via radio channels, e.g., band conversion and amplification of the signals. That is, the RF processor 16-10 up-converts a baseband signal provided from the baseband processor 16-20, into an RF band signal and then transmits the RF band signal via an antenna, and down-converts an RF band signal received via an antenna, into a baseband signal. For example, the RF processor 16-10 may include a transmission filter, a reception filter, an amplifier, a mixer, an oscillator, a DAC, an ADC, or the like. Although only one antenna is illustrated in FIG. 16, a first access node may include a plurality of antennas. Also, the RF processor 16-10 may include a plurality of RF chains. In addition, the RF processor 16-10 may perform beamforming. For beamforming, the RF processor 16-10 may respectively adjust phases and intensities of signals to be transmitted or received via a plurality of antennas or antenna elements. The RF processor 16-10 may perform a DL MIMO operation by transmitting one or more layers.

The baseband processor 16-20 converts between a baseband signal and a bitstream based on physical entity specifications of a radio access technology. For example, for data transmission, the baseband processor 16-20 generates complex symbols by encoding and modulating a transmission bitstream. Also, for data reception, the baseband processor 16-20 reconstructs a received bitstream by demodulating and decoding a baseband signal provided from the RF processor 16-10. For example, according to an OFDM scheme, for data transmission, the baseband processor 16-20 generates complex symbols by encoding and modulating a transmission bitstream, maps the complex symbols to subcarriers, and then configures OFDM symbols by performing IFFT and CP insertion. Also, for data reception, the baseband processor 16-20 segments a baseband signal provided from the RF processor 16-10, into OFDM symbol units, reconstructs signals mapped to subcarriers by performing FFT, and then reconstructs a received bitstream by demodulating and decoding the signals. The baseband processor 16-20 and the RF processor 16-10 transmits and receives signals as described above. Accordingly, the baseband processor 16-20 and the RF processor 16-10 may also be called a transmitter, a receiver, a transceiver, a communicator, or a wireless communicator.

The communicator 16-30 including a backhaul communicator provides an interface for communicating with other nodes in a network.

The storage 16-40 stores basic programs, application programs, and data, e.g., configuration information, for operations of a primary BS. In particular, the storage 16-40 may store, for example, information about bearers assigned for a connected UE and measurement results reported from the connected UE. Also, the storage 16-40 may store criteria information used to determine whether to provide or release dual connectivity to or from the UE. The storage 16-40 may provide the stored data upon request by the controller 16-50.

The controller 16-50 may control overall operations of the primary BS. For example, the controller 16-50 transmits and receives signals through the baseband processor 16-20 and the RF processor 16-10, or the communicator 16-30. Also, the controller 16-50 records and reads data on or from the storage 16-40. To this end, the controller 16-50 may include at least one processor.

## Claims

1. A method performed by a terminal in a wireless communication system, the method comprising:
receiving information for a measurement configuration;
identifying that the terminal is configured with evolved universal terrestrial radio access (E-UTRA) new radio (NR) dual connectivity ((NG)EN-DC) or NR-NR dual connectivity (NR-DC);
identifying that a signaling radio bearer 3 (SRB3) is configured;
identifying whether a secondary cell group (SCG) is deactivated; and
in case that the SRB3 is configured and the SCG is not deactivated, transmitting a measurement report message through the SRB3.

2. The method of claim 1, further comprising:
in case that the terminal is configured with the NR-DC, the SRB3 is configured, and the SCG is deactivated, transmitting the measurement report message based on an SRB 1.

3. The method of claim 1, further comprising:
transmitting terminal assistance information,
wherein in case that the SRB3 is configured and the SCG is not deactivated, the terminal assistance information is transmitted through the SRB3.

4. The method of claim 3, wherein in case that the terminal is configured with the NR-DC and the SRB3 is not configured, the terminal assistance information is transmitted through an NR radio resource control (NR RRC) message.

5. A method performed by a base station in a wireless communication system, the method comprising:
transmitting, to a terminal, information for configuring the terminal with evolved universal terrestrial radio access (E-UTRA) new radio (NR) dual connectivity ((NG)EN-DC) or NR-NR dual connectivity (NR-DC);
transmitting information for a measurement configuration to the terminal; and
receiving a measurement report message from the terminal based on the information for the measurement configuration,
wherein in case that a signaling radio bearer 3 (SRB3) is configured and a secondary cell group (SCG) is not deactivated, the measurement report message is received through the SRB3.

6. The method of claim 5, wherein in case that the terminal is configured with the NR-DC, the SRB3 is configured, and the SCG is deactivated, the measurement report message is received based on an SRB1.

7. The method of claim 5, further comprising:
receiving terminal assistance information from the terminal,
wherein in case that the SRB3 is configured and the SCG is not deactivated, the terminal assistance information is received through the SRB3.

8. The method of claim 7, wherein in case that the terminal is configured with the NR-DC and the SRB3 is not configured, the terminal assistance information is received through an NR radio resource control (NR RRC) message.

9. A terminal in a wireless communication system, the terminal comprising:
a transceiver; and
a controller functionally connected with the transceiver,
the controller configured to:
receive information for a measurement configuration through the transceiver,
identify that the terminal is configured with evolved universal terrestrial radio access (E-UTRA) new radio (NR) dual connectivity ((NG)EN-DC) or NR-NR dual connectivity (NR-DC),
identify that a signaling radio bearer 3 (SRB3) is configured,
identify whether a secondary cell group (SCG) is deactivated, and
in case that the SRB3 is configured and the SCG is not deactivated, transmit a measurement report message through the SRB3.

10. The terminal of claim 9, wherein in case that the terminal is configured with the NR-DC, the SRB3 is configured, and the SCG is deactivated, the controller is configured to transmit the measurement report message based on an SRB1.

11. The terminal of claim 9, wherein the controller is further configured to transmit terminal assistance information through the transceiver, and
wherein in case that the SRB3 is configured and the SCG is not deactivated, the terminal assistance information is transmitted through the SRB3.

12. The terminal of claim 11, wherein in case that the terminal is configured with the NR-DC and the SRB3 is not configured, the terminal assistance information is transmitted through an NR radio resource control (NR RRC) message.

13. A base station in a wireless communication system, the base station comprising:
a transceiver; and
a controller functionally connected with the transceiver,
the controller configured to:
transmit, to a terminal, information for configuring the terminal with evolved universal terrestrial radio access (E-UTRA) new radio (NR) dual connectivity ((NG)EN-DC) or NR-NR dual connectivity (NR-DC),
transmit information for a measurement configuration to the terminal, and
receive a measurement report message from the terminal based on the information for the measurement configuration,
wherein in case that a signaling radio bearer 3 (SRB3) is configured and a secondary cell group (SCG) is not deactivated, the measurement report message is received through the SRB3.

14. The base station of claim 13, wherein in case that the terminal is configured with the NR-DC, the SRB3 is configured, and the SCG is deactivated, the measurement report message is received based on an SRB 1.

15. The base station of claim 13, wherein the controller is further configured to receive terminal assistance information from the terminal,
wherein in case that the SRB3 is configured and the SCG is not deactivated, the terminal assistance information is received through the SRB3, and
wherein in case that the terminal is configured with the NR-DC and the SRB3 is not configured, the terminal assistance information is received through an NR radio resource control (NR RRC) message.
